# EUROPEAN PATENT APPLICATION

(11) **EP 4 823 027 A1**
(43) Date of publication of application: **14.10.2026**
(21) Application number: 24910390.4
(22) Date of filing: 15.11.2024
(51) Int. Cl.: H04L 5/00

(54) **SIGNAL TRANSMISSION METHOD AND COMMUNICATION APPARATUS**

(30) Priority: 28.12.2023 CN 202311837792
(71) Applicant: Huawei Technologies Co., Ltd., Shenzhen, Guangdong 518129 (CN)
(72) Inventor: GAO, Xiang, Shenzhen, Guangdong 518129 (CN); DONG, Changzhao, Shenzhen, Guangdong 518129 (CN); CAI, Shijie, Shenzhen, Guangdong 518129 (CN); HU, Chen, Shenzhen, Guangdong 518129 (CN); LIU, Kunpeng, Shenzhen, Guangdong 518129 (CN)
(74) Representative: Grünecker Patent- und Rechtsanwälte PartG mbB
(86) International application number: PCT/CN2024/132465
(87) International publication number: WO 2025/139455

(57) **Abstract**

This application provides a signal transmission method and a communication apparatus. The method may include: A receiving end device receives first indication information, where the first indication information indicates a first port, the first port is used to transmit a reference signal, the first port belongs to a port set, the port set includes P candidate ports, and P is an integer greater than 24; and the receiving end device receives the reference signal on the first port based on the first indication information. In this application, a quantity of candidate ports included in the port set is greater than 24. In this way, a requirement of transmitting a large quantity of data streams can be satisfied. That is, channels of more data streams can be obtained by using more reference signals, to satisfy the requirement of transmitting a large quantity of data streams.

## Description

This application claims priority to Chinese Patent Application No. 202311837792.3, filed with the China National Intellectual Property Administration on December 28, 2023, and entitled "SIGNAL TRANSMISSION METHOD AND COMMUNICATION APPARATUS", which is incorporated herein by reference in its entirety.

### TECHNICAL FIELD

This application relates to the field of wireless communication, and more specifically, to a signal transmission method and a communication apparatus.

### BACKGROUND

With a rapid increase in a quantity of network users or terminal devices, new high-traffic services such as high-definition video and virtual reality are emerging and becoming increasingly popular, and a high requirement and a challenge are imposed on a system capacity or a throughput. To cope with the challenge, a quantity of antennas at a transmitting end and a receiving end of a multiple-input and multiple-output (multiple input and multiple output, MIMO) system is also continuously increased, and signal processing technologies for channel measurement, precoding, and MIMO detection are also continuously enhanced, so that a quantity of data streams in the MIMO system also multiplies. For example, in a future-oriented ultra-large-scale antenna array, a quantity of antennas of a network device may reach 256 or even more, and a quantity of antennas of each terminal device may reach 8 or 16. A quantity of supported data streams may exceed 70, and a quantity of peak data streams may reach 100.

### SUMMARY

This application provides a signal transmission method and a communication apparatus, so that a requirement for transmitting a large quantity of data streams can be satisfied by increasing a quantity of reference signal (for example, DMRS) ports.

According to a first aspect, a signal transmission method is provided. The method may be performed by a communication apparatus. The communication apparatus may be a device (for example, referred to as a receiving end device such as a terminal device or a network device), or may be a component (for example, a chip, a chip system, or a circuit) of the device. This is not limited in this application.

The method may include: receiving first indication information, where the first indication information indicates a first port, the first port is used to transmit a reference signal, the first port belongs to a port set, a quantity of ports included in the port set is P, and P is an integer greater than 24; and receiving the reference signal based on the first indication information.

Optionally, P=48 or 96.

Optionally, the reference signal is a demodulation reference signal.

Based on the foregoing technical solution, considering a requirement for transmitting a large quantity of data streams, a quantity of ports of reference signals is increased. For example, a quantity of ports in the port set may be greater than 24, for example, may be 48, 96, or more. In this way, channels of more data streams can be obtained by using more reference signals, to satisfy the requirement for transmitting a large quantity of data streams.

With reference to the first aspect, in some implementations of the first aspect, the first port corresponds to a frequency division orthogonal cover code FD-OCC sequence of length L and/or a time division orthogonal cover code TD-OCC sequence of length T, where L is an integer greater than 8 or equal to 8, and T is an integer greater than 1 or equal to 1.

With reference to the first aspect, in some implementations of the first aspect, each port in the port set corresponds to an FD-OCC sequence of length L and/or a TD-OCC sequence of length T, where L is an integer greater than 8 or equal to 8, and T is an integer greater than 1 or equal to 1.

Based on the foregoing technical solution, a length of an FD-OCC sequence may be increased. For example, the length of the FD-OCC sequence is extended to 8, 16, or longer. In this way, under limited time-frequency resource overheads, code-division spreading enables multiplexing of two to four times or even more times of a quantity of reference signal ports on a same time-frequency resource, to satisfy a requirement for a larger quantity of reference signal ports.

With reference to the first aspect, in some implementations of the first aspect, the first port corresponds to L frequency domain units, and one element in the FD-OCC sequence corresponding to the first port corresponds to one of the L frequency domain units.

Optionally, at least two of the L frequency domain units are inconsecutive.

Optionally, in the L frequency domain units, at least two groups of adjacent frequency domain units have same frequency domain spacings. For example, the L frequency domain units include a first frequency domain unit, a second frequency domain unit, a third frequency domain unit, and a fourth frequency domain unit. The first frequency domain unit is adjacent to the second frequency domain unit, the third frequency domain unit is adjacent to the fourth frequency domain unit, and a spacing between the first frequency domain unit and the second frequency domain unit is the same as a spacing between the third frequency domain unit and the fourth frequency domain unit.

Optionally, in the L frequency domain units, at least two groups of adjacent frequency domain units have different frequency domain spacings. For example, the L frequency domain units include a first frequency domain unit, a second frequency domain unit, a third frequency domain unit, and a fourth frequency domain unit. The first frequency domain unit is adjacent to the second frequency domain unit, the third frequency domain unit is adjacent to the fourth frequency domain unit, and a spacing between the first frequency domain unit and the second frequency domain unit is different from a spacing between the third frequency domain unit and the fourth frequency domain unit.

Based on the foregoing technical solution, a longer FD-OCC length indicates higher sensitivity to frequency selective fading of a channel. Therefore, the FD-OCC may be mapped to inconsecutive frequency domain units (for example, inconsecutive subcarriers or inconsecutive subcarrier groups). In this way, continuous strong interference in an entire scheduling bandwidth can be avoided, and performance of a reference signal is not affected.

With reference to the first aspect, in some implementations of the first aspect, the first port corresponds to T time domain units, and one element in the TD-OCC sequence corresponding to the first port corresponds to one of the T time domain units. Optionally, at least two of the T time domain units are consecutive. For example, the T time domain units are T consecutive symbols.

With reference to the first aspect, in some implementations of the first aspect, the first port belongs to a first code division multiplexing CDM group, and the first CDM group includes L*T ports.

With reference to the first aspect, in some implementations of the first aspect, the FD-OCC sequence includes K FD-OCC subsequences, the L frequency domain units include K frequency domain unit groups, each of the K frequency domain unit groups corresponds to one of the K FD-OCC subsequences, and K is an integer equal to 1 or greater than 1.

For example, K=2, K=4, K=8, or K=16.

Based on the foregoing technical solution, a longer FD-OCC length indicates higher sensitivity to frequency selective fading of a channel. Therefore, frequency domain units mapped to the FD-OCC may be divided into K frequency domain unit groups (for example, K subcarrier groups). Each frequency domain unit group corresponds to an FD-OCC subsequence with a short length (for example, a length of 4), and despreading is performed between subsequences during channel estimation, to obtain better channel estimation performance. In addition, an FD-OCC sequence of length L (for example, the FD-OCC sequence corresponding to the first port) is divided into a plurality of FD-OCC subsequences, so that FD-OCC subsequences can be randomly used in different frequency domain unit groups (for example, different subcarrier groups) (for example, different FD-OCC subsequences are randomly used), and interference ports can be randomly changed in different frequency domain subbands, to avoid continuous strong interference in an entire frequency domain bandwidth, and achieve good interference randomization effect.

With reference to the first aspect, in some implementations of the first aspect, frequency domain units in each of the K frequency domain unit groups are consecutive in frequency domain, and at least two adjacent frequency domain unit groups in the K frequency domain unit groups are inconsecutive in frequency domain.

With reference to the first aspect, in some implementations of the first aspect, in each of the K frequency domain unit groups, at least two groups of adjacent frequency domain units have same or different spacings in frequency domain.

For example, the K frequency domain unit groups include a first frequency domain unit group, and the first frequency domain unit group includes a first frequency domain unit, a second frequency domain unit, a third frequency domain unit, and a fourth frequency domain unit. The first frequency domain unit is adjacent to the second frequency domain unit, the third frequency domain unit is adjacent to the fourth frequency domain unit, and a spacing between the first frequency domain unit and the second frequency domain unit is the same as or different from a spacing between the third frequency domain unit and the fourth frequency domain unit.

With reference to the first aspect, in some implementations of the first aspect, at least two of the K frequency domain unit groups have same spacings between adjacent frequency domain units in frequency domain.

For example, the K frequency domain unit groups include a first frequency domain unit group and a second frequency domain unit group, and a spacing between adjacent frequency domain units in the first frequency domain unit group is the same as a spacing between adjacent frequency domain units in the second frequency domain unit group.

With reference to the first aspect, in some implementations of the first aspect, L=8, 16, or 24; and/or T=1 or 2.

With reference to the first aspect, in some implementations of the first aspect, L=8, and the FD-OCC sequence of length 8 corresponding to the first port is any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 -1 -1], [+1 -1 +1 -1 -1 +1 -1 +1], [+1 +1 -1 -1 -1 -1 +1 +1], or [+1 -1 -1 +1 -1 +1 +1 -1].

With reference to the first aspect, in some implementations of the first aspect, L=8, and the FD-OCC sequence of length 8 corresponding to the first port is $\left[1 {e}^{\frac{j 2 πm}{8}} … {e}^{\frac{j 2 πm ⋅ 7}{8}}\right]$ or $\left[1 {e}^{- \frac{j 2 πm}{8}} … {e}^{- \frac{j 2 πm ⋅ 7}{8}}\right]$, where j represents an imaginary unit, and a value of m is any one of the following: 0, 1, 2, 3, 4, 5, 6, or 7.

With reference to the first aspect, in some implementations of the first aspect, L=8, and the FD-OCC sequence of length 8 corresponding to the first port is any one of the following: [+1 +1 +1 +1 +1 +1 +1 +1], [+1 -1 +1 -1 +1 -1 +1 -1], [+1 +1 -j -j -1 -1 +j +j], [+1 -1 -j +j -1 +1 +j -j], [+1 +1 -1 -1 +1 +1 -1 -1], [+1 -1 -1 +1 +1 -1 -1 +1], [+1 +1 +j +j -1 -1 -j -j], or [+1 -1 +j -j -1 +1 -j +j], where j represents an imaginary unit.

With reference to the first aspect, in some implementations of the first aspect, L=8, and the FD-OCC sequence of length 8 corresponding to the first port is any one of the following: [+1 +1 +1 +1 +1 +1 +1 +1], [+1 -j -1 +j +1 -j -1 +j], [+1 -1 +1 -1 +1 -1 +1 -1], [+1 +j -1 -j +1 +j - 1 -j], [+1 +1 +1 +1 -1 -1 -1 -1], [+1 -j -1 +j -1 +j +1 -j], [+1 -1 +1 -1 -1 +1 -1 +1], or [+1 +j -1 -j -1 -j +1 +j], where j represents an imaginary unit.

With reference to the first aspect, in some implementations of the first aspect, L=16, and the FD-OCC sequence of length 16 corresponding to the first port is any one of the following:

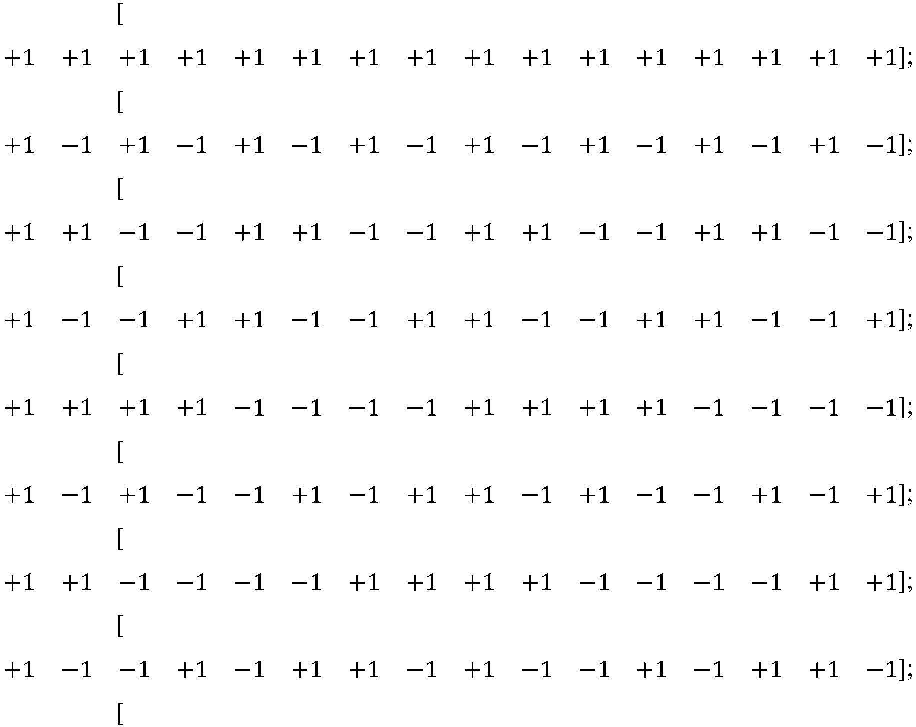

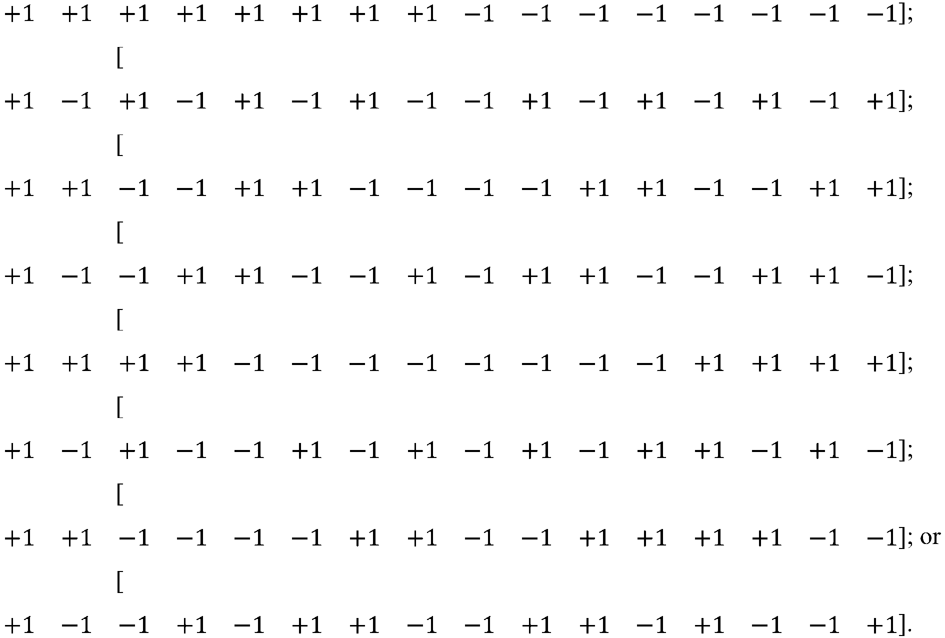

With reference to the first aspect, in some implementations of the first aspect, L=16, and the FD-OCC sequence of length 16 corresponding to the first port is $\left[1 {e}^{\frac{j 2 πm}{16}} … {e}^{\frac{j 2 πm ⋅ 15}{16}}\right]$ or $\left[1 {e}^{- \frac{j 2 πm}{16}} … {e}^{- \frac{j 2 πm ⋅ 15}{16}}\right]$, where j represents an imaginary unit, and a value of m is any one of the following: 0, 1, 2, 3, 4, 5, 6, 7, 8, 9, 10, 11, 12, 13, 14, or 15.

With reference to the first aspect, in some implementations of the first aspect, L=16, and the FD-OCC sequence of length 16 corresponding to the first port is any one of the following: 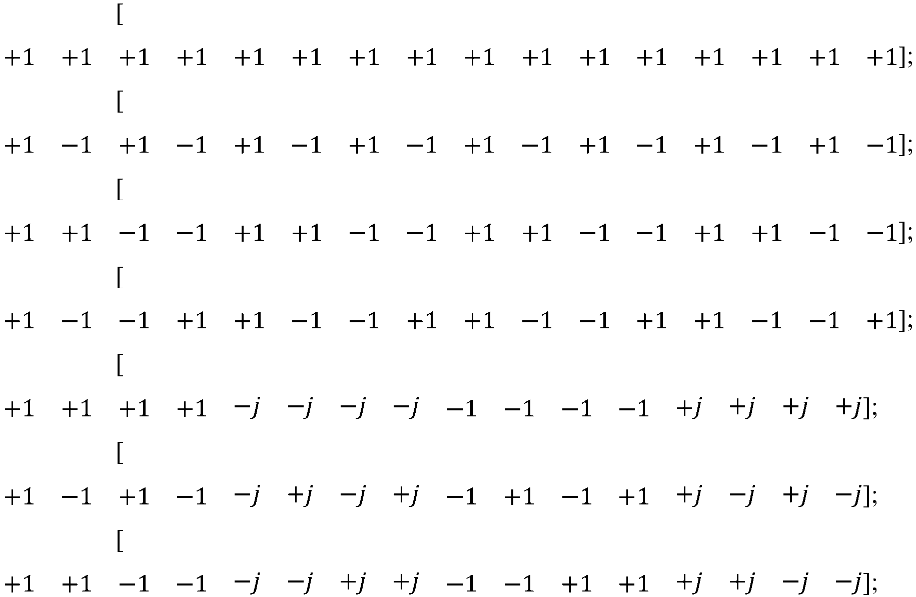 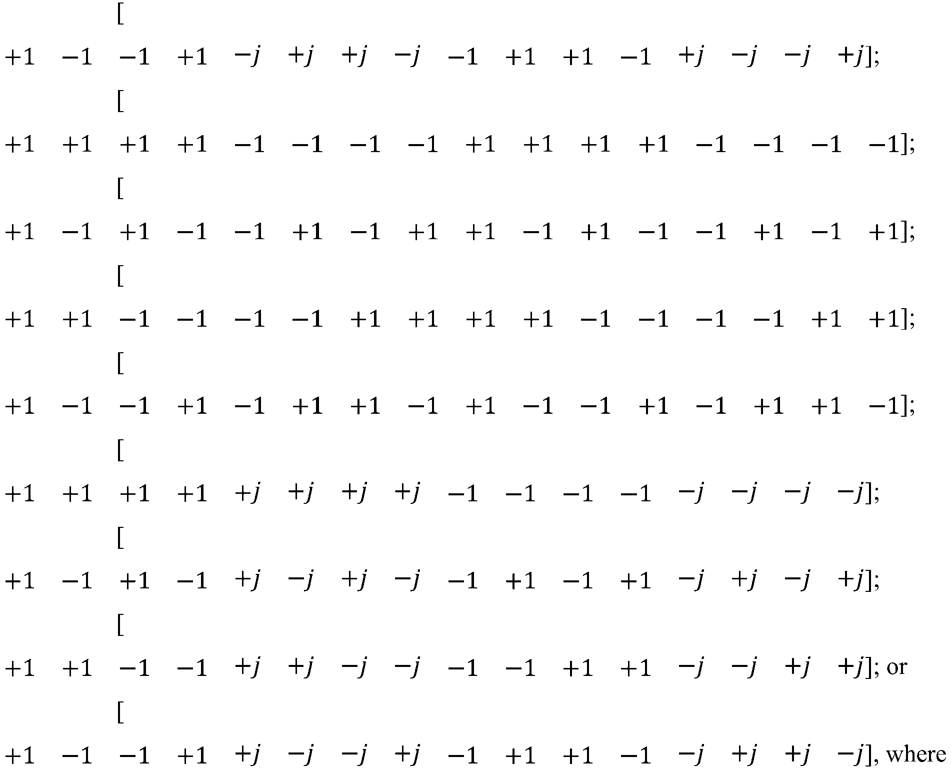 j represents an imaginary unit.

With reference to the first aspect, in some implementations of the first aspect, L=16, and the FD-OCC sequence of length 16 corresponding to the first port is any one of the following: 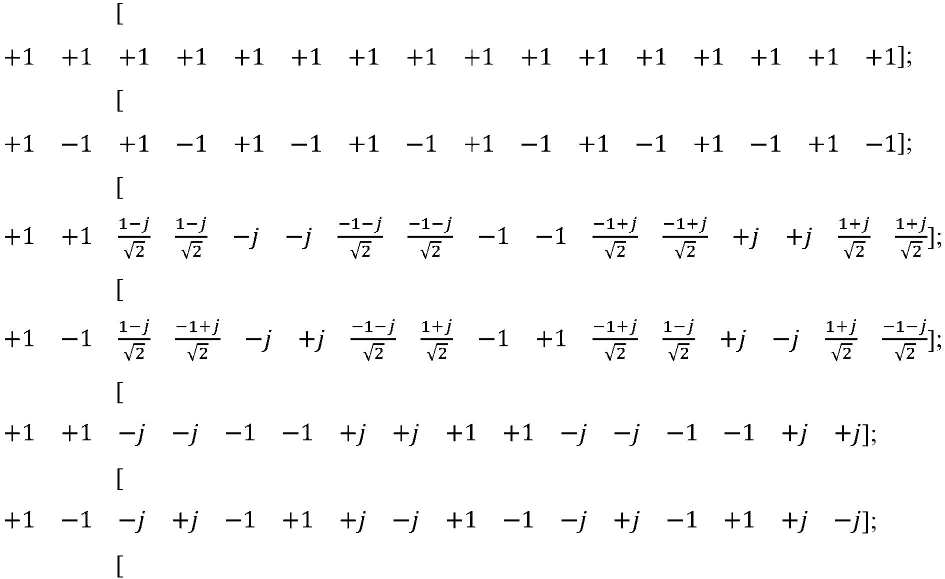 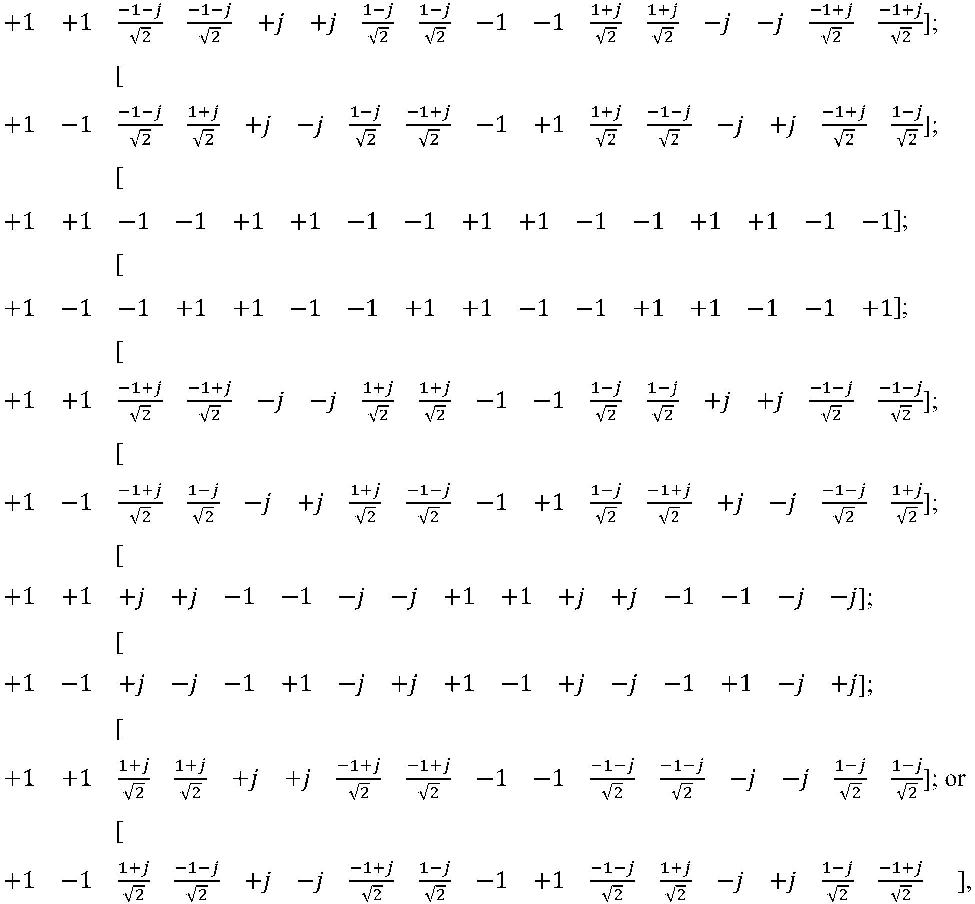 where
j represents an imaginary unit.

With reference to the first aspect, in some implementations of the first aspect, T=2, and the TD-OCC sequence of length 2 corresponding to the first port is any one of the following: [+1 +1] or [+1 -1].

With reference to the first aspect, in some implementations of the first aspect, the port set corresponds to W port groups, ports in a same port group of the W port groups correspond to a same time-frequency resource, ports in different port groups of the W port groups correspond to different time-frequency resources, and W is an integer greater than 1 or equal to 1.

For example, the port group may be replaced with a CDM group.

Optionally, each port group includes a same quantity of ports. For example, the quantity of ports included in each port group is P/W, the quantity of ports included in each port group is L*T, and P=L*T*W.

Based on the foregoing technical solution, ports in a same port group may be mapped to a same time-frequency resource, and may be distinguished by using FD-OCC sequences corresponding to the ports; and ports in different port groups may be mapped to different time-frequency resources.

With reference to the first aspect, in some implementations of the first aspect, the W port groups include a first port group, and subcarriers occupied by the first port group in two consecutive resource blocks include any one of the following:
subcarriers with indexes 0, 1, 2, 3, 12, 13, 14, and 15;
subcarriers with indexes 4, 5, 6, 7, 16, 17, 18, and 19; or
subcarriers with indexes 8, 9, 10, 11, 20, 21, 22, and 23.

Optionally, W=3, and L=8.

With reference to the first aspect, in some implementations of the first aspect, the W port groups include a first port group, and subcarriers occupied by the first port group in four consecutive resource blocks include any one of the following:
subcarriers with indexes 0, 1, 2, 3, 12, 13, 14, 15, 24, 25, 26, 27, 36, 37, 38, and 39;
subcarriers with indexes 4, 5, 6, 7, 16, 17, 18, 19, 28, 29, 30, 31, 40, 41, 42, and 43; or
subcarriers with indexes 8, 9, 10, 11, 20, 21, 22, 23, 32, 33, 34, 35, 44, 45, 46, and 47.

Optionally, W=3, and L=16.

With reference to the first aspect, in some implementations of the first aspect, the W port groups include at least one of the following:
a port 0 to a port 7;
a port 8 to a port 15;
a port 16 to a port 23;
a port 0 to a port 7, and a port 24 to a port 31;
a port 8 to a port 15, and a port 32 to a port 39;
a port 16 to a port 23, and a port 40 to a port 47;
a port 0 to a port 15;
a port 16 to a port 31;
a port 32 to a port 47;
a port 0 to a port 15, and a port 48 to a port 63;
a port 16 to a port 31, and a port 64 to a port 79; or
a port 32 to a port 47, and a port 80 to a port 95.

It may be understood that grouping of the port indexes may alternatively be another combination. This is not limited herein.

With reference to the first aspect, in some implementations of the first aspect, the reference signal is mapped to a time-frequency resource based on a mapping rule, and the mapping rule is related to at least one of the following parameters: a subcarrier spacing parameter, an index of a resource element, a symbol of the reference signal, an index of a start time domain position, a power scaling factor, a time domain cover code element, a frequency domain cover code element, a subcarrier offset factor, and an index of the first port.

Optionally, the index of the resource element includes an index of a time domain resource (for example, a symbol) and/or an index of a frequency domain resource (for example, a subcarrier).

With reference to the first aspect, in some implementations of the first aspect, the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(8n+k′\right)$ where $k = \left\{\begin{matrix}24 n + k ′ + Δ & k ′ = 0 , 1 , 2 , 3 \\ 24 n + k ′ + Δ + 8 & k ′ = 4 , 5 , 6 , 7\end{matrix}\right.$ $k ′ = 0 , 1 , 2 , 3 , 4 , 5 , 6 , 7$ $l = \overline{l} + l ′$ $n = 0 , 1 , …$ $j = 0 , 1 , … , v - 1$
v represents a quantity of spatial layers or a rank (for example, a quantity of spatial layers or a rank corresponding to the receiving end); a resource element RE with an index *(k,l)_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port *p* and that is mapped to the RE with an index *(k,l)_{p,µ}* ; Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}(k')* is a *k'* ^{th} element in an FD-OCC sequence; *wₜ(l')* is an *l*'^{th} element in a TD-OCC sequence; and *m = 2n + k' .*

With reference to the first aspect, in some implementations of the first aspect, the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(16n+k′\right)$ where $k = \left\{\begin{matrix}48 n + k ′ + Δ & k ′ = 0 , 1 , 2 , 3 \\ 48 n + k ′ + Δ + 8 & k ′ = 4 , 5 , 6 , 7 \\ 48 n + k ′ + Δ + 16 & k ′ = 8 , 9 , 10 , 11 \\ 48 n + k ′ + Δ + 24 & k ′ = 12 , 13 , 14 , 15\end{matrix}\right.$ $k ′ = 0 , 1 , 2 , 3 , 4 , 5 , 6 , 7 , 8 , 9 , 10 , 11 , 12 , 13 , 14 , 15$ $l = \overline{l} + l ′$ $n = 0 , 1 , …$ $j = 0 , 1 , … , v - 1$
v represents a quantity of spatial layers or a rank (for example, a quantity of spatial layers or a rank corresponding to a receiving end); a resource element RE with an index *(k,l)_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first *port p* and that is mapped to the RE with an index *(k,l)_{p,µ}* ; Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}(k')* is a *k'* ^{th} element in an FD-OCC sequence; *wₜ(l')* is an *l*'^{th} element in a TD-OCC sequence; and *m* = 2*n* + *k' .*

With reference to the first aspect, in some implementations of the first aspect, the K FD-OCC subsequences are determined based on a first parameter, the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

Optionally, that the K FD-OCC subsequences are determined based on the first parameter may also be understood as follows: An FD-OCC subsequence corresponding to each of the K frequency domain unit groups is determined based on the first parameter. In other words, a frequency domain resource corresponding to the reference signal (that is, the FD-OCC subsequence corresponding to each of the K frequency domain unit groups) is determined based on the first parameter. Further, optionally, the K FD-OCC subsequences belong to R FD-OCC subsequences (or referred to as R FD-OCC sequences). That is, the K FD-OCC subsequences are selected from the R FD-OCC subsequences based on the first parameter, where R is an integer greater than 0.

For example, one frequency domain unit group may include one or more subcarriers. That is, an FD-OCC subsequence corresponding to one subcarrier group is determined based on the first parameter.

In another example, a subcarrier group including L subcarriers (that is, an example of a frequency domain unit group) is divided into at least one subband, an i^{th} subband in the at least one subband corresponds to an i^{th} FD-OCC subsequence, and an FD-OCC subsequence corresponding to each subband is determined based on the first parameter.

In another example, a subcarrier group including L' subcarriers (that is, an example of a frequency domain unit group) is divided into at least one subband, an i^{th} subband in the at least one subband corresponds to an i^{th} FD-OCC subsequence, and an FD-OCC subsequence corresponding to each subband is determined based on the first parameter. The L' subcarriers may include a plurality of groups of L subcarriers.

Optionally, in each subband (or each resource block), the K FD-OCC subsequences are determined based on the first parameter.

Based on the foregoing technical solution, a longer FD-OCC length indicates higher sensitivity to frequency selective fading of a channel. Therefore, a frequency domain resource to which a reference signal is mapped may be divided into a plurality of subbands (or may be referred to as frequency domain subbands). In each subband, an FD-OCC sequence or an FD-OCC subsequence may be randomly used in different subbands by using the first parameter (for example, an initial factor), and interference intensity caused by an interference port may be randomly changed in different subbands, to avoid continuous strong interference in an entire frequency domain bandwidth, and achieve good interference randomization effect. In an implementation, an FD-OCC sequence (for example, the FD-OCC sequence corresponding to the first port) of length L may be divided into a plurality of FD-OCC subsequences. Correspondingly, each FD-OCC subsequence may be interfered by only a limited quantity of reference signal ports. The first parameter (for example, an initial factor) is used, so that FD-OCC subsequences can be randomly used in different frequency domain unit groups (for example, different subcarrier groups) (for example, different FD-OCC subsequences are randomly used), and interference ports can be randomly changed in different frequency domain subbands, to avoid continuous strong interference in an entire frequency domain bandwidth, and achieve good interference randomization effect. For example, each FD-OCC subsequence is associated with one port index, and an offset is randomly generated in different frequency domain unit groups, to correspondingly randomly change a used FD-OCC subsequence.

With reference to the first aspect, in some implementations of the first aspect, the K FD-OCC subsequences include a first FD-OCC subsequence, the first FD-OCC subsequence is determined based on a port index associated with the first FD-OCC subsequence, the port index associated with the first FD-OCC subsequence is determined based on a first parameter, and the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

Optionally, the port index associated with the first FD-OCC subsequence is determined based on the offset and the index of the reference port. For example, Port index associated with the first FD-OCC subsequence=Offset+Index of the reference port.

Based on the foregoing technical solution, each port index is associated with one FD-OCC subsequence, and the port index may be determined based on the index of the reference port and the offset, so that the FD-OCC subsequence associated with the port index can be determined based on the determined port index. Based on this, an offset may be introduced, so that the FD-OCC subsequence can hop (or a port can hop) between different frequency domain unit groups or subbands (or referred to as frequency domain subbands) formed by a plurality of frequency domain unit groups.

With reference to the first aspect, in some implementations of the first aspect, that the port index associated with the first FD-OCC subsequence is determined based on the offset and the index of the reference port includes: The port index associated with the first FD-OCC subsequence is determined based on the offset, the index of the reference port, and a total quantity of ports and/or a quantity of port groups. The total quantity of ports may represent a total quantity of candidate or optional ports, and the quantity of port groups represents a quantity of port groups corresponding to the total quantity of candidate or optional ports.

With reference to the first aspect, in some implementations of the first aspect, the port index associated with the first FD-OCC subsequence satisfies: ${p}_{j} \left(n, k\right) = \left⌊\frac{{p}_{j , 0}}{Y / Z}\right⌋ ⋅ \frac{Y}{Z} + mod \left({p}_{j , 0}+{p}_{offset}\left(n, k\right),Y/Z\right)$
*pⱼ(n, k)* represents the port index associated with the first FD-OCC subsequence, *p_{j,0}* represents the index of the reference port, j represents a spatial layer index or represents a j^{th} port corresponding to the receiving end device (for example, a terminal device), for example, *j* = 0,1,...,*v*-1, and v represents a quantity of spatial layers corresponding to the terminal device, or represents a rank corresponding to the terminal device; *p*_{offset}(*n*, *k*) represents the offset, and the first FD-OCC subsequence is correspondingly mapped to a k^{th} frequency domain unit group in an n^{th} frequency domain unit; Y represents a total quantity of ports; and Z represents a quantity Z of port groups into which the ports of the total quantity are divided. For example, each port group includes Y/Z ports. For example, a value of Y is equal to L, and L is a length of an FD-OCC sequence. For example, a value of Z is K, and K represents a quantity of groups (that is, an FD-OCC sequence of length L is divided into K FD-OCC subsequences).

With reference to the first aspect, in some implementations of the first aspect, the offset is related to at least one of the following parameters: the initial factor, a pseudo-random sequence, and the index of the frequency domain unit corresponding to the reference signal. For example, the initial factor is related to an initial value of the pseudo-random sequence.

With reference to the first aspect, in some implementations of the first aspect, the offset satisfies any one of the following: ${p}_{offset} \left(n, k\right) = \left({\sum }_{m = 0}^{T - 1} \left(c\left(T\left({nN}_{sc}^{RBG}+k\right)+m\right){2}^{m}\right)\right) modY / Z ;$ or ${p}_{offset} \left(n, k\right) = \left({\sum }_{m = 0}^{T - 1} \left(c\left(T\left({nN}_{sc}^{RBG}+k\right)+m\right){2}^{m}\right)\right) ,$ where
*p*_{offset}(*n*, *k*) represents the offset; c() represents the pseudo-random sequence, and the initial factor is related to the pseudo-random sequence (for example, the initial factor is related to the initial value of the pseudo-random sequence); T is a positive integer; ${N}_{s c}^{RBG}$ represents a quantity of subcarriers included in a frequency domain unit; n represents the index of the frequency domain unit corresponding to the reference signal; k represents an index of a frequency domain unit group in the frequency domain unit corresponding to the reference signal; Y represents a total quantity of ports (for example, a total quantity of candidate or optional ports); and Z represents a quantity Z of port groups into which the ports of the total quantity are divided, and each port group includes Y/Z ports. For example, a value of Y is equal to L, and L is a length of an FD-OCC sequence. For example, a value of Z is K, and K represents a quantity of groups (that is, an FD-OCC sequence of length L is divided into K FD-OCC subsequences).

With reference to the first aspect, in some implementations of the first aspect, the method further includes: receiving second indication information, where the second indication information indicates the first parameter.

With reference to the first aspect, in some implementations of the first aspect, each of the K FD-OCC subsequences is determined based on a port index associated with each subsequence, and port indexes associated with the FD-OCC subsequences corresponding to all of the K frequency domain unit groups are the same or different.

With reference to the first aspect, in some implementations of the first aspect, the first port belongs to a second port group, the second port group occupies S time domain units in time domain, and quantities of frequency domain resources and/or frequency domain positions occupied by the second port group are different in at least two of the S time domain units, where S is an integer greater than 1. Alternatively, the first port belongs to a CDM group, the CDM group occupies S time domain units in time domain, and quantities of frequency domain resources and/or frequency domain positions occupied by the CDM group are different in at least two of the S time domain units, where S is an integer greater than 1.

Optionally, a value of S is 2, 4, or 6.

Optionally, quantities of frequency domain resources occupied by ports in different port groups (or different CDM groups) in a same time domain unit are the same or different.

Based on the foregoing technical solution, different quantities of time domain units (for example, quantities of symbols) or different quantities of frequency domain resources may be flexibly configured for different port groups, so that frequency domain density and overheads of a reference signal can be flexibly configured. In addition, differentiated reference signal density is configured, so that differentiated channel conditions of different terminal devices can be adapted, and reference signal overheads are reduced when channel estimation quality is ensured.

With reference to the first aspect, in some implementations of the first aspect, the S time domain units include a first time domain unit and a second time domain unit, and an interval between start frequency domain positions corresponding to the second port group in the first time domain unit and the second time domain unit is any one of the following: X/2, X/4, or 3X/4, where X is a quantity of subcarriers included in one frequency domain unit. For example, one frequency domain unit may be two resource blocks (resource block, RB), four RBs, or one resource block group (resource block group, RBG).

With reference to the first aspect, in some implementations of the first aspect, the method further includes: receiving third indication information, where the third indication information indicates a time domain resource occupied by the first port.

According to a second aspect, a signal transmission method is provided. The method may be performed by a communication apparatus. The communication apparatus may be a device (for example, referred to as a transmitting end device such as a terminal device or a network device), or may be a component (for example, a chip, a chip system, or a circuit) of the device. This is not limited in this application.

The method may include: sending first indication information, where the first indication information indicates a first port, the first port is used to transmit a reference signal, the first port belongs to a port set, a quantity of ports included in the port set is P, and P is an integer greater than 24; and sending the reference signal.

With reference to the second aspect, in some implementations of the second aspect, the first port corresponds to a frequency division orthogonal cover code FD-OCC sequence of length L and/or a time division orthogonal cover code TD-OCC sequence of length T, where L is an integer greater than 8 or equal to 8, and T is an integer greater than 1 or equal to 1.

With reference to the second aspect, in some implementations of the second aspect, each port in the port set corresponds to an FD-OCC sequence of length L and/or a TD-OCC sequence of length T, where L is an integer greater than 8 or equal to 8, and T is an integer greater than 1 or equal to 1.

With reference to the second aspect, in some implementations of the second aspect, the first port corresponds to L frequency domain units, one element in the FD-OCC sequence corresponding to the first port corresponds to one of the L frequency domain units, and at least two of the L frequency domain units are inconsecutive.

With reference to the second aspect, in some implementations of the second aspect, the first port belongs to a first code division multiplexing CDM group, and the first CDM group includes L*T ports.

With reference to the second aspect, in some implementations of the second aspect, the FD-OCC sequence includes K FD-OCC subsequences, the L frequency domain units include K frequency domain unit groups, each of the K frequency domain unit groups corresponds to one of the K FD-OCC subsequences, and K is an integer equal to 1 or greater than 1.

With reference to the second aspect, in some implementations of the second aspect, frequency domain units in each of the K frequency domain unit groups are consecutive in frequency domain, and at least two adjacent frequency domain unit groups in the K frequency domain unit groups are inconsecutive in frequency domain.

With reference to the second aspect, in some implementations of the second aspect, L=8, 16, or 24; and/or T=1 or 2.

With reference to the second aspect, in some implementations of the second aspect, L=8, and the FD-OCC sequence of length 8 corresponding to the first port is any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 -1 -1], [+1 -1 +1 -1 -1 +1 -1 +1], [+1 +1 -1 -1 -1 -1 +1 +1], or [+1 -1 -1 +1 -1 +1 +1 -1].

With reference to the second aspect, in some implementations of the second aspect, L=8, and the FD-OCC sequence of length 8 corresponding to the first port is $\left[1 {e}^{\frac{j 2 πm}{8}} … {e}^{\frac{j 2 πm ⋅ 7}{8}}\right]$ or $\left[1 {e}^{- \frac{j 2 πm}{8}} … {e}^{- \frac{j 2 πm ⋅ 7}{8}}\right]$, where j represents an imaginary unit, and a value of m is any one of the following: 0, 1, 2, 3, 4, 5, 6, or 7.

With reference to the second aspect, in some implementations of the second aspect, L=8, and the FD-OCC sequence of length 8 corresponding to the first port is any one of the following: [+1 +1 +1 +1 +1 +1 +1 +1], [+1 -1 +1 -1 +1 -1 +1 -1], [+1 +1 -j -j -1 -1 +j +j], [+1 -1 -j +j -1 +1 +j -j], [+1 +1 -1 -1 +1 +1 -1 -1], [+1 -1 -1 +1 +1 -1 -1 +1], [+1 +1 +j +j -1 -1 - j -j], or [+1 -1 +j -j -1 +1 -j +j], where j represents an imaginary unit.

With reference to the second aspect, in some implementations of the second aspect, L=8, and the FD-OCC sequence of length 8 corresponding to the first port is any one of the following: [+1 +1 +1 +1 +1 +1 +1 +1], [+1 -j -1 j +1 -j -1 +j], [+1 -1 +1 -1 +1 -1 +1 -1], [+1 +j -1 -j +1 +j -1 -j], [+1 +1 +1 +1 -1 -1 -1 -1], [+1 -j -1 +j -1 +j +1 -j], [+1 -1 +1 -1 -1 +1 -1 +1], or [+1 +j -1 -j -1 -j +1 +j], where j represents an imaginary unit.

With reference to the second aspect, in some implementations of the second aspect, L=16, and the FD-OCC sequence of length 16 corresponding to the first port is any one of the following:

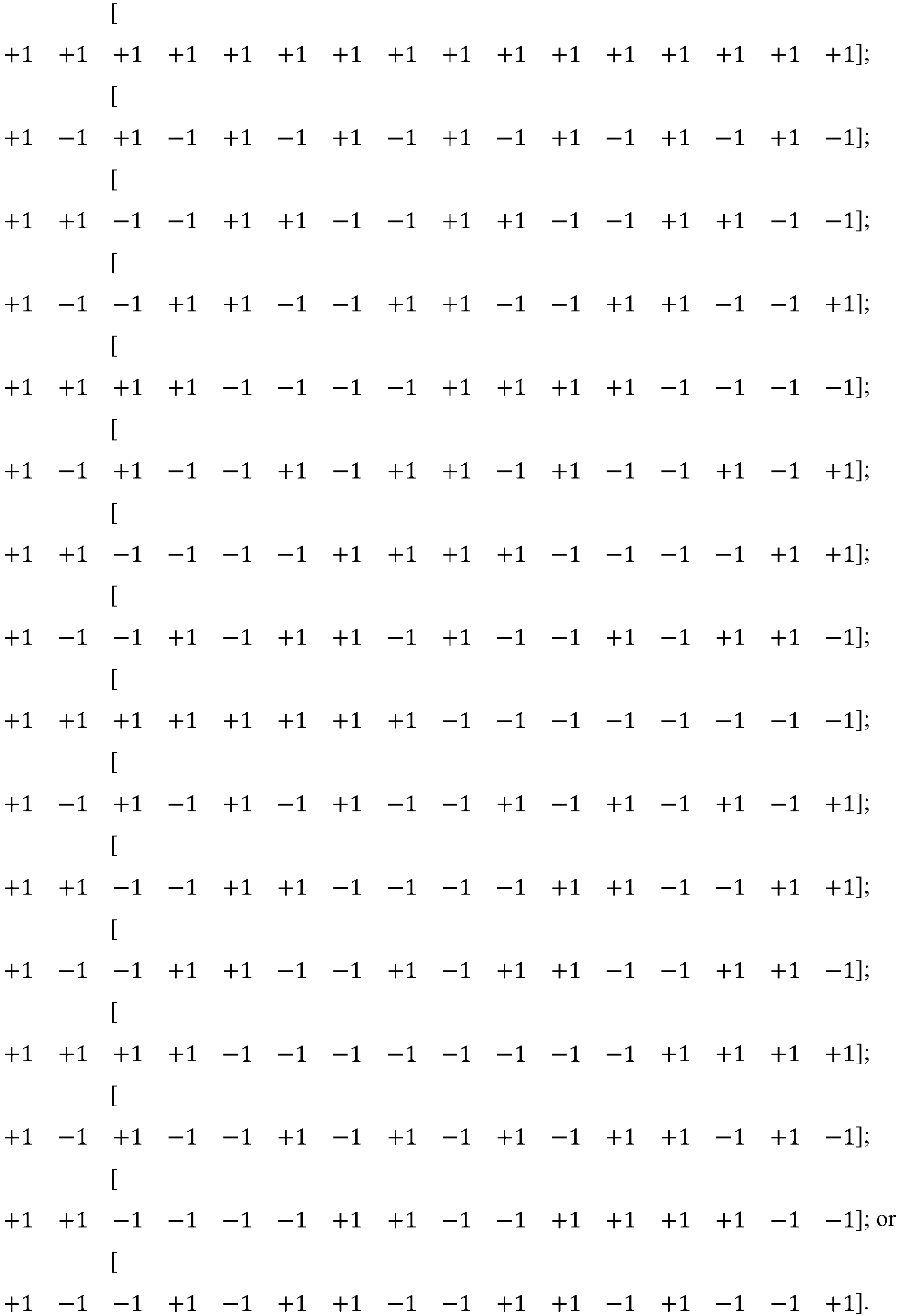

With reference to the second aspect, in some implementations of the second aspect, L=16, and the FD-OCC sequence of length 16 corresponding to the first port is $\left[1 {e}^{\frac{j 2 πm}{16}} … {e}^{\frac{j 2 πm ⋅ 15}{16}}\right]$ or $\left[1 {e}^{- \frac{j 2 πm}{16}} … {e}^{- \frac{j 2 πm ⋅ 15}{16}}\right]$, where j represents an imaginary unit, and a value of m is any one of the following: 0, 1, 2, 3, 4, 5, 6, 7, 8, 9, 10, 11, 12, 13, 14, or 15.

With reference to the second aspect, in some implementations of the second aspect, L=16, and the FD-OCC sequence of length 16 corresponding to the first port is any one of the following: 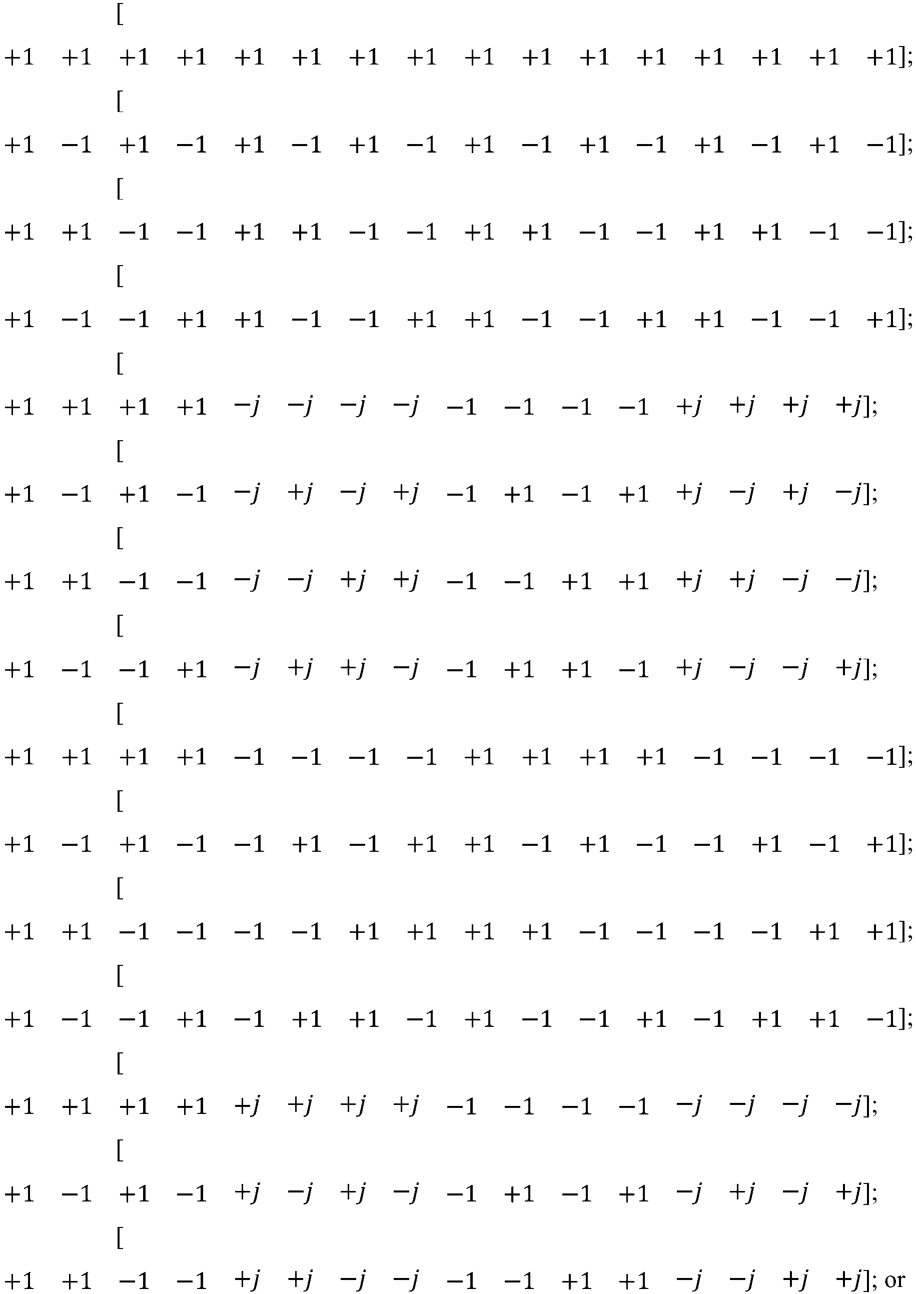 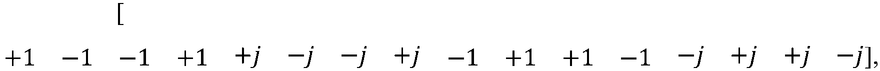 where
j represents an imaginary unit.

With reference to the second aspect, in some implementations of the second aspect, L=16, and the FD-OCC sequence of length 16 corresponding to the first port is any one of the following: 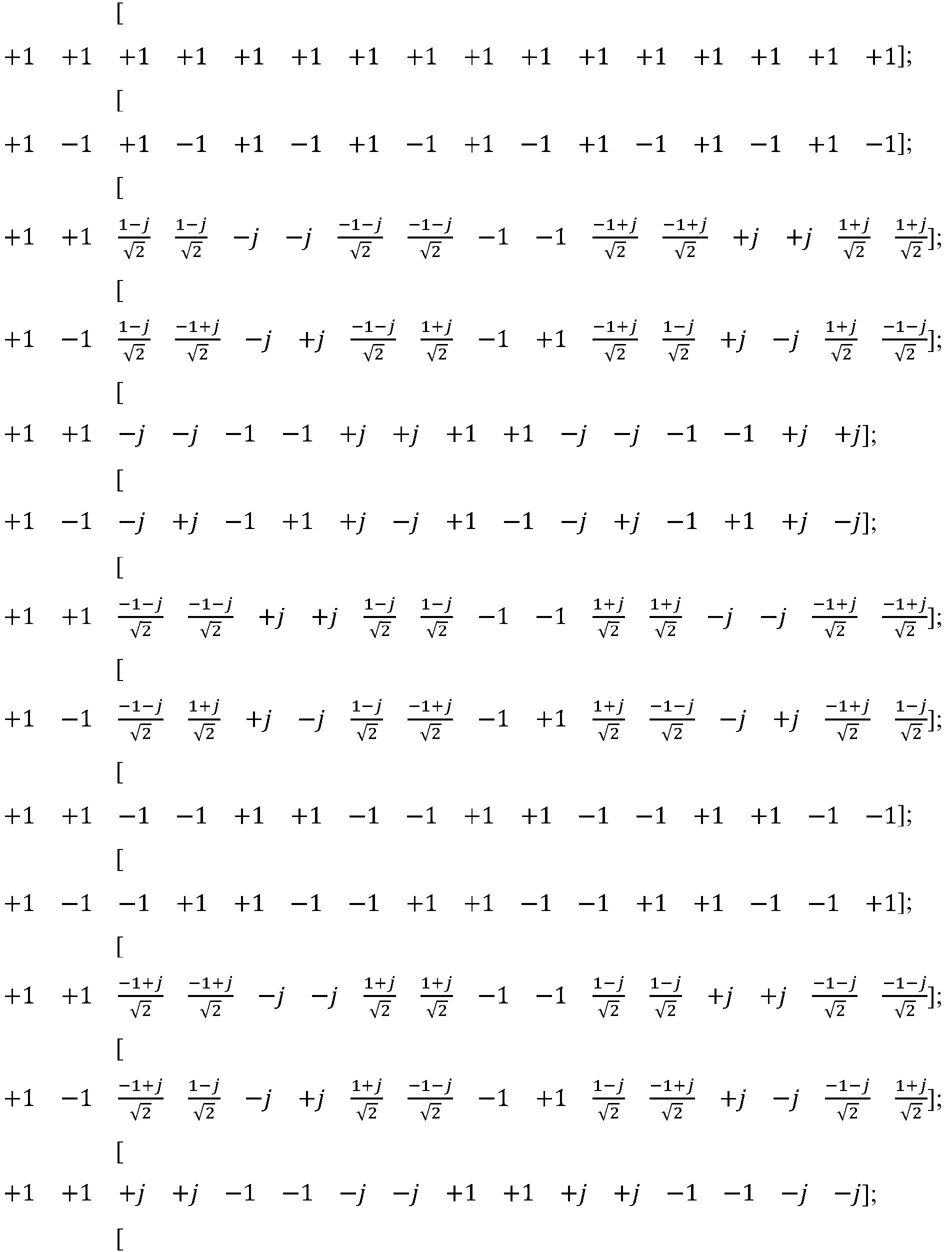 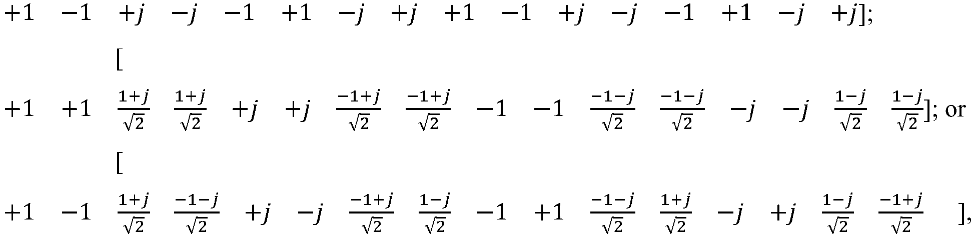 where
j represents an imaginary unit.

With reference to the second aspect, in some implementations of the second aspect, T=2, and the TD-OCC sequence of length 2 corresponding to the first port is any one of the following: [+1 +1] or [+1 -1].

With reference to the second aspect, in some implementations of the second aspect, the port set corresponds to W port groups, ports in a same port group of the W port groups correspond to a same time-frequency resource, ports in different port groups of the W port groups correspond to different time-frequency resources, and W is an integer greater than 1 or equal to 1.

With reference to the second aspect, in some implementations of the second aspect, the W port groups include a first port group, and subcarriers occupied by the first port group in two consecutive resource blocks include any one of the following:
subcarriers with indexes 0, 1, 2, 3, 12, 13, 14, and 15;
subcarriers with indexes 4, 5, 6, 7, 16, 17, 18, and 19; or
subcarriers with indexes 8, 9, 10, 11, 20, 21, 22, and 23.

With reference to the second aspect, in some implementations of the second aspect, the W port groups include a first port group, and subcarriers occupied by the first port group in four consecutive resource blocks include any one of the following:
subcarriers with indexes 0, 1, 2, 3, 12, 13, 14, 15, 24, 25, 26, 27, 36, 37, 38, and 39;
subcarriers with indexes 4, 5, 6, 7, 16, 17, 18, 19, 28, 29, 30, 31, 40, 41, 42, and 43; or
subcarriers with indexes 8, 9, 10, 11, 20, 21, 22, 23, 32, 33, 34, 35, 44, 45, 46, and 47.

With reference to the second aspect, in some implementations of the second aspect, the W port groups include at least one of the following:
a port 0 to a port 7;
a port 8 to a port 15;
a port 16 to a port 23;
a port 0 to a port 7, and a port 24 to a port 31;
a port 8 to a port 15, and a port 32 to a port 39;
a port 16 to a port 23, and a port 40 to a port 47;
a port 0 to a port 15;
a port 16 to a port 31;
a port 32 to a port 47;
a port 0 to a port 15, and a port 48 to a port 63;
a port 16 to a port 31, and a port 64 to a port 79; or
a port 32 to a port 47, and a port 80 to a port 95.

With reference to the second aspect, in some implementations of the second aspect, the reference signal is mapped to a time-frequency resource based on a mapping rule, and the mapping rule is related to at least one of the following parameters: a subcarrier spacing parameter, an index of a resource element, a symbol of the reference signal, an index of a start time domain position, a power scaling factor, a time domain cover code element, a frequency domain cover code element, a subcarrier offset factor, and an index of the first port.

With reference to the second aspect, in some implementations of the second aspect, the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(8n+k′\right)$ where $k = \left\{\begin{matrix}24 n + k ′ + Δ & k ′ = 0 , 1 , 2 , 3 \\ 24 n + k ′ + Δ + 8 & k ′ = 4 , 5 , 6 , 7\end{matrix}\right.$ $k ′ = 0 , 1 , 2 , 3 , 4 , 5 , 6 , 7$ $l = \overline{l} + l ′$ $n = 0 , 1 , …$ $j = 0 , 1 , … , v - 1$
v represents a quantity of spatial layers or a rank (for example, a quantity of spatial layers or a rank corresponding to a receiving end); a resource element RE with an index *(k,l)_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port *p* and that is mapped to the RE with an index *(k,l)_{p,µ}* ; Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}(k')* is a *k' ^{th}* element in an FD-OCC sequence; *wₜ(l')* is an *l*'^{th} element in a TD-OCC sequence; and *m* = 2*n* + *k' .*

With reference to the second aspect, in some implementations of the second aspect, the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(16n+k′\right)$ where $k = \left\{\begin{matrix}48 n + k ′ + Δ & k ′ = 0 , 1 , 2 , 3 \\ 48 n + k ′ + Δ + 8 & k ′ = 4 , 5 , 6 , 7 \\ 48 n + k ′ + Δ + 16 & k ′ = 8 , 9 , 10 , 11 \\ 48 n + k ′ + Δ + 24 & k ′ = 12 , 13 , 14 , 15\end{matrix}\right.$ $k ′ = 0 , 1 , 2 , 3 , 4 , 5 , 6 , 7 , 8 , 9 , 10 , 11 , 12 , 13 , 14 , 15$ $l = \overline{l} + l ′$ $n = 0 , 1 , …$ $j = 0 , 1 , … , v - 1$
v represents a quantity of spatial layers or a rank (for example, a quantity of spatial layers or a rank corresponding to a receiving end); a resource element RE with an index (*k,l*)*_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port *p* and that is mapped to the RE with an index (*k,l*)*_{p,µ}* ; Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}(k')* is a *k'* ^{th} element in an FD-OCC sequence; *wₜ*(*l*') is an *l*'^{th} element in a TD-OCC sequence; and *m = 2n + k' .*

With reference to the second aspect, in some implementations of the second aspect, the K FD-OCC subsequences are determined based on a first parameter, the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

Optionally, in each subband (or each resource block), the K FD-OCC subsequences are determined based on the first parameter.

With reference to the second aspect, in some implementations of the second aspect, the K FD-OCC subsequences include a first FD-OCC subsequence, the first FD-OCC subsequence is determined based on a port index associated with the first FD-OCC subsequence, the port index associated with the first FD-OCC subsequence is determined based on a first parameter, and the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

Optionally, the port index associated with the first FD-OCC subsequence is determined based on the offset and the index of the reference port. For example, Port index associated with the first FD-OCC subsequence=Offset+Index of the reference port.

With reference to the second aspect, in some implementations of the second aspect, that the port index associated with the first FD-OCC subsequence is determined based on the offset and the index of the reference port includes: The port index associated with the first FD-OCC subsequence is determined based on the offset, the index of the reference port, and a total quantity of ports and/or a quantity of port groups. The total quantity of ports may represent a total quantity of candidate or optional ports, and the quantity of port groups represents a quantity of port groups corresponding to the total quantity of candidate or optional ports.

With reference to the second aspect, in some implementations of the second aspect, the port index associated with the first FD-OCC subsequence satisfies: ${p}_{j} \left(n, k\right) = \left⌊\frac{{p}_{j , 0}}{Y / Z}\right⌋ ⋅ \frac{Y}{Z} + mod \left({p}_{j , 0}+{p}_{offset}\left(n, k\right),Y/Z\right)$
*pⱼ(n, k)* represents the port index associated with the first FD-OCC subsequence, *p*_{*j*,0} represents the index of the reference port, j represents a spatial layer index or represents a j^{th} port corresponding to a receiving end device (for example, a terminal device), for example, *j* = 0,1,..., *v*-1, and v represents a quantity of spatial layers corresponding to the terminal device, or represents a rank corresponding to the terminal device; *p*_{offset}(*n*, *k*) represents the offset, and the first FD-OCC subsequence is correspondingly mapped to a k^{th} frequency domain unit group in an n^{th} frequency domain unit; Y represents a total quantity of ports; and Z represents a quantity Z of port groups into which the ports of the total quantity are divided. For example, each port group includes Y/Z ports.

With reference to the second aspect, in some implementations of the second aspect, the offset is related to at least one of the following parameters: the initial factor, a pseudo-random sequence, and the index of the frequency domain unit corresponding to the reference signal. For example, the initial factor is related to an initial value of the pseudo-random sequence.

With reference to the second aspect, in some implementations of the second aspect, the offset satisfies any one of the following: ${p}_{offset} \left(n, k\right) = \left({\sum }_{m = 0}^{T - 1} \left(c\left(T\left({nN}_{sc}^{RBG}+k\right)+m\right){2}^{m}\right)\right) modY / Z ;$ or ${p}_{offset} \left(n, k\right) = \left({\sum }_{m = 0}^{T - 1} \left(c\left(T\left({nN}_{sc}^{RBG}+k\right)+m\right){2}^{m}\right)\right) ,$ where
*p*_{offset}(*n*, *k*) represents the offset; c() represents the pseudo-random sequence, and the initial factor is related to the pseudo-random sequence (for example, the initial factor is related to the initial value of the pseudo-random sequence); T is a positive integer; ${N}_{s c}^{RBG}$ represents a quantity of subcarriers included in a frequency domain unit; n represents the index of the frequency domain unit corresponding to the reference signal; k represents an index of a frequency domain unit group in the frequency domain unit corresponding to the reference signal; Y represents a total quantity of ports (for example, a total quantity of candidate or optional ports); and Z represents a quantity Z of port groups into which the ports of the total quantity are divided, and each port group includes Y/Z ports.

With reference to the second aspect, in some implementations of the second aspect, the method further includes: sending second indication information, where the second indication information indicates the first parameter.

With reference to the second aspect, in some implementations of the second aspect, each of the K FD-OCC subsequences is determined based on a port index associated with each subsequence, and port indexes associated with FD-OCC subsequences corresponding to all of the K frequency domain unit groups are the same or different.

With reference to the second aspect, in some implementations of the second aspect, the first port belongs to a second port group, the second port group occupies S time domain units in time domain, and quantities of frequency domain resources and/or frequency domain positions occupied by the second port group are different in at least two of the S time domain units, where S is an integer greater than 1.

With reference to the second aspect, in some implementations of the second aspect, the S time domain units include a first time domain unit and a second time domain unit, and an interval between start frequency domain positions corresponding to the second port group in the first time domain unit and the second time domain unit is any one of the following: X/2, X/4, or 3X/4, where X is a quantity of subcarriers included in one frequency domain unit.

With reference to the second aspect, in some implementations of the second aspect, the method further includes: sending third indication information, where the third indication information indicates a time domain resource occupied by the first port.

According to a third aspect, a signal transmission method is provided. The method may be performed by a communication apparatus. The communication apparatus may be a device (for example, referred to as a receiving end device such as a terminal device or a network device), or may be a component (for example, a chip, a chip system, or a circuit) of the device. This is not limited in this application.

The method may include: receiving first indication information, where the first indication information indicates a first port, the first port is used to transmit a reference signal, the first port corresponds to K frequency domain unit groups, the first port corresponds to K FD-OCC sequences, each of the K frequency domain unit groups corresponds to one of the K FD-OCC sequences, and K is an integer equal to 1 or greater than 1; and receiving the reference signal based on the first indication information.

With reference to the third aspect, in some implementations of the third aspect, each of the K frequency domain unit groups includes at least one frequency domain unit, and each frequency domain unit corresponds to one element in the FD-OCC sequence. For example, the K frequency domain unit groups include a first frequency domain unit group, the first frequency domain unit group corresponds to a first FD-OCC sequence in the K FD-OCC sequences, and each frequency domain unit in the first frequency domain unit group corresponds to one element in the first FD-OCC sequence.

With reference to the third aspect, in some implementations of the third aspect, the K FD-OCC sequences include at least one of the following: K1 FD-OCC sequences of length L, and K2 FD-OCC subsequences of length A, where L and A are integers greater than 0, L and A are different, K1 and K2 are integers greater than 0 or equal to 0 and less than K or equal to K, and K1 +K2=K.

For example, K1=K, and K2=0; or K2=K, and K1=0; or both K1 and K2 are greater than 0.

For example, L=8, 16, or 24.

For example, L is greater than A. For example, A=L/2, or L/4.

For example, the K2 FD-OCC subsequences of length A are obtained based on an FD-OCC sequence of length A'. That is, the FD-OCC subsequence is a sequence including a subset of elements in the FD-OCC sequence of length A'. That is, the FD-OCC sequence of length A' includes K2 FD-OCC subsequences of length A. A' is an integer greater than A or equal to A. For example, A'=L. For example, A=A'/2, or A'/4.

For example, the K2 FD-OCC subsequences of length A are obtained based on FD-OCC sequences of different lengths. For example, the K2 FD-OCC subsequences of length A include K21 first FD-OCC subsequences and K22 second FD-OCC subsequences. The first FD-OCC subsequence is obtained based on an FD-OCC sequence of length A", and the second FD-OCC subsequence is obtained based on an FD-OCC sequence of length A‴, where A" and A‴ are integers greater than A or equal to A.

With reference to the third aspect, in some implementations of the third aspect, frequency domain units in each of the K frequency domain unit groups are consecutive in frequency domain, and at least two adjacent frequency domain unit groups in the K frequency domain unit groups are inconsecutive in frequency domain.

With reference to the third aspect, in some implementations of the third aspect, intervals between adjacent frequency domain unit groups in the K frequency domain unit groups are equal.

With reference to the third aspect, in some implementations of the third aspect, the K FD-OCC sequences are determined based on a first parameter, the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

With reference to the third aspect, in some implementations of the third aspect, the K FD-OCC sequences include a first FD-OCC sequence, the first FD-OCC sequence is determined based on a port index associated with the first FD-OCC sequence, the port index associated with the first FD-OCC sequence is determined based on a first parameter, and the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

Optionally, the port index associated with the first FD-OCC sequence is determined based on the offset and the index of the reference port. For example, Port index associated with the first FD-OCC sequence=Offset+Index of the reference port.

Based on the foregoing technical solution, each port index is associated with one FD-OCC sequence, and the port index may be determined based on the index of the reference port and the offset, so that the FD-OCC sequence associated with the port index can be determined based on the determined port index.

With reference to the third aspect, in some implementations of the third aspect, that the port index associated with the first FD-OCC sequence is determined based on the offset and the index of the reference port includes: The port index associated with the first FD-OCC sequence is determined based on the offset, the index of the reference port, and a total quantity of ports and/or a quantity of port groups. The total quantity of ports may represent a total quantity of candidate or optional ports, and the quantity of port groups represents a quantity of port groups corresponding to the total quantity of candidate or optional ports.

With reference to the third aspect, in some implementations of the third aspect, the port index associated with the first FD-OCC sequence satisfies: ${p}_{j} \left(n, k\right) = \left⌊\frac{{p}_{j , 0}}{Y / Z}\right⌋ ⋅ \frac{Y}{Z} + mod \left({p}_{j , 0}+{p}_{offset}\left(n, k\right),Y/Z\right)$
*pⱼ(n, k)* represents the port index associated with the first FD-OCC sequence; *p*_{*j*,0} represents the index of the reference port; the first FD-OCC sequence is correspondingly mapped to a k^{th} frequency domain unit group in an n^{th} frequency domain unit; j represents a spatial layer index or represents a j^{th} port corresponding to the receiving end device (for example, a terminal device), for example, *j* = 0,1,..., *v*-1; v represents a quantity of spatial layers corresponding to the terminal device, or represents a rank corresponding to the terminal device; *p*_{offset}(*n*, *k*) represents the offset; Y represents a total quantity of ports; and Z represents a quantity Z of port groups into which the ports of the total quantity are divided. For example, each port group includes Y/Z ports. For example, a value of Y is equal to L, and L is a length of an FD-OCC sequence. For example, a value of Z is K, and K represents a quantity of groups (that is, an FD-OCC sequence of length L is divided into K FD-OCC sequences (for example, K FD-OCC subsequences)).

With reference to the third aspect, in some implementations of the third aspect, the offset is related to at least one of the following parameters: the initial factor, a pseudo-random sequence, and the index of the frequency domain unit corresponding to the reference signal. For example, the initial factor is related to an initial value of the pseudo-random sequence.

With reference to the third aspect, in some implementations of the third aspect, the offset satisfies any one of the following: ${p}_{offset} \left(n, k\right) = \left({\sum }_{m = 0}^{T - 1} \left(c\left(T\left({nN}_{sc}^{RBG}+k\right)+m\right){2}^{m}\right)\right) modY / Z ;$ or ${p}_{offset} \left(n, k\right) = \left({\sum }_{m = 0}^{T - 1} \left(c\left(T\left({nN}_{sc}^{RBG}+k\right)+m\right){2}^{m}\right)\right) ,$ where
*p*_{offset}(*n*, *k*) represents the offset; c() represents the pseudo-random sequence, and the initial factor is related to the pseudo-random sequence (for example, the initial factor is related to the initial value of the pseudo-random sequence); T is a positive integer; ${N}_{s c}^{RBG}$ represents a quantity of subcarriers included in a frequency domain unit; n represents the index of the frequency domain unit corresponding to the reference signal; k represents an index of a frequency domain unit group in the frequency domain unit corresponding to the reference signal; Y represents a total quantity of ports (for example, a total quantity of candidate or optional ports); and Z represents a quantity Z of port groups into which the ports of the total quantity are divided, and each port group includes Y/Z ports.

With reference to the third aspect, in some implementations of the third aspect, the method further includes: receiving second indication information, where the second indication information indicates the first parameter.

With reference to the third aspect, in some implementations of the third aspect, each of the K FD-OCC sequences is determined based on a port index associated with each sequence, and port indexes associated with FD-OCC sequences corresponding to all of the K frequency domain unit groups are the same or different.

According to a fourth aspect, a signal transmission method is provided. The method may be performed by a communication apparatus. The communication apparatus may be a device (for example, referred to as a transmitting end device such as a terminal device or a network device), or may be a component (for example, a chip, a chip system, or a circuit) of the device. This is not limited in this application.

The method may include: sending first indication information, where the first indication information indicates a first port, the first port is used to transmit a reference signal, the first port corresponds to K frequency domain unit groups, the first port corresponds to K FD-OCC sequences, each of the K frequency domain unit groups corresponds to one of the K FD-OCC sequences, and K is an integer equal to 1 or greater than 1; and sending the reference signal.

With reference to the fourth aspect, in some implementations of the fourth aspect, each of the K frequency domain unit groups includes at least one frequency domain unit, and each frequency domain unit corresponds to one element in the FD-OCC sequence. For example, the K frequency domain unit groups include a first frequency domain unit group, the first frequency domain unit group corresponds to a first FD-OCC sequence in the K FD-OCC sequences, and each frequency domain unit in the first frequency domain unit group corresponds to one element in the first FD-OCC sequence.

With reference to the fourth aspect, in some implementations of the fourth aspect, the K FD-OCC sequences include at least one of the following: K1 FD-OCC sequences of length L, and K2 FD-OCC subsequences of length A, where L and A are integers greater than 0, L and A are different, K1 and K2 are integers greater than 0 or equal to 0 and less than K or equal to K, and K1+K2=K.

For example, K1=K, and K2=0; or K2=K, and K1=0; or both K1 and K2 are greater than 0.

For example, L=8, 16, or 24.

For example, L is greater than A. For example, A=L/2, or L/4.

For example, the K2 FD-OCC subsequences of length A are obtained based on an FD-OCC sequence of length A'. That is, the FD-OCC subsequence is a sequence including a subset of elements in the FD-OCC sequence of length A'. That is, the FD-OCC sequence of length A' includes K2 FD-OCC subsequences of length A. A' is an integer greater than A or equal to A. For example, A'=L. For example, A=A'/2, or A'/4.

For example, the K2 FD-OCC subsequences of length A are obtained based on FD-OCC sequences of different lengths. For example, the K2 FD-OCC subsequences of length A include K21 first FD-OCC subsequences and K22 second FD-OCC subsequences. The first FD-OCC subsequence is obtained based on an FD-OCC sequence of length A", and the second FD-OCC subsequence is obtained based on an FD-OCC sequence of length A‴, where A" and A‴ are integers greater than A or equal to A.

With reference to the fourth aspect, in some implementations of the fourth aspect, frequency domain units in each of the K frequency domain unit groups are consecutive in frequency domain, and at least two adjacent frequency domain unit groups in the K frequency domain unit groups are inconsecutive in frequency domain.

With reference to the fourth aspect, in some implementations of the fourth aspect, the K FD-OCC sequences are determined based on a first parameter, the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

With reference to the fourth aspect, in some implementations of the fourth aspect, the K FD-OCC sequences include a first FD-OCC sequence, the first FD-OCC sequence is determined based on a port index associated with the first FD-OCC sequence, the port index associated with the first FD-OCC sequence is determined based on a first parameter, and the first parameter includes at least one of the following: an index of the first port, an index of a reference port, an offset, an index of a frequency domain unit corresponding to the reference signal, an index of a time domain unit corresponding to the reference signal, or an initial factor, where the offset is an offset relative to the index of the reference signal port, and the initial factor is used to determine the offset.

Optionally, the port index associated with the first FD-OCC sequence is determined based on the offset and the index of the reference port. For example, Port index associated with the first FD-OCC sequence=Offset+Index of the reference port.

With reference to the fourth aspect, in some implementations of the fourth aspect, that the port index associated with the first FD-OCC sequence is determined based on the offset and the index of the reference port includes: The port index associated with the first FD-OCC sequence is determined based on the offset, the index of the reference port, and a total quantity of ports and/or a quantity of port groups. The total quantity of ports may represent a total quantity of candidate or optional ports, and the quantity of port groups represents a quantity of port groups corresponding to the total quantity of candidate or optional ports.

With reference to the fourth aspect, in some implementations of the fourth aspect, the port index associated with the first FD-OCC sequence satisfies: ${p}_{j} \left(n, k\right) = \left⌊\frac{{p}_{j , 0}}{Y / Z}\right⌋ ⋅ \frac{Y}{Z} + mod \left({p}_{j , 0}+{p}_{offset}\left(n, k\right),Y/Z\right)$
*pⱼ*(*n, k)* represents the port index associated with the first FD-OCC sequence; *p*_{*j*,0} represents the index of the reference port; the first FD-OCC sequence is correspondingly mapped to a k^{th} frequency domain unit group in an n^{th} frequency domain unit; j represents a spatial layer index or represents a *j*^{th} port corresponding to a receiving end device (for example, a terminal device), for example, *j =* 0,1,...,*v*-1; v represents a quantity of spatial layers corresponding to the terminal device, or represents a rank corresponding to the terminal device; *p*_{offset}(*n*, *k*) represents the offset; Y represents a total quantity of ports; and Z represents a quantity Z of port groups into which the ports of the total quantity are divided. For example, each port group includes Y/Z ports. For example, a value of Y is equal to L, and L is a length of an FD-OCC sequence. For example, a value of Z is K, and K represents a quantity of groups (that is, an FD-OCC sequence of length L is divided into K FD-OCC sequences (for example, K FD-OCC subsequences)).

With reference to the fourth aspect, in some implementations of the fourth aspect, the offset is related to at least one of the following parameters: the initial factor, a pseudo-random sequence, and the index of the frequency domain unit corresponding to the reference signal. For example, the initial factor is related to an initial value of the pseudo-random sequence.

With reference to the fourth aspect, in some implementations of the fourth aspect, the offset satisfies any one of the following: ${p}_{offset} \left(n, k\right) = \left({\sum }_{m = 0}^{T - 1} \left(c\left(T\left({nN}_{sc}^{RBG}+k\right)+m\right){2}^{m}\right)\right) modY / Z ;$ or ${p}_{offset} \left(n, k\right) = \left({\sum }_{m = 0}^{T - 1} \left(c\left(T\left({nN}_{sc}^{RBG}+k\right)+m\right){2}^{m}\right)\right) ,$ where
*p*_{offset}(*n*, *k*) represents the offset; c() represents the pseudo-random sequence, and the initial factor is related to the pseudo-random sequence (for example, the initial factor is related to the initial value of the pseudo-random sequence); T is a positive integer; ${N}_{s c}^{RBG}$ represents a quantity of subcarriers included in a frequency domain unit; n represents the index of the frequency domain unit corresponding to the reference signal; k represents an index of a frequency domain unit group in the frequency domain unit corresponding to the reference signal; Y represents a total quantity of ports (for example, a total quantity of candidate or optional ports); and Z represents a quantity Z of port groups into which the ports of the total quantity are divided, and each port group includes Y/Z ports.

With reference to the fourth aspect, in some implementations of the fourth aspect, the method further includes: sending second indication information, where the second indication information indicates the first parameter.

With reference to the fourth aspect, in some implementations of the fourth aspect, each of the K FD-OCC sequences is determined based on a port index associated with each sequence, and port indexes associated with FD-OCC sequences corresponding to all of the K frequency domain unit groups are the same or different.

According to a fifth aspect, a signal transmission method is provided. The method may be performed by a communication apparatus. The communication apparatus may be a device (for example, referred to as a receiving end device such as a terminal device or a network device), or may be a component (for example, a chip, a chip system, or a circuit) of the device. This is not limited in this application.

The method may include: receiving first indication information, where the first indication information indicates a first port, the first port is used to transmit a reference signal, the first port belongs to a port group, the port group occupies S time domain units in time domain, a quantity of frequency domain resources and/or frequency domain positions occupied by the port group are different in at least two of the S time domain units, and S is an integer greater than 1; and receiving the reference signal based on the first indication information.

With reference to the fifth aspect, in some implementations of the fifth aspect, the S time domain units include a first time domain unit and a second time domain unit, and an interval between start frequency domain positions corresponding to a second port group in the first time domain unit and the second time domain unit is any one of the following: X/2, X/4, or 3X/4, where X is a quantity of subcarriers included in one frequency domain unit.

With reference to the fifth aspect, in some implementations of the fifth aspect, the method further includes: receiving third indication information, where the third indication information indicates a time domain resource occupied by the first port.

According to a sixth aspect, a signal transmission method is provided. The method may be performed by a communication apparatus. The communication apparatus may be a device (for example, referred to as a transmitting end device such as a terminal device or a network device), or may be a component (for example, a chip, a chip system, or a circuit) of the device. This is not limited in this application.

The method may include: sending first indication information, where the first indication information indicates a first port, the first port is used to transmit a reference signal, the first port belongs to a port group, the port group occupies S time domain units in time domain, a quantity of frequency domain resources and/or frequency domain positions occupied by the port group are different in at least two of the S time domain units, and S is an integer greater than 1; and sending the reference signal.

With reference to the sixth aspect, in some implementations of the sixth aspect, the S time domain units include a first time domain unit and a second time domain unit, and an interval between start frequency domain positions corresponding to the second port group in the first time domain unit and the second time domain unit is any one of the following: X/2, X/4, or 3X/4, where X is a quantity of subcarriers included in one frequency domain unit.

With reference to the sixth aspect, in some implementations of the sixth aspect, the method further includes: sending third indication information, where the third indication information indicates a time domain resource occupied by the first port.

For beneficial effects of the second aspect to the sixth aspect and the possible designs, refer to the related descriptions of the first aspect. Details are not described herein again.

According to a seventh aspect, a communication apparatus is provided. The apparatus is configured to perform the method according to any one of the first aspect to the sixth aspect. Specifically, the apparatus may include a unit and/or a module, for example, a processing unit and/or a communication unit, configured to perform the method according to any one of the implementations of any one of the first aspect to the sixth aspect.

In an implementation, the apparatus is a communication device (for example, a transmitting end device, or for another example, a receiving end device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor, configured to perform the method according to any one of the implementations of any one of the first aspect to the sixth aspect.

Optionally, the apparatus further includes a memory, configured to store a program. Correspondingly, the at least one processor is configured to execute the computer program or instructions stored in the memory.

Optionally, the apparatus further includes a communication interface. The communication interface is coupled to the processor, and may be configured to input information to the processor, or output information in the processor.

In an implementation, the apparatus is a communication device (for example, a transmitting end device, or for another example, a receiving end device).

In another implementation, the apparatus is a chip, a chip system, or a circuit used in a communication device.

According to a ninth aspect, this application provides a processor, configured to perform the methods according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any one of the implementations of any one of the first aspect to the sixth aspect.

According to an eleventh aspect, a computer program product including instructions is provided. When the computer program product is run on a computer, the computer is enabled to perform the method according to any one of the implementations of any one of the first aspect to the sixth aspect.

According to a twelfth aspect, a chip is provided. The chip includes a processor and a communication interface. The processor reads, through the communication interface, instructions stored in a memory, to perform the method according to any one of the implementations of any one of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of any one of the first aspect to the sixth aspect.

According to a thirteenth aspect, a communication system is provided. The communication system includes a first communication apparatus and a second communication apparatus. The first communication apparatus is configured to perform the method according to any one of the implementations of the first aspect, and the second communication apparatus is configured to perform the method according to any one of the implementations of the second aspect; or the first communication apparatus is configured to perform the method according to any one of the implementations of the third aspect, and the second communication apparatus is configured to perform the method according to any one of the implementations of the fourth aspect; or the first communication apparatus is configured to perform the method according to any one of the implementations of the fifth aspect, and the second communication apparatus is configured to perform the method according to any one of the implementations of the sixth aspect.

### BRIEF DESCRIPTION OF DRAWINGS

FIG. 1 is a diagram of a wireless communication system applicable to an embodiment of this application;
FIG. 2A to FIG. 2D are diagrams of DMRS patterns (pattern) of two configuration types;
FIG. 3 is a diagram of time-frequency resource mapping of an eType 1 DMRS;
FIG. 4 is a diagram of time-frequency resource mapping of an eType 2 DMRS;
FIG. 5 is a diagram of a signal transmission method 500 according to an embodiment of this application;
FIG. 6 is a diagram of DMRS time-frequency resource mapping according to an embodiment of this application;
FIG. 7 is another diagram of DMRS time-frequency resource mapping according to an embodiment of this application;
FIG. 8 is another diagram of DMRS time-frequency resource mapping according to an embodiment of this application;
FIG. 9 is another diagram of DMRS time-frequency resource mapping according to an embodiment of this application;
FIG. 10 is a diagram of FD-OCC subsequence mapping according to an embodiment of this application;
FIG. 11 is a diagram of an FD-OCC subsequence according to an embodiment of this application;
FIG. 12 is a diagram applicable to multi-user multiple-input multiple-output (multi-user multiple-input multiple-output, MU-MIMO) scheduling according to an embodiment of this application;
FIG. 13 is a diagram of a signal transmission method 1300 according to another embodiment of this application;
FIG. 14A to FIG. 14C are diagrams of DMRS time-frequency resource mapping under different quantities of symbols according to an embodiment of this application;
FIG. 15 is a block diagram of a communication apparatus 1500 according to an embodiment of this application;
FIG. 16 is a diagram of another communication apparatus 1600 according to an embodiment of this application; and
FIG. 17 is a diagram of a chip system 1700 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system. The technical solutions provided in this application may be further applied to a non-terrestrial communication network (non-terrestrial network, NTN) system such as inter-satellite communication and satellite communication.

For example, a satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.

In an example, V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V means communication between vehicles. V2P means communication between a vehicle and a person (including a pedestrian, a bicyclist, a driver, a passenger, or the like). V2I means communication between a vehicle and an infrastructure. The infrastructure is, for example, a road side unit (road side unit, RSU) or a network device. The RSU includes two types: a terminal-type RSU and a base station-type RSU. The terminal-type RSU is deployed on a roadside and is in a non-moving state, and therefore mobility does not need to be considered. The base station-type RSU can provide timing synchronization and resource scheduling for a vehicle that communicates with the base station-type RSU. V2N means communication between a vehicle and a network device. It may be understood that the foregoing descriptions are examples, and do not constitute any limitation on embodiments of this application. For example, the V2X may further include NR system-based V2X communication of the current Rel-16 and a later release of the 3rd generation partnership project (3rd generation partnership project, 3GPP).

The technical solutions provided in embodiments of this application may be applied to a link between a network device and a terminal device, or may be applied to a link between devices, for example, a D2D link. The D2D link may also be referred to as a sidelink (sidelink, SL), and the sidelink may also be referred to as a side-link, a secondary link, or the like. In embodiments of this application, the D2D link, the sidelink, and the secondary link have a same meaning, and each mean a link established between devices of a same type. The link between the devices of the same type may be a link between terminal devices, a link between network devices, a link between relay nodes, or the like. This is not limited in embodiments of this application. The link between terminal devices includes a D2D link defined in the 3GPP release (release, Rel)-12/13 and a vehicle-to-everything link defined by the 3GPP for vehicle-to-everything.

A device in the communication system may send a signal to another device or receive a signal from another device. The signal may include information, signaling, data, and the like. The device may alternatively be replaced with an entity, a network entity, a communication device, a mobile device, a network element, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device. It may be understood that, in this disclosure, the terminal device may be replaced with a first device, the network device may be replaced with a second device, and the terminal device and the network device perform a corresponding method in this disclosure. Alternatively, a corresponding method in this disclosure may be applied between network devices or between terminal devices. This is not limited herein.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a terminal device in a 5G network, a terminal device in a future evolved public land mobile communication network (public land mobile network, PLMN), or the like. This is not limited in embodiments of this application.

By way of example, but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

It should be understood that in some scenarios, the terminal device may alternatively serve as a base station. For example, the terminal device may serve as a scheduling entity that provides a sidelink signal between terminal devices in a V2X scenario, a D2D scenario, a P2P scenario, or the like.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component. In embodiments of this application, only an example in which the apparatus configured to implement the function of the terminal device is a terminal device is used for description, and constitutes no limitation on the solutions in embodiments of this application.

The network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, a RAN intelligent controller (RAN intelligent controller, RIC), and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device configured to communicate with another base station.

In some deployments, the network device in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different split modes between the DU and the RU correspond to different categories (categories, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions (to be specific, one or more of encoding, rate matching, scrambling, modulation, or the layer mapping) before the layer mapping, and other functions (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions (to be specific, one or more functions of decoding, rate de-matching, descrambling, demodulation, inverse discrete Fourier transform (inverse discrete Fourier transform, IDFT), channel equalization, or RE demapping) before the demapping, and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system or a chip. The apparatus may be installed in the network device. In embodiments of this application, the chip system may include a chip, or may include a chip and another discrete component. In embodiments of this application, only an example in which the apparatus configured to implement the function of the network device is a network device is used for description, and constitutes no limitation on the solutions in embodiments of this application.

The network device and the terminal device may be deployed on land, including indoors or outdoors, handheld, or vehicle-mounted; may be deployed on a water surface; or may be deployed on an airplane, a balloon, and a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

First, a communication system applicable to embodiments of this application is briefly described below.

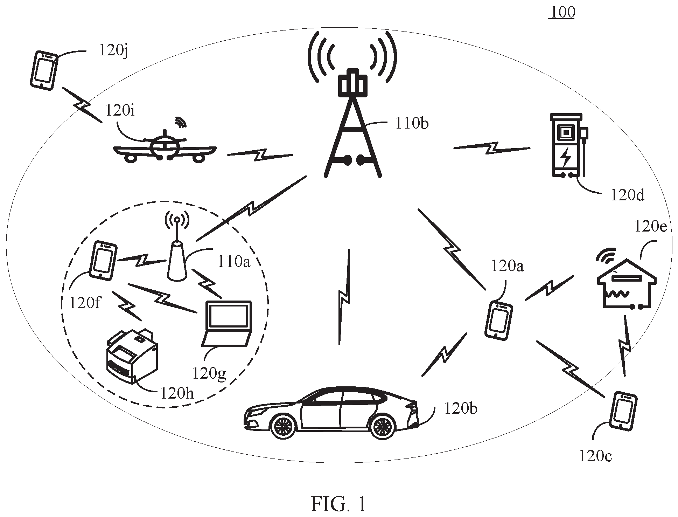

FIG. 1 is a diagram of a wireless communication system applicable to an embodiment of this application.

As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, collectively referred to as 120) may be connected to each other or connected to one or more network devices (110a and 110b, collectively referred to as 110) in the radio access network 100. Network elements in the wireless communication system are connected to each other through an interface (for example, NG or Xn) or an air interface. In addition, one or more AI modules may be disposed in each network element in the wireless communication system. AI modules deployed in different network elements may be the same or different.

FIG. 1 is merely a diagram. The wireless communication system may further include another device, for example, may further include a core network device, a wireless relay device, and/or a wireless backhaul device, which are not shown in FIG. 1.

For ease of understanding embodiments of this application, the following first briefly describes terms in embodiments of this application.

### 1. Antenna port (antenna port)

The antenna port may be referred to as a port (port) for short. The port may be understood as a transmit antenna identified by a receiving end, or a transmit antenna that can be spatially distinguished. The antenna port may be a logical antenna port, that is, may be a virtual antenna port or an actual antenna port. Each virtual antenna may correspond to one antenna port, and each virtual antenna may be a weighted combination of a plurality of physical antennas. Antenna ports may be classified into reference signal ports and data ports based on different signals carried by the antenna ports. For example, the reference signal port includes but is not limited to a demodulation reference signal (dedicated demodulation reference signal, DMRS) port, a channel state information reference signal (channel state information reference signal, CSI-RS) port, and the like. For the DMRS port, each antenna port may correspond to one spatial stream or one spatial layer. Each DMRS port corresponds to one port index. Each DMRS port corresponds to one DMRS sequence, each DMRS port corresponds to one or more time-frequency resources, and the corresponding DMRS sequence is mapped, according to a rule, to a time-frequency resource unit included in the one or more time-frequency resources. The DMRS sequence may also be referred to as a DMRS symbol sequence or a DMRS symbol vector. The time-frequency resource unit may be a frequency domain subcarrier, an OFDM symbol, or a resource element (RE).

In this application, a port index p may also represent (or be referred to as) a port index 1000+p, where p is an integer. For example, the port index 1000 may alternatively represent a port index 0, and the port index 1001 may alternatively represent a port index 1. A port corresponding to the port index 1000 or the port index 0 may be referred to as a port 0 or a port P0 for short. A port corresponding to the port index 1001 or the port index 1 may be referred to as a port 1 or a port P1 for short.

In this application, a DMRS is mainly used as an example of a reference signal for description. However, this application is not limited thereto. For example, the DMRS may be replaced with another reference signal, such as a CSI-RS, a channel sounding reference signal (sounding reference signal, SRS), a phase tracking reference signal (phase-tracking reference signals, PTRS), or a tracking reference signal (tracking reference signal, TRS).

In this application, a port and a reference signal port (for example, a DMRS port) are used interchangeably sometimes. Unless otherwise specified, the port and the reference signal port have a same meaning.

### 2. Time-frequency resource

In embodiments of this application, data or information may be carried by using a time-frequency resource.

In time domain, the time-frequency resource may include one or more time domain units (which may also be referred to as a time unit, or the like). One time domain unit may be one symbol or several symbols (for example, OFDM symbols), or one slot (slot), or one mini-slot (mini-slot), or one subframe (subframe). One slot may include seven or 14 symbols. One mini-slot may include at least one symbol (for example, two symbols, seven symbols, or 14 symbols, or any quantity of symbols less than or equal to 14). Duration of one subframe in time domain may be 1 millisecond (ms). It should be understood that sizes of the foregoing listed time domain units are merely used for ease of understanding of the solutions in this application, and do not constitute a limitation on the protection scope of this application. It may be understood that the sizes of the foregoing time domain units may be other values. This is not limited in this application.

In frequency domain, the time-frequency resource may include one or more frequency domain units. One frequency domain unit may be a resource block (resource block, RB), a subcarrier (subcarrier), a resource block group (resource block group, RBG), a predefined subband (subband), a precoding resource block group (precoding resource block group, PRG), a bandwidth part (bandwidth part, BWP), a resource element (resource element, RE) (which may also be referred to as a resource unit or a resource element), a carrier, or a serving cell.

### 3. DMRS

For example, the DMRS is used to estimate an equivalent channel matrix of a data channel (for example, a physical downlink shared channel (physical downlink share channel, PDSCH), or for another example, a physical uplink shared channel (physical uplink share channel, PUSCH)) or a control channel (for example, a physical downlink control channel (physical downlink control channel, PDCCH), or for another example, a physical uplink control channel (physical uplink control channel, PUCCH)), to detect and demodulate data. For a transmitting end, the DMRS and a sent data signal are usually precoded in a same way, to ensure that equivalent channels of the DMRS and the data signal are the same. It is assumed that a DMRS vector sent by the transmitting end is *s*, a sent data signal vector is x, and the DMRS and the data signal are precoded in a same way (multiplying by a same precoding matrix). A data signal vector *y* and a DMRS vector r that are received by a receiving end respectively satisfy formula (1) and formula (2). $y = HPx + n = {H}^{˜} x + n$ (1) $r = HPs + n = {H}^{˜} s + n$ (2)

*H̃* represents an equivalent channel of the data signal and the DMRS, and *n* represents additive noise. Based on the known DMRS vector s, the receiving end may obtain estimation of an equivalent channel *H̃* by using a channel estimation algorithm such as least square (least square, LS) channel estimation or minimum mean square error (minimum mean square error, MMSE) channel estimation. Demodulation of the data signal may be completed based on the equivalent channel.

With introduction of a MIMO technology into a wireless communication system, the transmitting end may transmit multi-stream data on a same time-frequency resource, and the receiving end may recover all the multi-stream data. In this case, the DMRS is used to estimate an equivalent channel matrix, and a dimension of the DMRS may be *N_{R}×R*, where *N_{R}* represents a quantity of receiving antennas, and *R* represents a quantity of transport streams (also referred to as a quantity of transport layers, or a quantity of spatial layers). Generally, one DMRS port (port) corresponds to one transport stream. That is, for MIMO transmission in which a quantity of transport streams is *R*, a quantity of required DMRS ports is *R.*

For one DMRS port, to perform channel estimation on different time-frequency resources, a plurality of DMRSs need to be sent on a plurality of time-frequency resources. A plurality of DMRSs corresponding to one port correspond to one DMRS sequence. One DMRS sequence includes a plurality of DMRS sequence elements (or referred to as elements for short).

For example, the DMRS sequence may be generated by using a gold sequence. For example, the DMRS sequence is generated from the gold sequence, and an *n*^{th} DMRS sequence element in the DMRS sequence satisfies formula (3). ${r}_{l} \left(n\right) = \frac{1}{\sqrt{2}} \left(1-2⋅c\left(2n\right)\right) + j \frac{1}{\sqrt{2}} \left(1-2⋅c\left(2n+1\right)\right)$ (3)
*c*(*n*) is a pseudo-random sequence, and *c*(*n*) may be a gold sequence with a sequence length of 31. A sequence *c*(*n*) with an output length *M*_{PN} *, n* = 0,1,...,*M*_{PN} -1, and formula (4) may be satisfied. $\begin{matrix}c \left(n\right) = \left({x}_{1}\left(n+{N}_{C}\right)+{x}_{2}\left(n+{N}_{C}\right)\right) mod 2 \\ {x}_{1} \left(n+31\right) = \left({x}_{1}\left(n+3\right)+{x}_{1}\left(n\right)\right) mod 2 \\ {x}_{2} \left(n+31\right) = \left({x}_{2}\left(n+3\right)+{x}_{2}\left(n+2\right)+{x}_{2}\left(n+1\right)+{x}_{2}\left(n\right)\right) mod 2\end{matrix}$ (4)

*N_{C}*=1600, a first m-sequence *x*₁(*n*) may be initialized to *x*₁(0)=1,*x*₁(*n*)=0,*n* =1,2,...,30, and a second m-sequence *x₂*(*n*) may be initialized by using a parameter *cᵢₙᵢₜ,* and *cᵢₙᵢₜ* may satisfy formula (5). ${c}_{init} = \left({2}^{17}\left({N}_{symb}^{slot}{n}_{s , f}^{μ}+l+1\right)\left(2{N}_{ID}^{{\overline{n}}_{SCID}^{\overline{λ}}}+1\right)+{2}^{17}\left⌊\frac{\overline{λ}}{2}\right⌋+2{N}_{ID}^{{\overline{n}}_{SCID}^{\overline{λ}}}+{\overline{n}}_{SCID}^{\overline{λ}}\right) {mod 2}^{31}$ (5)
*l* represents an index value of an OFDM symbol in a slot; ${N}_{symb}^{slot}$ is a quantity of symbols included in a slot; ${n}_{s , f}^{μ}$ is a slot index in a system frame; ${\overline{n}}_{SCID}^{\overline{λ}}$ is an initialization parameter, and a value may be 0 or 1; ${N}_{ID}^{{\overline{n}}_{SCID}^{\overline{λ}}} ∈ \left\{0,1,…,65535\right\}$ may be configured by using higher layer signaling, is related to a cell identifier (identifier, ID), and may be generally equal to the cell ID; and *λ* represents a code division multiplexing (code division multiplexing, CDM) group (group) index corresponding to a DMRS port.

To reduce mutual interference, DMRS resources corresponding to a plurality of DMRS ports are usually mapped to a preset time-frequency resource in a frequency division multiplexing, time division multiplexing, or code division multiplexing manner. For example, a DMRS sequence corresponding to one DMRS port may be mapped to a corresponding time-frequency resource according to a preset time-frequency resource mapping rule. The following briefly describes a specific mapping rule with reference to several types of DMRSs.

### (1) Rel.15 Type 1/Type 2 DMRS

Currently, 5G NR supports two DMRS resource mapping types: a type 1 (Type 1, or referred to as a type 1) and a type 2 (Type 2, or referred to as a type 2). For the type 1 DMRS, a maximum of eight orthogonal ports are supported. For the type 2 DMRS, a maximum of 12 orthogonal ports are supported.

For an antenna port *p* (corresponding to a DMRS port *p*), an *m* ^{th} sequence element *r*(*m*) in a corresponding DMRS sequence may be mapped to an RE with an index (*k,l*)*_{p,µ}* according to a mapping rule. The mapping rule may satisfy formula (6). ${α}_{k , l}^{\left(p, μ\right)} = {β}_{PDSCH}^{DMRS} {w}_{f} \left(k′\right) {w}_{t} \left(l′\right) r \left(2n+k′\right)$ (6)

The RE with the index (*k,l*)*_{p,µ}* corresponds to an OFDM symbol with an index *l* in a slot in time domain, and corresponds to a subcarrier with an index *k* in frequency domain. ${α}_{k , l}^{\left(p, μ\right)}$ is a DMRS modulation symbol corresponding to a DMRS port *p* mapped to the RE with the index (*k,l*)*_{p,µ}* ; $k = \left\{\begin{matrix}4 n + 2 k ′ + Δ , type 1 \\ 6 n + k ′ + Δ , type 2\end{matrix}\right.$; *k'* = 0,1 ; *l = l̅ + l'*; *n*=0,1,...; *l' =* 0,1; Δ is a subcarrier offset factor; type1 and type2 respectively represent two DMRS configuration types (DMRS configuration type) defined in the current NR protocol; *µ* is a subcarrier spacing; *l̅* is an index of a start OFDM symbol or an index of a reference OFDM symbol occupied by the DMRS modulation symbol; ${β}_{PDSCH}^{DMRS}$ is a power scaling factor; *w_{f}(k')* is a *k'* ^{th} element in an FD-OCC sequence, and *wₜ*(*l*') is an *l*'^{th} element in a TD-OCC sequence; and *m = 2n + k' .*

For example, for the subcarrier with the index k in frequency domain, a start frequency domain position or a reference frequency domain position of the subcarrier with the index k may be a predefined frequency domain position, for example, may be a subcarrier 0 in a common resource block 0 (subcarrier 0 in common resource block 0) or a subcarrier 0 of the lowest-numbered resource block in a control resource set (control resource set, CORESET) 0 (subcarrier 0 of the lowest-numbered resource block in CORESET 0). Details are not described below again.

In the configuration type 1 (Type 1 DMRS) mapping rule, for values of *w_{f}(k'), wₜ(l'),* and Δ corresponding to the DMRS port *p*, refer to Table 1.

**Table 1 Type 1 DMRS parameter values**

| *p* | λ | Δ | *w_{f}(k')* | | *wₜ(l')* | |
|---|---|---|---|---|---|---|
| | | | *k'*=O | *k'*=1 | *l*'=0 | *l*'=1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

In the configuration type 2 (Type 2 DMRS) mapping rule, for values of *w_{f}(k'), wₜ*(*l*'), and Δ corresponding to the DMRS port *p*, refer to Table 2.

**Table 2 Type 2 DMRS parameter values**

| *P* | λ | Δ | *w_{f}(k')* | | *wₜ(l')* | |
|---|---|---|---|---|---|---|
| | | | *k*'=O | *k*'=1 | *l*'=0 | *l*'=1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

In Table 1 and Table 2, λ represents an index of a CDM group, and DMRS ports in a same CDM group occupy a same time-frequency resource.

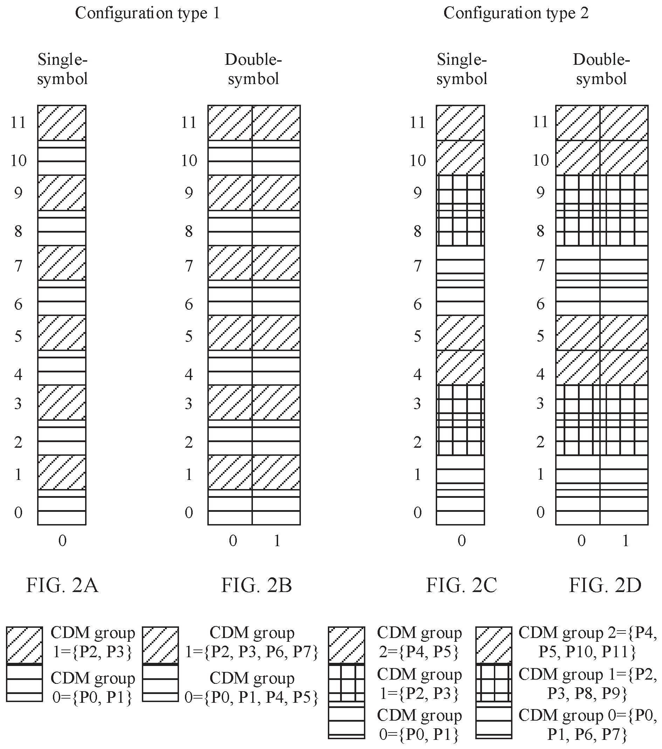

FIG. 2A to FIG. 2D are diagrams of DMRS patterns (pattern) of two configuration types.

A pattern may also be understood as a time-frequency resource mapping method. REs of different filling patterns in FIG. 2A to FIG. 2D correspond to different CDM groups. P0, P1, ..., and P11 represent a DMRS port 0 to a DMRS port 11. A horizontal axis represents time domain, and for example, a number on the horizontal axis represents an index of a symbol in a slot. A vertical axis represents frequency domain, and for example, a number on the vertical axis represents an index of a subcarrier in an RB. It should be understood that, in FIG. 2A to FIG. 2D, a symbol 0 occupied by a DMRS and the symbol 0 and a symbol 1 that are occupied by the DMRS are merely examples. A symbol occupied by the DMRS in a slot may alternatively be another symbol. For example, the symbol 1 is occupied, or the symbol 1 and a symbol 2 are occupied.

Refer to FIG. 2A. A single-symbol DMRS of a configuration type 1 supports a maximum of four orthogonal DMRS ports. The four DMRS ports are divided into two CDM groups (a CDM group 0 and a CDM group 1), and each CDM group supports a maximum of two orthogonal DMRS ports. The CDM group 0 includes P0 and P1, and the CDM group 1 includes P2 and P3. Frequency division multiplexing (frequency division multiplexing, FDM) is performed between the CDM groups (being mapped to different frequency domain resources). DMRS ports included in a CDM group are mapped to a same time domain resource (resource mapping is performed in a comb manner in frequency domain). Reference signals corresponding to the DMRS ports included in the CDM group are distinguished by using orthogonal cover codes (orthogonal cover codes, OCCs), to ensure orthogonality of the DMRS ports in the CDM group. This reduces interference between DMRSs transmitted on different antenna ports. Specifically, P0 and P1 are located in a same RE, and resource mapping is performed in a comb manner in frequency domain. For example, adjacent frequency domain resources occupied by P0 and P1 are separated by one subcarrier. For one DMRS port, two adjacent occupied REs correspond to one OCC codeword sequence of length 2. For example, for a subcarrier 0 and a subcarrier 2, a group of OCC codeword sequences (+1+1 and +1-1) of length 2 are used for P0 and P1. Similarly, P2 and P3 are located in a same RE, and are mapped, in a comb manner in frequency domain, to REs that are not occupied by P0 and P1. For a subcarrier 1 and a subcarrier 3, a group of OCC codeword sequences (+1+1 and +1-1) of length 2 are used for P2 and P3.

Refer to FIG. 2B. A double-symbol DMRS of the configuration type 1 supports a maximum of eight orthogonal DMRS ports. The eight DMRS ports may be divided into two CDM groups (a CDM group 0 and a CDM group 1). The CDM group 0 includes P0, P1, P4, and P5, and the CDM group 1 includes P2, P3, P6, and P7. Specifically, P0, P1, P4, and P5 are located in a same RE, and resource mapping is performed in a comb manner in frequency domain. For example, adjacent frequency domain resources occupied by P0, P1, P4, and P5 are separated by one subcarrier. Similarly, P2, P3, P6, and P7 are located in a same RE, and are mapped, in a comb manner in frequency domain, to subcarriers that are not occupied by P0, P1, P4, and P5. Two adjacent subcarriers and two OFDM symbols that are occupied by one DMRS port correspond to one OCC sequence of length 4 (which can be learned with reference to Table 1). For example, for a subcarrier 0 and a subcarrier 2 corresponding to an OFDM symbol 1 and an OFDM symbol 2, a group of OCC codes (+1+1+1+1/+1+1-1-1/+1-1+1-1/+1-1-1+1) of length 4 are used for the port 0, the port 1, the port 4, and the port 5. For another example, for a subcarrier 1 and a subcarrier 3 corresponding to the OFDM symbol 1 and the OFDM symbol 2, a group of OCC codes (+1+1+1+1/+1+1-1-1/+1-1+1-1/+1-1-1+1) of length 4 are used for P2, P3, P6, and P7.

FIG. 2C and FIG. 2D respectively correspond to time-frequency resource mapping manners of the single-symbol DMRS and the double-symbol DMRS of a configuration type 2. As shown in FIG. 2C, the single-symbol DMRS of the configuration type 2 supports a maximum of six orthogonal DMRS ports. The six DMRS ports belong to three CDM groups (a CDM group 0, a CDM group 1, and a CDM group 2). As shown in FIG. 2D, the double-symbol DMRS of the configuration type 2 supports a maximum of 12 orthogonal DMRS ports. The 12 DMRS ports belong to three CDM groups (a CDM group 0, a CDM group 1, and a CDM group 2). For brevity, descriptions of the CDM group of the DMRS of the configuration type 2 and a time-frequency resource occupied by each DMRS port are omitted herein.

### (2) Rel.18 eType 1/eType 2 DMRS

In the current NR protocol, when a network device configures an enhanced-type DMRS for a terminal device, for example, an eType 1 DMRS or an eType 2 DMRS, a quantity of DMRS ports may be further doubled without additionally increasing time-frequency resource overheads occupied by the DMRS. The eType 1 DMRS supports a maximum of 16 ports, and the eType 2 DMRS supports a maximum of 24 ports.

For an antenna port *p* (corresponding to a DMRS port *p*), an *m ^{th}* sequence element *r*(*m*) in a corresponding DMRS sequence may be mapped to an RE with an index (*k,l*)*_{p,µ}* according to a mapping rule. The mapping rule may satisfy formula (7). ${α}_{k , l}^{\left(p, μ\right)} = {β}_{PDSCH}^{DMRS} {w}_{f} \left(k′\right) {w}_{t} \left(l′\right) r \left(4n+k′\right)$ (7) $k = \left\{\begin{matrix}8 n + 2 k ′ + Δ & type 1 \\ 12 n + k ′ + Δ & type 2 , k ′ = 0 , 1 ; k ′ = 0 , 1 , 2 , 3 ; j = 0 , 1 , … , ν - 1 \\ 12 n + k ′ + Δ + 4 & type 2 , k ′ = 2 , 3\end{matrix}\right. ,$ v represents a quantity of spatial layers corresponding to a terminal device or a rank (rank) corresponding to the terminal device; and type1 and type2 represent DMRS configuration types (DMRS configuration type), that is, respectively represent eType 1 and eType 2. For other parameters, refer to related descriptions in formula 6. Details are not described herein again.

In the configuration type 1 (eType 1 DMRS) mapping rule, for values of *w_{f}*(*k'*), *wₜ*(*l'*)*,* and Δ corresponding to the DMRS port *p*, refer to Table 3.

**Table 3 eType 1 DMRS parameter values**

| *p* | *λ* | Δ | *w_{f}*(*k'*) | | | | *wₜ*(*l*') | |
|---|---|---|---|---|---|---|---|---|
| | | | *k'*=O | *k'=*1 | *k'*=2 | *k'*=3 | *l'*=0 | *l*'=1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | -1 | -1 |
| 1013 | 0 | 0 | +1 | -1 | -1 | +1 | -1 | -1 |
| 1014 | 1 | 1 | +1 | +1 | -1 | -1 | -1 | -1 |
| 1015 | 1 | 1 | +1 | -1 | -1 | +1 | -1 | -1 |

In the configuration type 2 (eType 2 DMRS) mapping rule, for values of *w_{f}*(*k'*)*, w_{f}*(*l'*), and Δ corresponding to the DMRS port *p*, refer to Table 4.

**Table 4 eType 2 DMRS parameter values**

| *p* | *λ* | Δ | *w_{f}(k')* | | | | w, *(l')* | |
|---|---|---|---|---|---|---|---|---|
| | | | *k'=O* | *k'*=1 | *k'*=O | *k'*=1 | *k'*=O | *k'*=1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

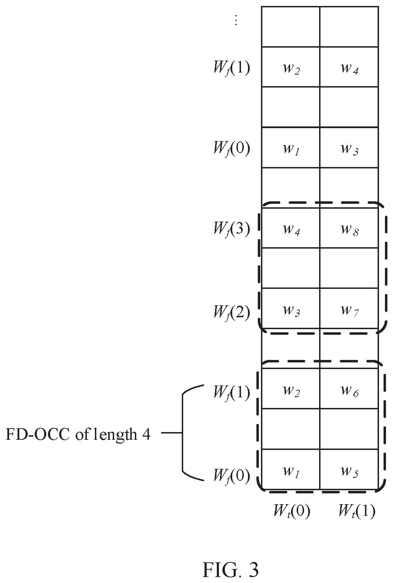

FIG. 3 is a diagram of time-frequency resource mapping of an eType 1 DMRS. The eType 1 DMRS includes a total of two CDM groups, each CDM group corresponds to eight DMRS ports, and corresponds to a frequency division orthogonal cover code (frequency division orthogonal cover code, FD-OCC) of length 4 and a time division orthogonal cover code (time division orthogonal cover code, TD-OCC) of length 2. The FD-OCC ${w}_{f}^{4} = \left[{w}_{f}\left(0\right),{w}_{f}\left(1\right),{w}_{f}\left(2\right),{w}_{f}\left(3\right)\right]$ of length 4 and the TD-OCC ${w}_{t}^{2} = \left[{w}_{t}\left(0\right),{w}_{t}\left(1\right)\right]$ of length 2 form an OCC code $\left({w}_{1},{w}_{2},…,{w}_{8}\right) = {w}_{t}^{2} ⊗ {w}_{f}^{4}$ of length 8 for code division multiplexing, and the OCC code is mapped to four subcarriers and two OFDM symbols. As shown in FIG. 3, a CDM group 0 is used as an example, and DMRS ports 0, 1, 4, 5, 8, 9, 12, and 13 occupy subcarriers with indexes 0, 2, 4, 6, 8, and 10 in one RB.

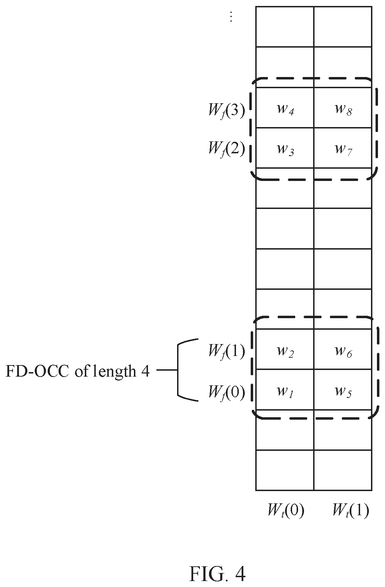

FIG. 4 is a diagram of time-frequency resource mapping of an eType 2 DMRS. The eType 2 DMRS includes a total of three CDM groups, and each CDM group corresponds to eight DMRS ports, and corresponds to an FD-OCC of length 4 and a TD-OCC of length 2. The FD-OCC ${w}_{f}^{4} = \left[{w}_{f}\left(0\right),{w}_{f}\left(1\right),{w}_{f}\left(2\right),{w}_{f}\left(3\right)\right]$ of length 4 and the TD-OCC ${w}_{t}^{2} = \left[{w}_{t}\left(0\right),{w}_{t}\left(1\right)\right]$ of length 2 form an OCC code $\left({w}_{1},{w}_{2},…,{w}_{8}\right) = {w}_{t}^{2} ⊗ {w}_{f}^{4}$ of length 8 for code division multiplexing, and the OCC code is mapped to four subcarriers and two OFDM symbols. As shown in FIG. 4, a CDM group 1 is used as an example, and DMRS ports 4, 5, 8, 9, 16, 17, 20, and 21 occupy subcarriers with indexes 2, 3, 8, and 9 in one RB.

The foregoing Type 1 DMRS, Type 2 DMRS, eType 1 DMRS, and eType 2 DMRS are merely simple examples for description, and do not limit the protection scope of embodiments of this application. For the Type 1 DMRS, Type 2 DMRS, eType 1 DMRS, and eType 2 DMRS, refer to related descriptions in an existing protocol or a future protocol.

In one aspect, the conventional technology hardly satisfies a future requirement for transmitting a large quantity of streams. Specifically, for the Type 1 or Type 2 DMRS, a maximum of 8 or 12 DMRS ports are supported. Even for the enhanced eType 1 or eType 2 DMRS, a maximum of 16 or 24 DMRS ports are supported. However, in a future-oriented ultra-large-scale antenna array, a quantity of antennas of a network device may reach 256 or even more, and a quantity of antennas of each terminal device may reach 8 or 16. A quantity of supported data streams may exceed 70, and a quantity of peak data streams may reach 100. Therefore, a quantity of DMRS ports needs to be further increased. For example, a maximum of 72 DMRS ports or even 96 DMRS ports need to be supported. Currently, a maximum of 24 DMRS ports are supported, and cannot satisfy the future requirement for transmitting a large quantity of streams.

In another aspect, direct extension in the conventional technology may cause an exponential increase in pilot overheads, and affect system performance. Specifically, a DMRS supported by the current NR protocol occupies overheads of a maximum of two OFDM symbols. In a manner of ensuring that existing DMRS time-frequency-code resource mapping remains unchanged, a direct manner of multiplying a quantity of supported DMRS ports is to increase a quantity of OFDM symbols occupied by the DMRS. For example, currently, a maximum of 24 DMRS ports are supported when the eType 2 DMRS occupies two OFDM symbols. If a quantity of OFDM symbols is increased to 4, 48 DMRS ports can be supported. However, a time-frequency resource of a system is limited, and a time-frequency resource available for a data channel is directly occupied when DMRS resource overheads are multiplied. Consequently, throughput performance of the system is directly affected. Even, a loss caused by DMRS overheads may be greater than a performance improvement caused by transmission of a large quantity of streams.

In view of this, this application provides a solution. A length of an FD-OCC is extended. For example, the length of the FD-OCC is extended to 8, 16, or another length. In this way, under limited time-frequency resource overheads, more DMRS ports can be multiplexed by code-division spreading, to satisfy a requirement for a larger quantity of DMRS ports and satisfy a requirement for transmitting a large quantity of streams.

Before the solutions of this application are described, the following descriptions are provided.
(1) In this application, an "indication" may include a direct indication, an indirect indication, an explicit indication, or an implicit indication. When a piece of indication information is described as indicating A, it may be understood that the indication information carries A, directly indicates A, or indirectly indicates A.
   In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periods and/or sending occasions of the sub-information may be the same or may be different.
(2) In this application, "sending" and "receiving" represent signal transfer directions. For example, "sending information to XX" may be understood as: A destination end of the information is XX, and may include direct sending through an air interface, or include indirect sending through an air interface by another unit or module. "Receiving information from YY" may be understood as: A source end of the information is YY, and may include direct receiving from YY through an air interface, or may include indirect receiving from YY via another unit or module through an air interface. "Sending" may also be understood as "outputting" of a chip interface, and "receiving" may also be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.
(3) In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.
(4) In this application, "first" and "second" are merely for ease of description, and are used to distinguish objects, but are not intended to limit the scope of embodiments of this application, and are not intended to describe an order or a sequence of features. It should be understood that objects described in such a way are interchangeable in an appropriate circumstance, so that a solution other than embodiments of this application can be described.

The following describes in detail the method provided in embodiments of this application with reference to the accompanying drawings. Embodiments provided in this application may be applied to the communication system shown in FIG. 1. This is not limited.

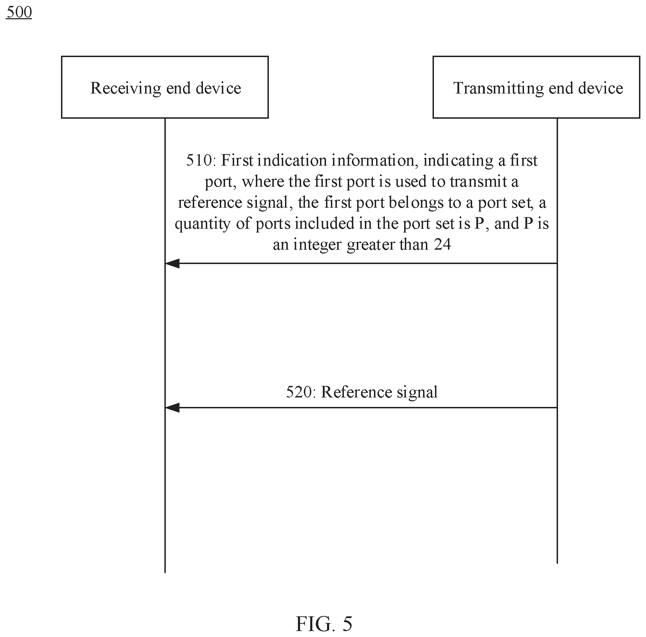

FIG. 5 is a diagram of a signal transmission method 500 according to an embodiment of this application. For ease of description, an example in which the method 500 is performed by a receiving end device (for example, a terminal device, and for another example, a network device) is used below for description. It may be understood that the method 500 may alternatively be performed by a component of the receiving end device, for example, a chip, a chip system, or a circuit. This is not limited herein. The steps described below as being performed by a single execution body may alternatively be performed by a plurality of execution bodies. These execution bodies may be logically and/or physically separated. The method 500 shown in FIG. 5 may include the following steps.

510: The receiving end device receives first indication information, where the first indication information indicates a first port, the first port is used to transmit a reference signal, the first port belongs to a port set, a quantity of ports included in the port set is P, and P is an integer greater than 24. Correspondingly, a transmitting end device sends the first indication information.

In an example, a value of P is 12*2ⁿ, and n is an integer greater than 2 or equal to 2. For example, the value of P is 48 or 96.

For example, the P ports are orthogonal. In other words, the port set includes P orthogonal ports. The P ports may also be referred to as P reference signal ports. Ports (that is, the P ports) in the port set may be optional ports or candidate ports.

That the ports are orthogonal, or the orthogonal ports means that time-frequency resources for port mapping are orthogonal, and/or sequences corresponding to the ports are orthogonal. That the time-frequency resources for port mapping are orthogonal may be that the time-frequency resources for port mapping are located on different frequency domain resources (for example, subcarriers, subcarrier groups, or frequency domain subbands), or are located on different time domain resources (for example, OFDM symbols or slots). That the sequences are orthogonal may be understood as: For a sequence A and a sequence B, a correlation coefficient between the sequences is 0. For example, a correlation coefficient between a sequence A = [*a*₀, *a*₁, *... , a_{N}*] and a sequence *B =* [*b*₀, *b*₁, *... , b_{N}*] is $ρ \left(A, B\right) = \frac{\left|{\sum }_{i = 1}^{n} {a}_{i} ⋅ {b}_{i} *\right|}{\sqrt{{\sum }_{i = 1}^{n} {\left|{a}_{i}\right|}^{2} \sqrt{{\sum }_{i = 1}^{n} {\left|{b}_{i}\right|}^{2}}}} = 0$ or $ρ \left(A, B\right) = \frac{\left|{AB}^{H}\right|}{\left|A\right| \left|B\right|} = 0$*.* |*A*| represents a modulus of the vector A. A superscript H represents conjugate transposition.

In a possible case, the transmitting end device is a network device, and the receiving end device is a terminal device. In this case, the reference signal is a downlink reference signal.

In another possible case, the transmitting end device is a terminal device, and the receiving end device is a network device. In this case, the reference signal is an uplink reference signal.

In another possible case, both the transmitting end device and the receiving end device are terminal devices. In this case, the reference signal is a sidelink reference signal.

It may be understood that specific forms of the receiving end device and the transmitting end device do not limit the protection scope of embodiments of this application.

For example, the reference signal is any one of the following: a DMRS, a CSI-RS, a PTRS, or a TRS. For ease of description, in this embodiment of this application, an example in which the reference signal is a DMRS (for example, an uplink DMRS, or for another example, a downlink DMRS) is mainly used for description. It may be understood that the DMRS in the following may be replaced with another reference signal.

520: The receiving end device receives the reference signal based on the first indication information. Correspondingly, the transmitting end device sends the reference signal.

Specifically, the receiving end device learns of the first port based on the first indication information, and then receives the reference signal on the first port.

Optionally, the first port corresponds to an OCC sequence of length N, and N is an integer greater than 16 or equal to 16. For example, N is any one of the following: 16, 32, or 48.

As described above, the first port is one port in the port set, and the port set includes the P ports. For example, each of the P ports corresponds to one OCC sequence of length N. That is, the P ports correspond to a total of P OCC sequence of length N.

Optionally, the first port corresponds to an FD-OCC sequence of length L and/or a TD-OCC sequence of length T, where L is an integer greater than 8 or equal to 8, and T is an integer greater than 1 or equal to 1. For example, L is any one of the following: 8, 16, or 24. For example, T is 1 or 2.

### Example 1: L=8.

In a possible case, the FD-OCC sequence of length 8 corresponding to the first port is any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 -1 -1], [+1 -1 +1 -1 -1 +1 -1 +1], [+1 +1 -1 -1 -1 -1 +1 +1], or [+1 -1 -1 +1 -1 +1 +1 -1].

In another possible case, the FD-OCC sequence of length 8 corresponding to the first port is $\left[1 {e}^{\frac{j 2 πm}{8}} … {e}^{\frac{j 2 πm ⋅ 7}{8}}\right]$ or $\left[1 {e}^{- \frac{j 2 πm}{8}} … {e}^{- \frac{j 2 πm ⋅ 7}{8}}\right]$, where j represents an imaginary unit, and a value of m is any one of the following: 0, 1, 2, 3, 4, 5, 6, or 7. j represents an imaginary unit, that is, j*j=-1 (that is, j²=-1).

In another possible case, the FD-OCC sequence of length 8 corresponding to the first port is any one of the following: [+1 +1 +1 +1 +1 +1 +1 +1], [+1 -1 +1 -1 +1 -1 +1 -1], [+1 +1 - j -j -1 -1 j j], [+1 -1 -j j -1 +1 j -j], [+1 +1 -1 -1 +1 +1 -1 -1], [+1 -1 -1 +1 +1 -1 -1 +1], [+1 +1 j j -1 -1 -j -j], or [+1 -1 j -j -1 +1 -j j]. Specifically, the FD-OCC sequence may be a row vector or a column vector in a matrix C, where the matrix C=A⊗B. The matrix A is a DFT matrix with a length of 4, and an element in an i^{th} row and a j^{th} column is $a \left(i, j\right) = {e}^{- \frac{j 2 πi ⋅ j}{4}}$*,* where i=0, 1, ..., 3, and j=0, 1, ..., 3. The matrix B is a DFT matrix with a length of 2, and $B = \left[\begin{matrix}1 & 1 \\ 1 & - 1\end{matrix}\right]$. ⊗ indicates a Kronecker product (Kronecker product).

In another possible case, the FD-OCC sequence of length 8 corresponding to the first port is any one of the following: [+1 +1 +1 +1 +1 +1 +1 +1], [+1 -j -1 j +1 -j -1 j], [+1 -1 +1 -1 +1 -1 +1 -1], [+1 j -1 -j +1 j -1 -j], [+1 +1 +1 +1 -1 -1 -1 -1], [+1 -j -1 j -1 j +1 -j], [+1 -1 +1 -1 -1 +1 -1 +1], or [+1 j -1 -j -1 -j +1 j]. Specifically, the FD-OCC sequence may be a row vector or a column vector in a matrix C, where the matrix C=B⊗A. For the matrix A and the matrix B, refer to the foregoing related descriptions. Details are not described herein again.

### Example 2: L=16.

In a possible case, the FD-OCC sequence of length 16 corresponding to the first port is any one of the following:

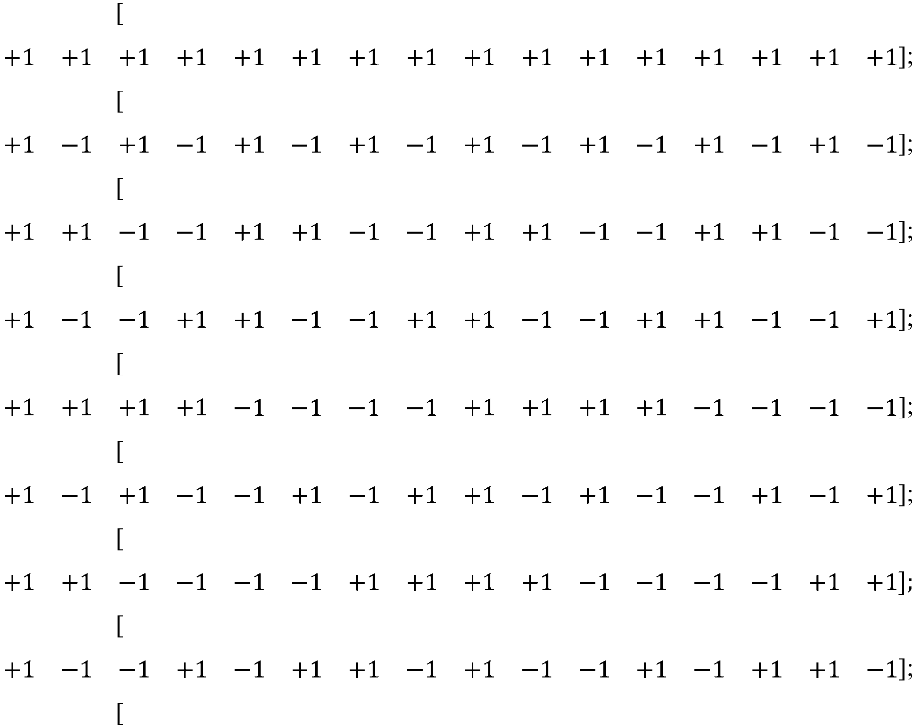

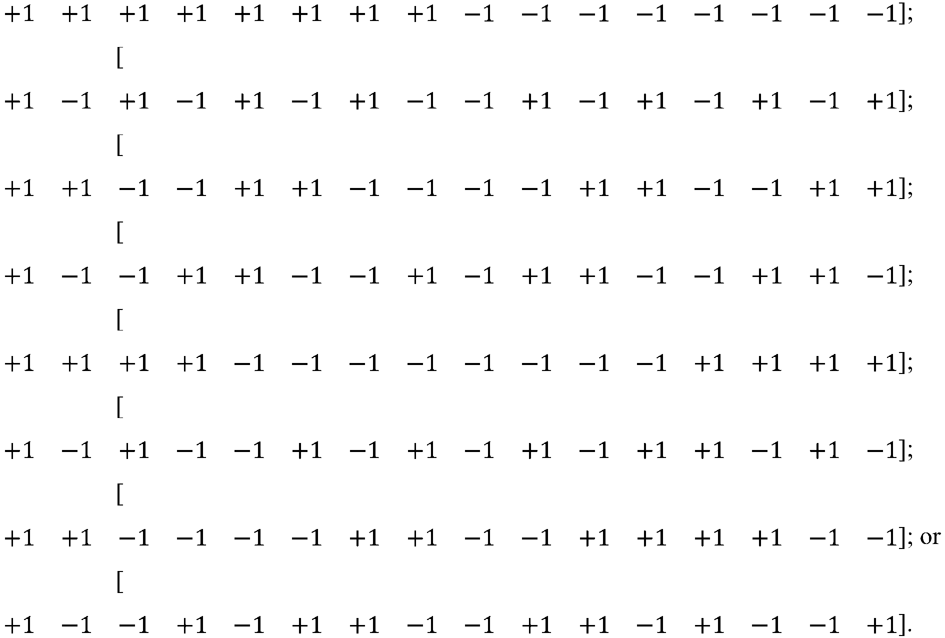

In another possible case, the FD-OCC sequence of length 16 corresponding to the first port is $\left[1 {e}^{\frac{j 2 πm}{16}} … {e}^{\frac{j 2 πm ⋅ 15}{16}}\right]$ or $\left[1 {e}^{- \frac{j 2 πm}{16}} … {e}^{- \frac{j 2 πm ⋅ 15}{16}}\right]$, where j represents an imaginary unit, a value of m is any one of the following: 0, 1, 2, 3, 4, 5, 6,7, 8, 9, 10, 11, 12, 13, 14, or 15, and j represents an imaginary part, that is, j*j=-1.

In another possible case, the FD-OCC sequence of length 16 corresponding to the first port is:

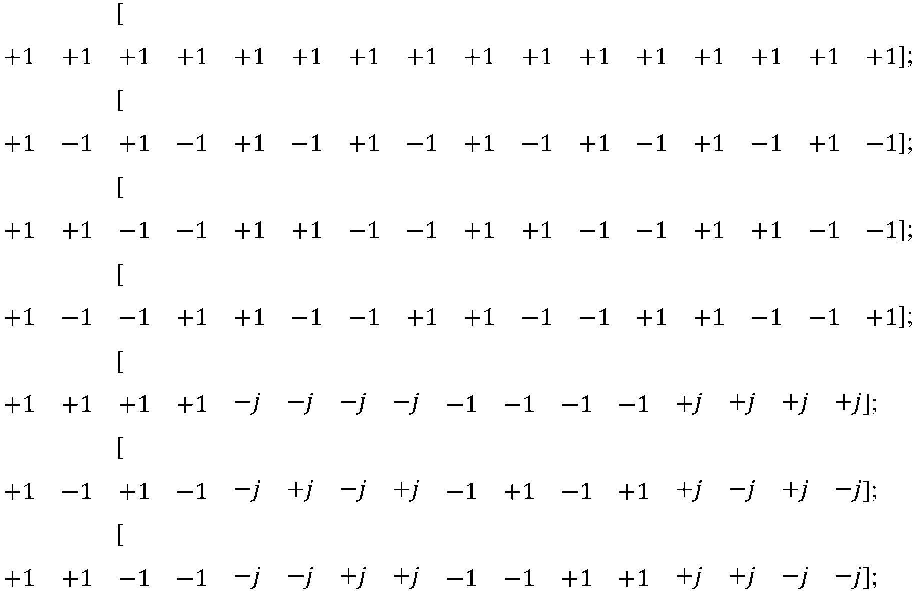

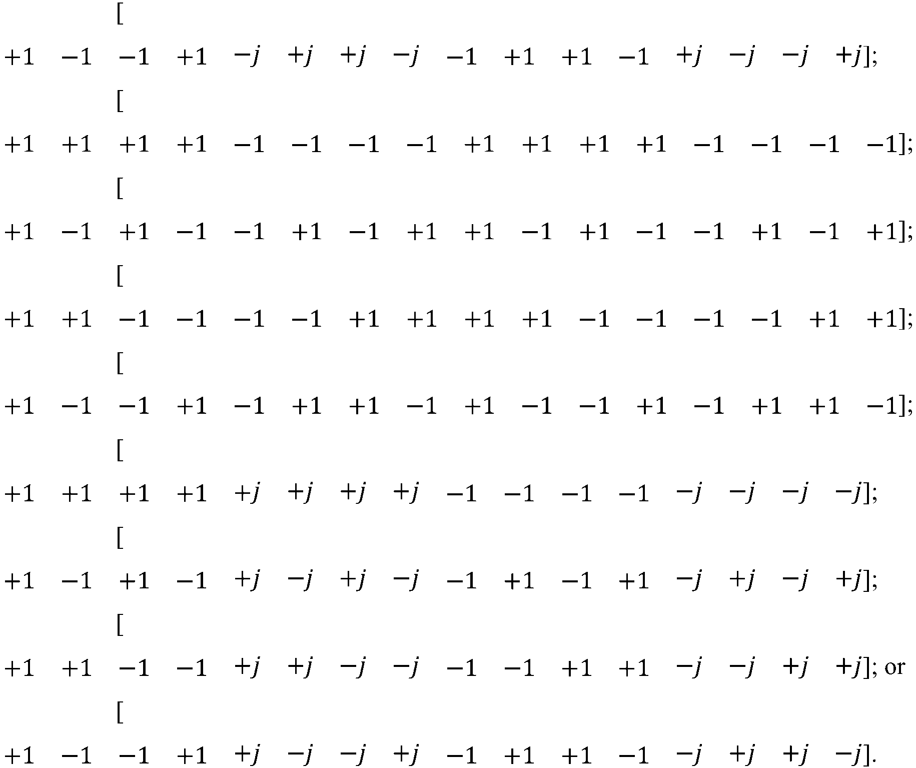

Specifically, the FD-OCC sequence may be a row vector or a column vector in a matrix C, where the matrix C=A⊗B. The matrix A is a DFT matrix with a length of 4, and an element in an i^{th} row and a j^{th} column is $a \left(i, j\right) = {e}^{- \frac{j 2 πi ⋅ j}{4}}$, where i=0, 1 , ..., 3, and j=0, 1, ..., 3. The matrix B is a DFT matrix with a length of 2, and $B = \left[\begin{matrix}1 & 1 & 1 & 1 \\ 1 & - 1 & 1 & - 1 \\ 1 & 1 & - 1 & - 1 \\ 1 & - 1 & - 1 & 1\end{matrix}\right]$. ⊗ indicates a Kronecker product.

In another possible case, the FD-OCC sequence of length 16 corresponding to the first port is:

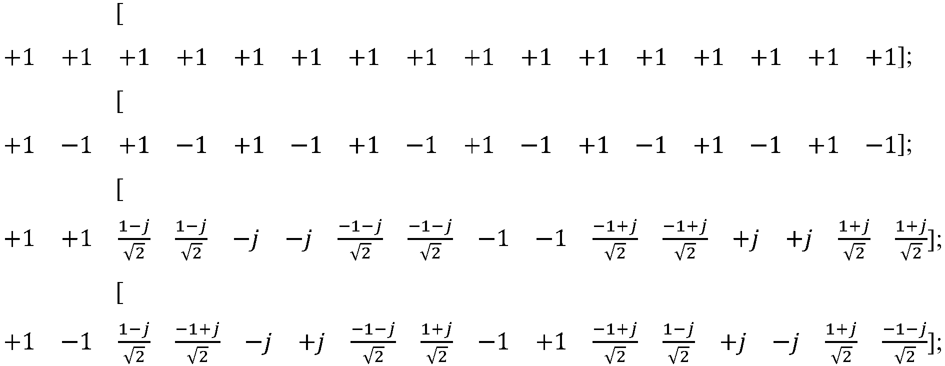

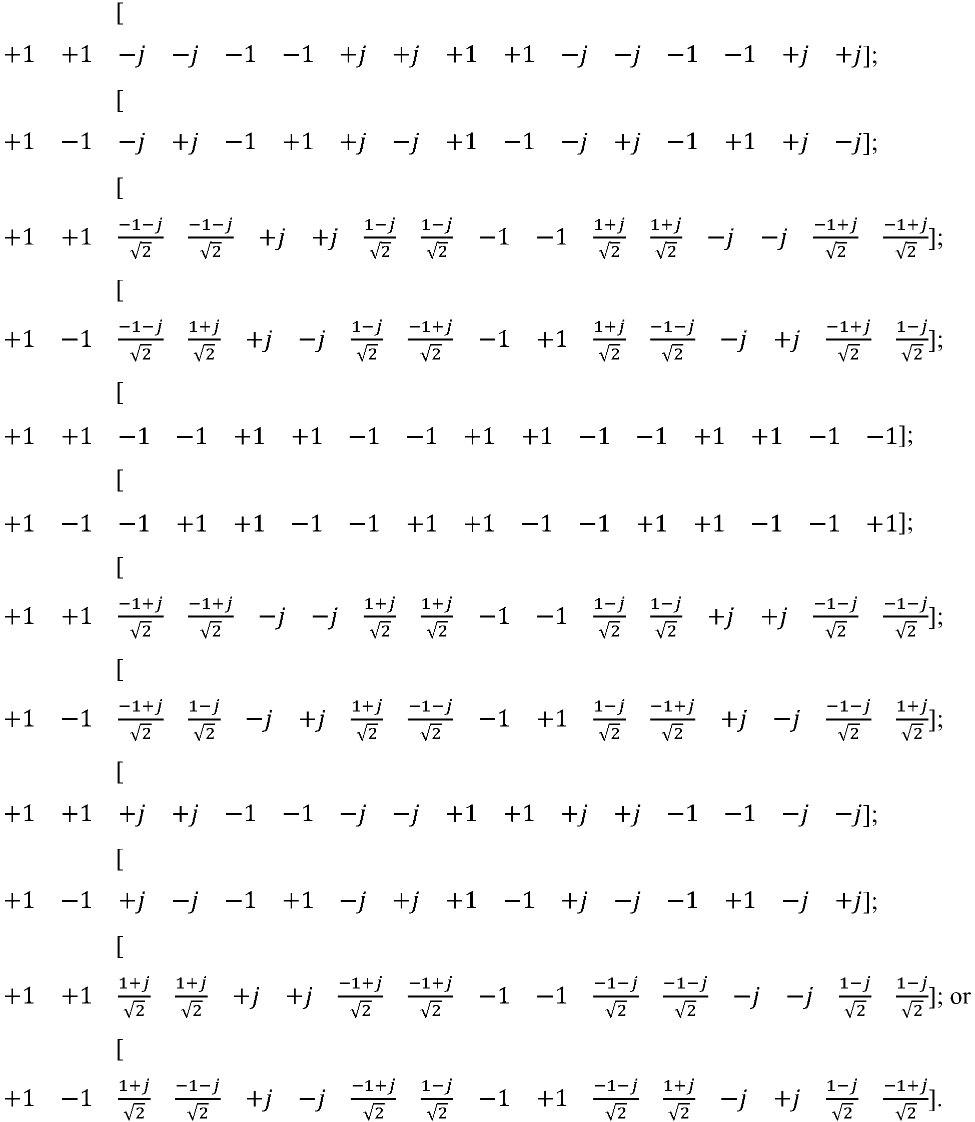

Specifically, the FD-OCC sequence may be a row vector or a column vector in a matrix C, where the matrix C=A⊗B. The matrix A is a DFT matrix with a length of 8, and an element in an i^{th} row and a j^{th} column is $a \left(i, j\right) = {e}^{- \frac{j 2 πi ⋅ j}{8}}$, where i=0, 1, ..., 7, and j=0, 1, ..., 7. The matrix B is a DFT matrix with a length of 2, and $B = \left[\begin{matrix}1 & 1 \\ 1 & - 1\end{matrix}\right]$.

The FD-OCC sequence of length L is described as an example, and is not limited herein. For example, the FD-OCC sequence of length L may be obtained by taking a Kronecker product of an FD-OCC sequence of length L1 and an FD-OCC sequence of length L2, where L1*L2=L. For example, the FD-OCC sequence of length L1 may be a Walsh sequence or a DFT sequence. For example, the FD-OCC sequence of length L2 may be a Walsh sequence or a DFT sequence.

Example 3: T=2. In this case, for example, the TD-OCC sequence of length 2 corresponding to the first port is any one of the following: [+1 +1] or [+1 -1].

As described above, the first port is one port in the port set, and the port set includes the P ports. For example, each of the P ports corresponds to an FD-OCC sequence of length L and/or a TD-OCC sequence of length T. That is, the P ports correspond to a total of P FD-OCC sequences of length L, and the P ports correspond to a total of P TD-OCC sequences of length T.

In a possible case, P=48. That is, 48 ports correspond to a total of 48 FD-OCC sequences of length L and/or 48 TD-OCC sequences of length T.

It is assumed that L=8. For the 48 FD-OCC sequences of length 8, refer to the 4^{th} column in Table 5 or Table 6 below. Specifically, an FD-OCC sequence of length 8 may be represented as [*w_{f}*(0)*, w_{f}*(1), ..., *w_{f}*(7)], and FD-OCC sequences of length 8 corresponding to different ports in the 48 ports may be determined by using Table 5 or Table 6. For example, an FD-OCC sequence of length 8 corresponding to a port 0 (or represented as a port 1000) is [+1 +1 +1 +1 +1 +1 +1 +1]. For another example, an FD-OCC sequence of length 8 corresponding to a port 1 (or represented as a port 1001) is [+1 -1 +1 -1 +1 -1 +1 -1]. Details are not described herein again. For details, refer to Table 5 or Table 6.

It is assumed that T=2. For the 48 TD-OCC sequences of length 2, refer to the 5^{th} column in Table 5 or Table 6 below. Specifically, a TD-OCC sequence of length 2 may be represented as [*wₜ*(0)*, wₜ*(1))]*,* and TD-OCC sequences of length 2 corresponding to different ports in the 48 ports may be determined by using Table 5 or Table 6. For example, a TD-OCC sequence of length 2 corresponding to a port 0 (or represented as a port 1000) is [+1 +1]. For another example, a TD-OCC sequence of length 2 corresponding to a port 24 (or represented as a port 1024) is [+1 -1]. Details are not described herein again. For details, refer to Table 5 or Table 6.

It may be understood that Table 5 or Table 6 is an example for description, and this is not limited herein. Any variation of Table 5 or Table 6 is applicable to this embodiment of this application. For example, a correspondence between a port and an FD-OCC sequence or a TD-OCC sequence in Table 5 or Table 6 may also be in another form. For example, an FD-OCC sequence of length 8 corresponding to a port 0 may be interchanged with an FD-OCC sequence of length 8 corresponding to a port 1. That is, an FD-OCC sequence of length 8 corresponding to a port 1 is [+1 +1 +1 +1 +1 +1 +1 +1], and an FD-OCC sequence of length 8 corresponding to a port 0 is [+1 -1 +1 -1 +1 -1 +1 -1].

In another possible case, P=96. That is, 96 ports correspond to a total of 96 FD-OCC sequences of length L and/or 96 TD-OCC sequences of length T.

It is assumed that L=16. For the 96 FD-OCC sequences of length 16, refer to the 4^{th} column in Table 7 or Table 8 below. Specifically, an FD-OCC sequence of length 16 may be represented as [*w_{f}*(0)*, w_{f}*(1)*, ...,w_{f}*(15)], and FD-OCC sequences of length 16 corresponding to different ports in the 96 ports may be determined by using Table 7 or Table 8. For example, an FD-OCC sequence of length 16 corresponding to a port 0 (or represented as a port 1000) is [+1 +1 +1 +1 +1 +1 +1 +1 +1 +1 +1 +1 +1 +1 +1 +1] . For another example, an FD-OCC sequence of length 16 corresponding to a port 1 (or represented as a port 1001) is [+1 -1 +1 -1 +1 -1 +1 -1 +1 -1 +1 -1 +1 -1 +1 -1]. Details are not described herein again. For details, refer to Table 7 or Table 8.

It is assumed that T=2. For the 96 TD-OCC sequences of length 2, refer to the 5^{th} column in Table 7 or Table 8 below. Specifically, a TD-OCC sequence of length 2 may be represented as [*wₜ*(0), *wₜ*(1))]*,* and TD-OCC sequences of length 2 corresponding to different ports in the 96 ports may be determined by using Table 7 or Table 8. For example, a TD-OCC sequence of length 2 corresponding to a port 0 (or represented as a port 1000) is [+1 +1]. For another example, a TD-OCC sequence of length 2 corresponding to a port 48 (or represented as a port 1048) is [+1 -1]. Details are not described herein again. For details, refer to Table 7 or Table 8.

It may be understood that Table 7 or Table 8 is an example for description, and this is not limited herein. Any variation of Table 7 or Table 8 is applicable to this embodiment of this application. For example, a correspondence between a port and an FD-OCC sequence or a TD-OCC sequence in Table 7 or Table 8 may also be in another form. For example, an FD-OCC sequence of length 16 corresponding to the port 0 may be interchanged with an FD-OCC sequence of length 16 corresponding to the port 1.

Optionally, the reference signal (for example, a DMRS) is mapped to a time-frequency resource according to a mapping rule. The mapping rule is related to at least one of the following parameters: a subcarrier spacing parameter, an index of a resource element, a symbol of the reference signal, an index of a start time domain position, a power scaling factor, a time domain cover code element, a frequency domain cover code element, a subcarrier offset factor, and a port index of the reference signal.

For example, the index of the resource element includes an index of a time domain resource (for example, a symbol) and/or an index of a frequency domain resource (for example, a subcarrier).

The symbol of the reference signal may also be referred to as a modulation symbol of the reference signal or a sending symbol of the reference signal.

The following provides descriptions with reference to two cases.

In a first possible case, P=48. That is, a maximum of 48 DMRS ports are supported.

For example, the 48 DMRS ports may be divided into three CDM groups. Each CDM group may include a same quantity of DMRS ports.

In this case, for the DMRS port *pⱼ*, an *m*^{th} sequence element in a corresponding DMRS sequence *r*(*m*) may be mapped to a time-frequency resource according to a mapping rule, for example, mapped to an RE with an index (*k,l*)*_{p,µ}.* The mapping rule may satisfy formula (8). ${α}_{k , l}^{\left(p, μ\right)} = {β}_{PDSCH}^{DMRS} {w}_{f} \left(k′\right) {w}_{t} \left(l′\right) r \left(8n+k′\right)$ (8)

The following describes meanings of parameters in formula (8).

For example, *k* satisfies any one of the following: $k = \left\{\begin{matrix}24 n + k ′ + Δ & k ′ = 0 , 1 , 2 , 3 \\ 24 n + k ′ + Δ + 8 & k ′ = 4 , 5 , 6 , 7\end{matrix}\right.$ ; or $k = \left\{\begin{matrix}24 n + k ′ + Δ & k ′ = 0 , 1 \\ 24 n + k ′ + Δ + 4 & k ′ = 2 , 3 \\ 24 n + k ′ + Δ + 8 & k ′ = 4 , 5 \\ 24 n + k ′ + Δ + 12 & k ′ = 6 , 7\end{matrix}\right.$*.*
*k'* = 0,1,2,3,4,5,6,7; *j* = 0,1,...,*v* -1, *v* represents a quantity of spatial layers corresponding to a terminal device, or represents a rank corresponding to the terminal device; an RE with an index (*k, l*)*_{p,µ}* corresponds to an OFDM symbol with an index *l* in a slot in time domain, and corresponds to a subcarrier with an index *k* in frequency domain; ${α}_{k , l}^{\left(p, μ\right)}$ is a DMRS modulation symbol that corresponds to the DMRS port *pⱼ* and that is mapped to the RE with an index (*k*,*l*)*_{p,µ}* ; *µ* is a subcarrier spacing; *l̅* is an index of a start OFDM symbol or an index of a reference OFDM symbol occupied by the DMRS modulation symbol; ${β}_{PDSCH}^{DMRS}$ is the power scaling factor; *w_{f}*(*k'*) is a *k'*^{th} element in an FD-OCC sequence, *wₜ*(*l*') is an *l*'^{th} element in a TD-OCC sequence; *m =* 2*n + k'* ; and A is the subcarrier offset factor. It may be understood that formula (8) is an example for description, and is not limited herein. For example, "8" in formula (8) may also be replaced with another value. For example, for the subcarrier with an index k in frequency domain, a start frequency domain position or a reference frequency domain position of the subcarrier with an index k may be a predefined frequency domain position, for example, may be a subcarrier 0 in common resource block 0 or a subcarrier 0 of the lowest-numbered resource block in CORESET 0. Details are not described below again. Details are not described below again.

Values of *w_{f}*(*k'*), *wₜ*(*l*'), and Δ corresponding to the DMRS port *pⱼ* may exist in a form of a table, a function, text, or a character string, for example, for storage or transmission. Table 5 and Table 6 are examples of presenting the values of the foregoing parameters in a form of a table.

**Table 5 DMRS parameter values**

| P | λ | Δ | [*w_{f}*(0) ... *w_{f}*(7)] | **[***wₜ*(0) *wₜ*(1)] |
|---|---|---|---|---|
| 0 | 0 | 0 | [+1 +1 +1 +1 +1 +1 +1 +1] | [+1 +1] |
| 1 | 0 | 0 | [+1 -1 +1 -1 +1 -1 +1 -1] | [+1 +1] |
| 2 | 0 | 0 | [+1 +1 -1 -1 +1 +1 -1 -1] | [+1 +1] |
| 3 | 0 | 0 | [+1 -1 -1 +1 +1 -1 -1 +1] | [+1 +1] |
| 4 | 0 | 0 | [+1 +1 +1 +1 -1 -1 -1 -1] | [+1 +1] |
| 5 | 0 | 0 | [+1 -1 +1 -1 -1 +1 -1 +1] | [+1 +1] |
| 6 | 0 | 0 | [+1 +1 -1 -1 -1 -1 +1 +1] | [+1 +1] |
| 7 | 0 | 0 | [+1 -1 -1 +1 -1 +1 +1 -1] | [+1 +1] |
| 8 | 1 | 4 | [+1 +1 +1 +1 +1 +1 +1 +1] | [+1 +1] |
| 9 | 1 | 4 | [+1 -1 +1 -1 +1 -1 +1 -1] | [+1 +1] |
| 10 | 1 | 4 | [+1 +1 -1 -1 +1 +1 -1 -1] | [+1 +1] |
| 11 | 1 | 4 | [+1 -1 -1 +1 +1 -1 -1 +1] | [+1 +1] |
| 12 | 1 | 4 | [+1 +1 +1 +1 -1 -1 -1 -1] | [+1 +1] |
| 13 | 1 | 4 | [+1 -1 +1 -1 -1 +1 -1 +1] | [+1 +1] |
| 14 | 1 | 4 | [+1 +1 -1 -1 -1 -1 +1 +1] | [+1 +1] |
| 15 | 1 | 4 | [+1 -1 -1 +1 -1 +1 +1 -1] | [+1 +1] |
| 16 | 2 | 8 | [+1 +1 +1 +1 +1 +1 +1 +1] | [+1 +1] |
| 17 | 2 | 8 | [+1 -1 +1 -1 +1 -1 +1 -1] | [+1 +1] |
| 18 | 2 | 8 | [+1 +1 -1 -1 +1 +1 -1 -1] | [+1 +1] |
| 19 | 2 | 8 | [+1 -1 -1 +1 +1 -1 -1 +1] | [+1 +1] |
| 20 | 2 | 8 | [+1 +1 +1 +1 -1 -1 -1 -1] | [+1 +1] |
| 21 | 2 | 8 | [+1 -1 +1 -1 -1 +1 -1 +1] | [+1 +1] |
| 22 | 2 | 8 | [+1 +1 -1 -1 -1 -1 +1 +1] | [+1 +1] |
| 23 | 2 | 8 | [+1 -1 -1 +1 -1 +1 +1 -1] | [+1 +1] |
| 24 | 0 | 0 | [+1 +1 +1 +1 +1 +1 +1 +1] | [+1 -1] |
| 25 | 0 | 0 | [+1 -1 +1 -1 +1 -1 +1 -1] | [+1 -1] |
| 26 | 0 | 0 | [+1 +1 -1 -1 +1 +1 -1 -1] | [+1 -1] |
| 27 | 0 | 0 | [+1 -1 -1 +1 +1 -1 -1 +1] | [+1 -1] |
| 28 | 0 | 0 | [+1 +1 +1 +1 -1 -1 -1 -1] | [+1 -1] |
| 29 | 0 | 0 | [+1 -1 +1 -1 -1 +1 -1 +1] | [+1 -1] |
| 30 | 0 | 0 | [+1 +1 -1 -1 -1 -1 +1 +1] | [+1 -1] |
| 31 | 0 | 0 | [+1 -1 -1 +1 -1 +1 +1 -1] | [+1 -1] |
| 32 | 1 | 4 | [+1 +1 +1 +1 +1 +1 +1 +1] | [+1 -1] |
| 33 | 1 | 4 | [+1 -1 +1 -1 +1 -1 +1 -1] | [+1 -1] |
| 34 | 1 | 4 | [+1 +1 -1 -1 +1 +1 -1 -1] | [+1 -1] |
| 35 | 1 | 4 | [+1 -1 -1 +1 +1 -1 -1 +1] | [+1 -1] |
| 36 | 1 | 4 | [+1 +1 +1 +1 -1 -1 -1 -1] | [+1 -1] |
| 37 | 1 | 4 | [+1 -1 +1 -1 -1 +1 -1 +1] | [+1 -1] |
| 38 | 1 | 4 | [+1 +1 -1 -1 -1 -1 +1 +1] | [+1 -1] |
| 39 | 1 | 4 | [+1 -1 -1 +1 -1 +1 +1 -1] | [+1 -1] |
| 40 | 2 | 8 | [+1 +1 +1 +1 +1 +1 +1 +1] | [+1 -1] |
| 41 | 2 | 8 | [+1 -1 +1 -1 +1 -1 +1 -1] | [+1 -1] |
| 42 | 2 | 8 | [+1 +1 -1 -1 +1 +1 -1 -1] | [+1 -1] |
| 43 | 2 | 8 | [+1 -1 -1 +1 +1 -1 -1 +1] | [+1 -1] |
| 44 | 2 | 8 | [+1 +1 +1 +1 -1 -1 -1 -1] | [+1 -1] |
| 45 | 2 | 8 | [+1 -1 +1 -1 -1 +1 -1 +1] | [+1 -1] |
| 46 | 2 | 8 | [+1 +1 -1 -1 -1 -1 +1 +1] | [+1 -1] |
| 47 | 2 | 8 | [+1 -1 -1 +1 -1 +1 +1 -1] | [+1 -1] |

**Table 6 DMRS parameter values**

| P | λ | Δ | [*w_{f}*(0) ... *w_{f}*(7)] | [*wₜ*(0) *wₜ*(1)] |
|---|---|---|---|---|
| 0 | 0 | 0 | [+1 +1 +1 +1 +1 +1 +1 +1] | [+1 +1] |
| 1 | 0 | 0 | [+1 -1 +1 -1 +1 -1 +1 -1] | [+1 +1] |
| 2 | 0 | 0 | [+1 +1 *-j -j* -1 -1 *+j +j*] | [+1 +1] |
| 3 | 0 | 0 | [+1 *-* 1 *- j + j -* 1 *+* 1 *+ j - j*] | [+1 +1] |
| 4 | 0 | 0 | [+1 +1 -1 -1 +1 +1 -1 -1] | [+1 +1] |
| 5 | 0 | 0 | [+1 -1 -1 +1 +1 -1 -1 +1] | [+1 +1] |
| 6 | 0 | 0 | [+1 + 1 +*j + j -* 1 - 1 *- j - j*] | [+1 +1] |
| 7 | 0 | 0 | [*+*1 *-* 1 *+ j - j -* 1 *+* 1 *- j + j*] | [+1 +1] |
| 8 | 1 | 4 | [+1 +1 +1 +1 +1 +1 +1 +1] | [+1 +1] |
| 9 | 1 | 4 | [+1 -1 +1 -1 +1 -1 +1 -1] | [+1 +1] |
| 10 | 1 | 4 | [*+*1 *+* 1 *- j - j -* 1 *-* 1 *+ j + j*] | [+1 +1] |
| 11 | 1 | 4 | [+1 *-*1 *- j + j -* 1 *+* 1 *+ j - j*] | [+1 +1] |
| 12 | 1 | 4 | [+1 +1 -1 -1 +1 +1 -1 -1] | [+1 +1] |
| 13 | 1 | 4 | [+1 -1 -1 +1 +1 -1 -1 +1] | [+1 +1] |
| 14 | 1 | 4 | [+1 + 1 +*j + j -* 1 - 1 *- j - j*] | [+1 +1] |
| 15 | 1 | 4 | [+1*-* 1 *+ j - j -* 1 *+* 1 *- j + j*] | [+1 +1] |
| 16 | 2 | 8 | [+1 +1 +1 +1 +1 +1 +1 +1] | [+1 +1] |
| 17 | 2 | 8 | [+1 -1 +1 -1 +1 -1 +1 -1] | [+1 +1] |
| 18 | 2 | 8 | [*+*1 *+* 1 *- j - j -* 1 *-* 1 *+ j + j*] | [+1 +1] |
| 19 | 2 | 8 | [+1 *-* 1 *- j + j -* 1 *+* 1 *+ j - j*] | [+1 +1] |
| 20 | 2 | 8 | [+1 +1 -1 -1 +1 +1 -1 -1] | [+1 +1] |
| 21 | 2 | 8 | [+1 -1 -1 +1 +1 -1 -1 +1] | [+1 +1] |
| 22 | 2 | 8 | [+1 + 1 +*j + j -* 1 - 1 *- j - j*] | [+1 +1] |
| 23 | 2 | 8 | [*+*1 *-* 1 *+ j - j -* 1 *+* 1 *- j + j*] | [+1 +1] |
| 24 | 0 | 0 | [+1 +1 +1 +1 +1 +1 +1 +1] | [+1 -1] |
| 25 | 0 | 0 | [+1 -1 +1 -1 +1 -1 +1 -1] | [+1 -1] |
| 26 | 0 | 0 | [+1*+* 1 *- j - j -* 1 *-* 1 *+ j + j*] | [+1 -1] |
| 27 | 0 | 0 | [+1 *-* 1*- j + j -* 1 *+* 1 *+ j - j*] | [+1 -1] |
| 28 | 0 | 0 | [+1 +1 -1 -1 +1 +1 -1 -1] | [+1 -1] |
| 29 | 0 | 0 | [+1 -1 -1 +1 +1 -1 -1 +1] | [+1 -1] |
| 30 | 0 | 0 | [+1 + 1 +*j + j -* 1 - 1 *- j - j*] | [+1 -1] |
| 31 | 0 | 0 | [*+*1 *-* 1 *+ j - j -* 1 *+* 1 *- j + j*] | [+1 -1] |
| 32 | 1 | 4 | [+1 +1 +1 +1 +1 +1 +1 +1] | [+1 -1] |
| 33 | 1 | 4 | [+1 -1 +1 -1 +1 -1 +1 -1] | [+1 -1] |
| 34 | 1 | 4 | [+1 + 1 +*j + j -* 1 - 1 *- j - j*] | [+1 -1] |
| 35 | 1 | 4 | [+1 *-*1 *- j + j -* 1 *+* 1 *+ j - j*] | [+1 -1] |
| 36 | 1 | 4 | [+1 +1 -1 -1 +1 +1 -1 -1] | [+1 -1] |
| 37 | 1 | 4 | [+1 -1 -1 +1 +1 -1 -1 +1] | [+1 -1] |
| 38 | 1 | 4 | [+1 + 1 +*j + j -* 1 - 1 *- j - j*] | [+1 -1] |
| 39 | 1 | 4 | [*+*1 *-* 1 *+ j - j -* 1 *+* 1 *- j + j*] | [+1 -1] |
| 40 | 2 | 8 | [+1 +1 +1 +1 +1 +1 +1 +1] | [+1 -1] |
| 41 | 2 | 8 | [+1 -1 +1 -1 +1 -1 +1 -1] | [+1 -1] |
| 42 | 2 | 8 | [*+*1 + 1 *- j - j* - 1 - 1 *+ j + j*] | [+1 -1] |
| 43 | 2 | 8 | [+1 - 1 - *j* + *j* -1 + 1 *+j - j*] | [+1 -1] |
| 44 | 2 | 8 | [+1 +1 -1 -1 +1 +1 -1 -1] | [+1 -1] |
| 45 | 2 | 8 | [+1 -1 -1 +1 +1 -1 -1 +1] | [+1 -1] |
| 46 | 2 | 8 | [+1 + 1 +*j + j -* 1 - 1 *- j - j*] | [+1 -1] |
| 47 | 2 | 8 | [*+*1 *-* 1 *+ j - j -* 1 *+* 1 *- j + j*] | [+1 -1] |

For example, it is assumed that the port set includes 48 ports. For a port (for example, the first port) in the 48 ports, values of *w_{f}*(*k'*), *wₜ*(*l*'), and Δ corresponding to the port may be determined based on an index of the port and Table 5 or Table 6, so that an element in a DMRS sequence on the port can be mapped to a corresponding time-frequency resource according to formula (8), and can be sent.

It may be understood that all the foregoing listed sequences (for example, an FD-OCC sequence of length 8 and a TD-OCC sequence of length 2) may be used in Table 5 or Table 6.

In a second possible case, P=96. That is, a maximum of 96 DMRS ports are supported.

For example, the 96 DMRS ports may be divided into three CDM groups. Each CDM group may include a same quantity of DMRS ports.

In this case, for the DMRS port *pⱼ*, an *m*^{th} sequence element in a corresponding DMRS sequence *r*(*m*) may be mapped to a time-frequency resource according to a mapping rule, for example, mapped to an RE with an index (*k,l*)_{*p*,*µ*}. The mapping rule may satisfy formula (9). ${α}_{k , l}^{\left(p, μ\right)} = {β}_{PDSCH}^{DMRS} {w}_{f} \left(k′\right) {w}_{t} \left(l′\right) r \left(16n+k′\right)$ (9)

The following describes meanings of parameters in formula (9). For parameters that are not described in detail, refer to related descriptions in formula (8).

For example, *k* satisfies any one of the following: $k = \left\{\begin{matrix}48 n + k ′ + Δ & k ′ = 0 , 1 , 2 , 3 \\ 48 n + k ′ + Δ + 8 & k ′ = 4 , 5 , 6 , 7 \\ 48 n + k ′ + Δ + 16 & k ′ = 8 , 9 , 10 , 11 \\ 48 n + k ′ + Δ + 24 & k ′ = 12 , 13 , 14 , 15\end{matrix}\right.$ or $k = \left\{\begin{matrix}48 n + k ′ + Δ & k ′ = 0 , 1 \\ 48 n + k ′ + Δ + 4 & k ′ = 2 , 3 \\ 48 n + k ′ + Δ + 8 & k ′ = 4 , 5 \\ 48 n + k ′ + Δ + 12 & k ′ = 6 , 7 \\ 48 n + k ′ + Δ + 16 & k ′ = 8 , 9 \\ 48 n + k ′ + Δ + 20 & k ′ = 10 , 11 \\ 48 n + k ′ + Δ + 24 & k ′ = 12 , 13 \\ 48 n + k ′ + Δ + 28 & k ′ = 14 , 15\end{matrix}\right.$
*k'* = 0,1,2,3,4,5,6,7,8,9,10,11,12,13,14,15. It may be understood that formula (9) is an example for description, and is not limited herein. For example, "16" in formula (9) may also be replaced with another value.

Values of *w_{f}*(*k'*)*, wₜ*(*l*'), and Δ corresponding to the DMRS port *pⱼ* may exist in a form of a table, a function, text, or a character string, for example, for storage or transmission. Table 7 and Table 8 are examples of presenting the values of the foregoing parameters in a form of a table.

**Table 7 DMRS parameter values**

| P | λ | Δ | [*w_{f}*(0) ... *w_{f}*(15)] | [*w_{f}*(0) *wₜ*(1)] |
|---|---|---|---|---|
| 0 | 0 | 0 | [+1 +1 +1 +1 +1 +1 +1 +1 +1 +1 +1 +1 | [+1 +1] |
| 1 | 0 | 0 | [+1 -1 +1 -1 +1 -1 +1 -1 +1 -1 +1 -1 | [+1 +1] |
| 2 | 0 | 0 | [+1 +1 -1 -1 +1 +1 -1 -1 +1 +1 -1 -1 | [+1 +1] |
| 3 | 0 | 0 | [+1 -1 -1 +1 +1 -1 -1 +1 +1 -1 -1 +1 | [+1 +1] |
| 4 | 0 | 0 | [+1 +1 +1 +1 -1 -1 -1 -1 +1 +1 +1 +1 | [+1 +1] |
| 5 | 0 | 0 | [+1 -1 +1 -1 -1 +1 -1 +1 +1 -1 +1 -1 | [+1 +1] |
| 6 | 0 | 0 | [+1 +1 -1 -1 -1 -1 +1 +1 +1 +1 -1 -1 | [+1 +1] |
| 7 | 0 | 0 | [+1 -1 -1 +1 -1 +1 +1 -1 +1 -1 -1 +1 | [+1 +1] |
| 8 | 0 | 0 | [+1 +1 +1 +1 +1 +1 +1 +1 -1 -1 -1 -1 | [+1 +1] |
| 9 | 0 | 0 | [+1 -1 +1 -1 +1 -1 +1 -1 -1 +1 -1 +1 | [+1 +1] |
| 10 | 0 | 0 | [+1 +1 -1 -1 +1 +1 -1 -1 -1 -1 +1 +1 | [+1 +1] |
| 11 | 0 | 0 | [+1 -1 -1 +1 +1 -1 -1 +1 -1 +1 +1 -1 | [+1 +1] |
| 12 | 0 | 0 | [+1 +1 +1 +1 -1 -1 -1 -1 -1 -1 -1 -1 | [+1 +1] |
| 13 | 0 | 0 | [+1 -1 +1 -1 -1 +1 -1 +1 -1 +1 -1 +1 | [+1 +1] |
| 14 | 0 | 0 | [+1 +1 -1 -1 -1 -1 +1 +1 -1 -1 +1 +1 | [+1 +1] |
| 15 | 0 | 0 | [+1 -1 -1 +1 -1 +1 +1 -1 -1 +1 +1 -1 | [+1 +1] |
| 16 | 1 | 4 | [+1 +1 +1 +1 +1 +1 +1 +1 +1 +1 +1 +1 | [+1 +1] |
| 17 | 1 | 4 | [+1 -1 +1 -1 +1 -1 +1 -1 +1 -1 +1 -1 | [+1 +1] |
| 18 | 1 | 4 | [+1 +1 -1 -1 +1 +1 -1 -1 +1 +1 -1 -1 | [+1 +1] |
| 19 | 1 | 4 | [+1 -1 -1 +1 +1 -1 -1 +1 +1 -1 -1 +1 | [+1 +1] |
| 20 | 1 | 4 | [+1 +1 +1 +1 -1 -1 -1 -1 +1 +1 +1 +1 | [+1 +1] |
| 21 | 1 | 4 | [+1 -1 +1 -1 -1 +1 -1 +1 +1 -1 +1 -1 | [+1 +1] |
| 22 | 1 | 4 | [+1 +1 -1 -1 -1 -1 +1 +1 +1 +1 -1 -1 | [+1 +1] |
| 23 | 1 | 4 | [+1 -1 -1 +1 -1 +1 +1 -1 +1 -1 -1 +1 | [+1 +1] |
| 24 | 1 | 4 | [+1 +1 +1 +1 +1 +1 +1 +1 -1 -1 -1 -1 | [+1 +1] |
| 25 | 1 | 4 | [+1 -1 +1 -1 +1 -1 +1 -1 -1 +1 -1 +1 | [+1 +1] |
| 26 | 1 | 4 | [+1 +1 -1 -1 +1 +1 -1 -1 -1 -1 +1 +1 | [+1 +1] |
| 27 | 1 | 4 | [+1 -1 -1 +1 +1 -1 -1 +1 -1 +1 +1 -1 | [+1 +1] |
| 28 | 1 | 4 | [+1 +1 +1 +1 -1 -1 -1 -1 -1 -1 -1 -1 | [+1 +1] |
| 29 | 1 | 4 | [+1 -1 +1 -1 -1 +1 -1 +1 -1 +1 -1 +1 | [+1 +1] |
| 30 | 1 | 4 | [+1 +1 -1 -1 -1 -1 +1 +1 -1 -1 +1 +1 | [+1 +1] |
| 31 | 1 | 4 | [+1 -1 -1 +1 -1 +1 +1 -1 -1 +1 +1 -1 | [+1 +1] |
| 32 | 2 | 8 | [+1 +1 +1 +1 +1 +1 +1 +1 +1 +1 +1 +1 | [+1 +1] |
| 33 | 2 | 8 | [+1 -1 +1 -1 +1 -1 +1 -1 +1 -1 +1 -1 | [+1 +1] |
| 34 | 2 | 8 | [+1 +1 -1 -1 +1 +1 -1 -1 +1 +1 -1 -1 | [+1 +1] |
| 35 | 2 | 8 | [+1 -1 -1 +1 +1 -1 -1 +1 +1 -1 -1 +1 | [+1 +1] |
| 36 | 2 | 8 | [+1 +1 +1 +1 -1 -1 -1 -1 +1 +1 +1 +1 | [+1 +1] |
| 37 | 2 | 8 | [+1 -1 +1 -1 -1 +1 -1 +1 +1 -1 +1 -1 | [+1 +1] |
| 38 | 2 | 8 | [+1 +1 -1 -1 -1 -1 +1 +1 +1 +1 -1 -1 | [+1 +1] |
| 39 | 2 | 8 | [+1 -1 -1 +1 -1 +1 +1 -1 +1 -1 -1 +1 | [+1 +1] |
| 40 | 2 | 8 | [+1 +1 +1 +1 +1 +1 +1 +1 -1 -1 -1 -1 | [+1 +1] |
| 41 | 2 | 8 | [+1 -1 +1 -1 +1 -1 +1 -1 -1 +1 -1 +1 | [+1 +1] |
| 42 | 2 | 8 | [+1 +1 -1 -1 +1 +1 -1 -1 -1 -1 +1 +1 | [+1 +1] |
| 43 | 2 | 8 | [+1 -1 -1 +1 +1 -1 -1 +1 -1 +1 +1 -1 | [+1 +1] |
| 44 | 2 | 8 | [+1 +1 +1 +1 -1 -1 -1 -1 -1 -1 -1 -1 | [+1 +1] |
| 45 | 2 | 8 | [+1 -1 +1 -1 -1 +1 -1 +1 -1 +1 -1 +1 | [+1 +1] |
| 46 | 2 | 8 | [+1 +1 -1 -1 -1 -1 +1 +1 -1 -1 +1 +1 | [+1 +1] |
| 47 | 2 | 8 | [+1 -1 -1 +1 -1 +1 +1 -1 -1 +1 +1 -1 | [+1 +1] |
| 48 | 0 | 0 | [+1 +1 +1 +1 +1 +1 +1 +1 +1 +1 +1 +1 | [+1 -1] |
| 49 | 0 | 0 | [+1 -1 +1 -1 +1 -1 +1 -1 +1 -1 +1 -1 | [+1 -1] |
| 50 | 0 | 0 | [+1 +1 -1 -1 +1 +1 -1 -1 +1 +1 -1 -1 | [+1 -1] |
| 51 | 0 | 0 | [+1 -1 -1 +1 +1 -1 -1 +1 +1 -1 -1 +1 | [+1 -1] |
| 52 | 0 | 0 | [+1 +1 +1 +1 -1 -1 -1 -1 +1 +1 +1 +1 | [+1 -1] |
| 53 | 0 | 0 | [+1 -1 +1 -1 -1 +1 -1 +1 +1 -1 +1 -1 | [+1 -1] |
| 54 | 0 | 0 | [+1 +1 -1 -1 -1 -1 +1 +1 +1 +1 -1 -1 | [+1 -1] |
| 55 | 0 | 0 | [+1 -1 -1 +1 -1 +1 +1 -1 +1 -1 -1 +1 | [+1 -1] |
| 56 | 0 | 0 | [+1 +1 +1 +1 +1 +1 +1 +1 -1 -1 -1 -1 | [+1 -1] |
| 57 | 0 | 0 | [+1 -1 +1 -1 +1 -1 +1 -1 -1 +1 -1 +1 | [+1 -1] |
| 58 | 0 | 0 | [+1 +1 -1 -1 +1 +1 -1 -1 -1 -1 +1 +1 | [+1 -1] |
| 59 | 0 | 0 | [+1 -1 -1 +1 +1 -1 -1 +1 -1 +1 +1 -1 | [+1 -1] |
| 60 | 0 | 0 | [+1 +1 +1 +1 -1 -1 -1 -1 -1 -1 -1 -1 | [+1 -1] |
| 61 | 0 | 0 | [+1 -1 +1 -1 -1 +1 -1 +1 -1 +1 -1 +1 | [+1 -1] |
| 62 | 0 | 0 | [+1 +1 -1 -1 -1 -1 +1 +1 -1 -1 +1 +1 | [+1 -1] |
| 63 | 0 | 0 | [+1 -1 -1 +1 -1 +1 +1 -1 -1 +1 +1 -1 | [+1 -1] |
| 64 | 1 | 4 | [+1 +1 +1 +1 +1 +1 +1 +1 +1 +1 +1 +1 | [+1 -1] |
| 65 | 1 | 4 | [+1 -1 +1 -1 +1 -1 +1 -1 +1 -1 +1 -1 | [+1 -1] |
| 66 | 1 | 4 | [+1 +1 -1 -1 +1 +1 -1 -1 +1 +1 -1 -1 | [+1 -1] |
| 67 | 1 | 4 | [+1 -1 -1 +1 +1 -1 -1 +1 +1 -1 -1 +1 | [+1 -1] |
| 68 | 1 | 4 | [+1 +1 +1 +1 -1 -1 -1 -1 +1 +1 +1 +1 | [+1 -1] |
| 69 | 1 | 4 | [+1 -1 +1 -1 -1 +1 -1 +1 +1 -1 +1 -1 | [+1 -1] |
| 70 | 1 | 4 | [+1 +1 -1 -1 -1 -1 +1 +1 +1 +1 -1 -1 | [+1 -1] |
| 71 | 1 | 4 | [+1 -1 -1 +1 -1 +1 +1 -1 +1 -1 -1 +1 | [+1 -1] |
| 72 | 1 | 4 | [+1 +1 +1 +1 +1 +1 +1 +1 -1 -1 -1 -1 | [+1 -1] |
| 73 | 1 | 4 | [+1 -1 +1 -1 +1 -1 +1 -1 -1 +1 -1 +1 | [+1 -1] |
| 74 | 1 | 4 | [+1 +1 -1 -1 +1 +1 -1 -1 -1 -1 +1 +1 | [+1 -1] |
| 75 | 1 | 4 | [+1 -1 -1 +1 +1 -1 -1 +1 -1 +1 +1 -1 | [+1 -1] |
| 76 | 1 | 4 | [+1 +1 +1 +1 -1 -1 -1 -1 -1 -1 -1 -1 | [+1 -1] |
| 77 | 1 | 4 | [+1 -1 +1 -1 -1 +1 -1 +1 -1 +1 -1 +1 | [+1 -1] |
| 78 | 1 | 4 | [+1 +1 -1 -1 -1 -1 +1 +1 -1 -1 +1 +1 | [+1 -1] |
| 79 | 1 | 4 | [+1 -1 -1 +1 -1 +1 +1 -1 -1 +1 +1 -1 | [+1 -1] |
| 80 | 2 | 8 | [+1 +1 +1 +1 +1 +1 +1 +1 +1 +1 +1 +1 | [+1 -1] |
| 81 | 2 | 8 | [+1 -1 +1 -1 +1 -1 +1 -1 +1 -1 +1 -1 | [+1 -1] |
| 82 | 2 | 8 | [+1 +1 -1 -1 +1 +1 -1 -1 +1 +1 -1 -1 | [+1 -1] |
| 83 | 2 | 8 | [+1 -1 -1 +1 +1 -1 -1 +1 +1 -1 -1 +1 | [+1 -1] |
| 84 | 2 | 8 | [+1 +1 +1 +1 -1 -1 -1 -1 +1 +1 +1 +1 | [+1 -1] |
| 85 | 2 | 8 | [+1 -1 +1 -1 -1 +1 -1 +1 +1 -1 +1 -1 | [+1 -1] |
| 86 | 2 | 8 | [+1 +1 -1 -1 -1 -1 +1 +1 +1 +1 -1 -1 | [+1 -1] |
| 87 | 2 | 8 | [+1 -1 -1 +1 -1 +1 +1 -1 +1 -1 -1 +1 | [+1 -1] |
| 88 | 2 | 8 | [+1 +1 +1 +1 +1 +1 +1 +1 -1 -1 -1 -1 | [+1 -1] |
| 89 | 2 | 8 | [+1 -1 +1 -1 +1 -1 +1 -1 -1 +1 -1 +1 | [+1 -1] |
| 90 | 2 | 8 | [+1 +1 -1 -1 +1 +1 -1 -1 -1 -1 +1 +1 | [+1 -1] |
| 91 | 2 | 8 | [+1 -1 -1 +1 +1 -1 -1 +1 -1 +1 +1 -1 | [+1 -1] |
| 92 | 2 | 8 | [+1 +1 +1 +1 -1 -1 -1 -1 -1 -1 -1 -1 | [+1 -1] |
| 93 | 2 | 8 | [+1 -1 +1 -1 -1 +1 -1 +1 -1 +1 -1 +1 | [+1 -1] |
| 94 | 2 | 8 | [+1 +1 -1 -1 -1 -1 +1 +1 -1 -1 +1 +1 | [+1 -1] |
| 95 | 2 | 8 | [+1 -1 -1 +1 -1 +1 +1 -1 -1 +1 +1 -1 | [+1 -1] |

**Table 8 DMRS parameter values**

| P | λ | Δ | [*w_{f}*(0) ... *w_{f}*(15)] | [*w_{f}*(0) *wₜ*(1)] |
|---|---|---|---|---|
| 0 | 0 | 0 | [+1 +1 +1 +1 +1 +1 +1 +1 +1 +1 +1 +1 | [+1 +1] |
| 1 | 0 | 0 | [+1 -1 +1 -1 +1 -1 +1 -1 +1 -1 +1 -1 | [+1 +1] |
| 2 | 0 | 0 | [+1 +1 -1 -1 +1 +1 -1 -1 +1 +1 -1 -1 | [+1 +1] |
| 3 | 0 | 0 | [+1 -1 -1 +1 +1 -1 -1 +1 +1 -1 -1 +1 | [+1 +1] |
| 4 | 0 | 0 | [ +1 +1 +1 +1 *-j -j -j -j* -1 -1 -1 -1 ] | [+1 +1] |
| 5 | 0 | 0 | [ +1 -1 +1 -1 *-j +j -j +j* -1 +1 -1 +1 ] | [+1 +1] |
| 6 | 0 | 0 | [ +1 +1 -1 -1 *-j -j +j +j* -1 -1 +1 +1 ] | [+1 +1] |
| 7 | 0 | 0 | [ +1 -1 -1 +1 *-j +j +j -j* -1 +1 +1 -1 ] | [+1 +1] |
| 8 | 0 | 0 | [ +1 +1 +1 +1 -1 -1 -1 -1 +1 +1 +1 +1 ] | [+1 +1] |
| 9 | 0 | 0 | [ +1 -1 +1 -1 -1 +1 -1 +1 +1 -1 +1 -1 ] | [+1 +1] |
| 10 | 0 | 0 | [ +1 +1 -1 -1 -1 -1 +1 +1 +1 +1 -1 -1 ] | [+1 +1] |
| 11 | 0 | 0 | [ +1 -1 -1 +1 -1 +1 +1 -1 +1 -1 -1 +1 ] | [+1 +1] |
| 12 | 0 | 0 | [ +1 +1 +1 +1 *+j +j +j +j* -1 -1 -1 -1 ] | [+1 +1] |
| 13 | 0 | 0 | [ +1 -1 +1 -1 *+j -j +j -j* -1 +1 -1 +1 ] | [+1 +1] |
| 14 | 0 | 0 | [ +1 +1 -1 -1 *+j +j -j -j* -1 -1 +1 +1 ] | [+1 +1] |
| 15 | 0 | 0 | [ +1 -1 -1 +1 *+j -j -j +j* -1 +1 +1 -1 ] | [+1 +1] |
| 16 | 1 | 4 | [+1 +1 +1 +1 +1 +1 +1 +1 +1 +1 +1 +1 | [+1 +1] |
| 17 | 1 | 4 | [+1 -1 +1 -1 +1 -1 +1 -1 +1 -1 +1 -1 | [+1 +1] |
| 18 | 1 | 4 | [+1 +1 -1 -1 +1 +1 -1 -1 +1 +1 -1 -1 | [+1 +1] |
| 19 | 1 | 4 | [+1 -1 -1 +1 +1 -1 -1 +1 +1 -1 -1 +1 | [+1 +1] |
| 20 | 1 | 4 | [ +1 +1 +1 +1 *-j -j -j -j* -1 -1 -1 -1 ] | [+1 +1] |
| 21 | 1 | 4 | [ +1 -1 +1 -1 *-j +j -j +j* -1 +1 -1 +1 ] | [+1 +1] |
| 22 | 1 | 4 | [ +1 +1 -1 -1 *-j -j +j +j* -1 -1 +1 +1 ] | [+1 +1] |
| 23 | 1 | 4 | [ +1 -1 -1 +1 *-j +j +j -j* -1 +1 +1 -1] | [+1 +1] |
| 24 | 1 | 4 | [ +1 +1 +1 +1 -1 -1 -1 -1 +1 +1 +1 +1 ] | [+1 +1] |
| 25 | 1 | 4 | [ +1 -1 +1 -1 -1 +1 -1 +1 +1 -1 +1 -1 ] | [+1 +1] |
| 26 | 1 | 4 | [ +1 +1 -1 -1 -1 -1 +1 +1 +1 +1 -1 -1 ] | [+1 +1] |
| 27 | 1 | 4 | [ +1 -1 -1 +1 -1 +1 +1 -1 +1 -1 -1 +1 ] | [+1 +1] |
| 28 | 1 | 4 | [ +1 +1 +1 +1 *+j +j +j +j* -1 -1 -1 -1 ] | [+1 +1] |
| 29 | 1 | 4 | [ +1 -1 +1 -1 *+j -j +j -j* -1 +1 -1 +1 ] | [+1 +1] |
| 30 | 1 | 4 | [ +1 +1 -1 -1 *+j +j -j -j* -1 -1 +1 +1 ] | [+1 +1] |
| 31 | 1 | 4 | [ +1 -1 -1 +1 *+j -j -j +j* -1 +1 +1 -1 ] | [+1 +1] |
| 32 | 2 | 8 | [+1 +1 +1 +1 +1 +1 +1 +1 +1 +1 +1 +1 | [+1 +1] |
| 33 | 2 | 8 | [+1 -1 +1 -1 +1 -1 +1 -1 +1 -1 +1 -1 | [+1 +1] |
| 34 | 2 | 8 | [+1 +1 -1 -1 +1 +1 -1 -1 +1 +1 -1 -1 | [+1 +1] |
| 35 | 2 | 8 | [+1 -1 -1 +1 +1 -1 -1 +1 +1 -1 -1 +1 | [+1 +1] |
| 36 | 2 | 8 | [ +1 +1 +1 +1 *-j -j -j -j* -1 -1 -1 -1 ] | [+1 +1] |
| 37 | 2 | 8 | [+1 -1 +1 -1 *-j +j -j +j* -1 +1 -1 +1 ] | [+1 +1] |
| 38 | 2 | 8 | [ +1 +1 -1 -1 *-j -j +j +j* -1 -1 +1 +1 ] | [+1 +1] |
| 39 | 2 | 8 | [ +1 -1 -1 +1 *-j +j +j -j* -1 +1 +1 -1 ] | [+1 +1] |
| 40 | 2 | 8 | [ +1 +1 +1 +1 -1 -1 -1 -1 +1 +1 +1 +1 ] | [+1 +1] |
| 41 | 2 | 8 | [ +1 -1 +1 -1 -1 +1 -1 +1 +1 -1 +1 -1 ] | [+1 +1] |
| 42 | 2 | 8 | [ +1 +1 -1 -1 -1 -1 +1 +1 +1 +1 -1 -1 ] | [+1 +1] |
| 43 | 2 | 8 | [ +1 -1 -1 +1 -1 +1 +1 -1 +1 -1 -1 +1 ] | [+1 +1] |
| 44 | 2 | 8 | [ +1 +1 +1 +1 *+j +j +j +j* -1 -1 -1 -1 ] | [+1 +1] |
| 45 | 2 | 8 | [ +1 -1 +1 -1 *+j -j +j -j* -1 +1 -1 +1 ] | [+1 +1] |
| 46 | 2 | 8 | [ +1 +1 -1 -1 *+j +j -j -j* -1 -1 +1 +1 ] | [+1 +1] |
| 47 | 2 | 8 | [ +1 -1 -1 +1 *+j -j -j +j* -1 +1 +1 -1 ] | [+1 +1] |
| 48 | 0 | 0 | [+1 +1 +1 +1 +1 +1 +1 +1 +1 +1 +1 +1 | [+1 -1] |
| 49 | 0 | 0 | [+1 -1 +1 -1 +1 -1 +1 -1 +1 -1 +1 -1 | [+1 -1] |
| 50 | 0 | 0 | [+1 +1 -1 -1 +1 +1 -1 -1 +1 +1 -1 -1 | [+1 -1] |
| 51 | 0 | 0 | [+1 -1 -1 +1 +1 -1 -1 +1 +1 -1 -1 +1 | [+1 -1] |
| 52 | 0 | 0 | [ +1 +1 +1 +1 *-j -j -j -j* -1 -1 -1 -1 ] | [+1 -1] |
| 53 | 0 | 0 | [ +1 -1 +1 -1 *-j +j -j +j* -1 +1 -1 +1 ] | [+1 -1] |
| 54 | 0 | 0 | [ +1 +1 -1 -1 *-j -j +j +j* -1 -1 +1 +1 ] | [+1 -1] |
| 55 | 0 | 0 | [ +1 -1 -1 +1 *-j +j +j -j* -1 +1 +1 -1 ] | [+1 -1] |
| 56 | 0 | 0 | [ +1 +1 +1 +1 -1 -1 -1 -1 +1 +1 +1 +1 ] | [+1 -1] |
| 57 | 0 | 0 | [ +1 -1 +1 -1 -1 +1 -1 +1 +1 -1 +1 -1 ] | [+1 -1] |
| 58 | 0 | 0 | [ +1 +1 -1 -1 -1 -1 +1 +1 +1 +1 -1 -1 ] | [+1 -1] |
| 59 | 0 | 0 | [ +1 -1 -1 +1 -1 +1 +1 -1 +1 -1 -1 +1 ] | [+1 -1] |
| 60 | 0 | 0 | [ +1 +1 +1 +1 *+j +j +j +j* -1 -1 -1 -1 ] | [+1 -1] |
| 61 | 0 | 0 | [ +1 -1 +1 -1 *+j -j +j -j* -1 +1 -1 +1 ] | [+1 -1] |
| 62 | 0 | 0 | [ +1 +1 -1 -1 *+j +j -j -j* -1 -1 +1 +1 ] | [+1 -1] |
| 63 | 0 | 0 | [ +1 -1 -1 +1 *+j -j -j +j* -1 +1 +1 -1 ] | [+1 -1] |
| 64 | 1 | 4 | [+1 +1 +1 +1 +1 +1 +1 +1 +1 +1 +1 +1 | [+1 -1] |
| 65 | 1 | 4 | [+1 -1 +1 -1 +1 -1 +1 -1 +1 -1 +1 -1 | [+1 -1] |
| 66 | 1 | 4 | [+1 +1 -1 -1 +1 +1 -1 -1 +1 +1 -1 -1 | [+1 -1] |
| 67 | 1 | 4 | [+1 -1 -1 +1 +1 -1 -1 +1 +1 -1 -1 +1 | [+1 -1] |
| 68 | 1 | 4 | [ +1 +1 +1 +1 *-j -j -j -j* -1 -1 -1 -1 ] | [+1 -1] |
| 69 | 1 | 4 | [ +1 -1 +1 -1 *-j +j -j +j* -1 +1 -1 +1 ] | [+1 -1] |
| 70 | 1 | 4 | [ +1 +1 -1 -1 *-j -j +j +j* -1 -1 +1 +1 ] | [+1 -1] |
| 71 | 1 | 4 | [ +1 -1 -1 +1 *-j +j +j -j* -1 +1 +1 -1 ] | [+1 -1] |
| 72 | 1 | 4 | [ +1 +1 +1 +1 -1 -1 -1 -1 +1 +1 +1 +1 ] | [+1 -1] |
| 73 | 1 | 4 | [ +1 -1 +1 -1 -1 +1 -1 +1 +1 -1 +1 -1 ] | [+1 -1] |
| 74 | 1 | 4 | [ +1 +1 -1 -1 -1 -1 +1 +1 +1 +1 -1 -1 ] | [+1 -1] |
| 75 | 1 | 4 | [ +1 -1 -1 +1 -1 +1 +1 -1 +1 -1 -1 +1] | [+1 -1] |
| 76 | 1 | 4 | [ +1 +1 +1 +1 *+j +j +j +j* -1 -1 -1 -1 ] | [+1 -1] |
| 77 | 1 | 4 | [ +1 -1 +1 -1 *+j -j +j -j* -1 +1 -1 +1 ] | [+1 -1] |
| 78 | 1 | 4 | [ +1 +1 -1 -1 *+j +j -j -j* -1 -1 +1 +1 ] | [+1 -1] |
| 79 | 1 | 4 | [ +1 -1 -1 +1 *+j -j -j +j* -1 +1 +1 -1 ] | [+1 -1] |
| 80 | 2 | 8 | [+1 +1 +1 +1 +1 +1 +1 +1 +1 +1 +1 +1 | [+1 -1] |
| 81 | 2 | 8 | [+1 -1 +1 -1 +1 -1 +1 -1 +1 -1 +1 -1 | [+1 -1] |
| 82 | 2 | 8 | [+1 +1 -1 -1 +1 +1 -1 -1 +1 +1 -1 -1 | [+1 -1] |
| 83 | 2 | 8 | [+1 -1 -1 +1 +1 -1 -1 +1 +1 -1 -1 +1 | [+1 -1] |
| 84 | 2 | 8 | [ +1 +1 +1 +1 *-j -j -j -j* -1 -1 -1 -1 ] | [+1 -1] |
| 85 | 2 | 8 | [ +1 -1 +1 -1 *-j +j -j +j* -1 +1 -1 +1 ] | [+1 -1] |
| 86 | 2 | 8 | [ +1 +1 -1 -1 *-j -j +j +j* -1 -1 +1 +1 ] | [+1 -1] |
| 87 | 2 | 8 | [ +1 -1 -1 +1 *-j +j +j -j* -1 +1 +1 -1 ] | [+1 -1] |
| 88 | 2 | 8 | [ +1 +1 +1 +1 -1 -1 -1 -1 +1 +1 +1 +1 ] | [+1 -1] |
| 89 | 2 | 8 | [+1 -1 +1 -1 -1 +1 -1 +1 +1 -1 +1 -1 ] | [+1 -1] |
| 90 | 2 | 8 | [ +1 +1 -1 -1 -1 -1 +1 +1 +1 +1 -1 -1 ] | [+1 -1] |
| 91 | 2 | 8 | [ +1 -1 -1 +1 -1 +1 +1 -1 +1 -1 -1 +1 ] | [+1 -1] |
| 92 | 2 | 8 | [ +1 +1 +1 +1 *+j +j +j +j* -1 -1 -1 -1 ] | [+1 -1] |
| 93 | 2 | 8 | [ +1 -1 +1 -1 *+j -j +j -j* -1 +1 -1 +1 ] | [+1 -1] |
| 94 | 2 | 8 | [ +1 +1 -1 -1 *+j +j -j -j* -1 -1 +1 +1 ] | [+1 -1] |
| 95 | 2 | 8 | [ +1 -1 -1 +1 *+j -j -j +j* -1 +1 +1 -1 ] | [+1 -1] |

For example, it is assumed that the port set includes 96 ports. For a port (for example, the first port) in the 96 ports, values of *w_{f}*(*k'*), *wₜ*(*l'*)*,* and Δ corresponding to the port may be determined based on an index of the port and Table 7 or Table 8, so that an element in a DMRS sequence on the port can be mapped to a corresponding time-frequency resource according to formula (9), and can be sent.

It may be understood that all the foregoing listed sequences (for example, an FD-sequence of length 16 and a TD-OCC sequence of length 2) may be used in Table 7 or Table 8.

It may be understood that λ in Table 5 to Table 8 represents an index of a CDM group, that is, an index of a CDM group including a port.

It may be further understood that, Table 5 to Table 8 use one table to represent values of the parameters. This is not limited herein. For example, different parameters may exist in a form of different tables. For another example, a table may include only a part of the foregoing parameters. For another example, the port index p may also be represented as 1000+p. For example, a port index 0 may also represent a port index 1000, and a port index 1 may also represent a port index 1001.

Optionally, the first port corresponds to L frequency domain units, and one element in the FD-OCC sequence corresponding to the first port corresponds to one of the L frequency domain units. For example, at least two first frequency domain units in the L frequency domain units are inconsecutive. Based on this solution, a longer FD-OCC length may indicate higher sensitivity to frequency selective fading of a channel. Therefore, at least two frequency domain units in a frequency domain resource to which an FD-OCC corresponding to a port is mapped are inconsecutive, and each segment of consecutive frequency domain units may correspond to an FD-OCC subsequence of a short length, so that better channel estimation performance can be achieved.

In a possible implementation, the L frequency domain units include K frequency domain unit groups, each of the K frequency domain unit groups corresponds to one of K FD-OCC subsequences, and K is an integer equal to 1 or greater than 1. For example, the FD-OCC sequence includes K FD-OCC subsequences.

Based on this solution, a frequency domain resource to which an FD-OCC sequence corresponding to a port is mapped is divided into a plurality of frequency domain resource groups (for example, a plurality of subcarrier groups). In this way, each frequency domain resource group corresponds to an FD-OCC subsequence of a short length, to achieve better channel estimation performance.

The K FD-OCC subsequences are sequences including L/K elements with consecutive element indexes in the FD-OCC sequence of length L. For example, it is assumed that the FD-OCC sequence of length L is [*w_{f}*(0), *w_{f}*(1), ..., *w_{f}*(*L -* 1)], and the FD-OCC sequence may be divided into K FD-OCC subsequences. For example, the K FD-OCC subsequences are $\left[{w}_{f}\left(0\right),{w}_{f}\left(1\right),…,{w}_{f}\left(\frac{L}{K}-1\right)\right] , \left[{w}_{f}\left(\frac{L}{K}\right),{w}_{f}\left(\frac{L}{K}+1\right),…,{w}_{f}\left(\frac{2 L}{K}-1\right)\right] , … , \left[{w}_{f}\left(L-\frac{L}{K}\right),{w}_{f}\left(L-\right.\right.$ $\left.\left.\frac{L}{K}+1\right),…,{w}_{f}\left(L-1\right)\right]$ FD-OCC subsequence in the K FD-OCC subsequences is $\left[{w}_{f}\left(\frac{kL}{K}\right),{w}_{f}\left(\frac{kL}{K}+1\right),…,{w}_{f}\left(\frac{\left(k+1\right) L}{K}-1\right)\right]$, where *k*=0, 1, ..., *K-1.* It may be understood that the foregoing is merely an example, and any case in which the FD-OCC sequence of length L can be divided into the K FD-OCC subsequences is applicable to this embodiment of this application.

As described above, K may be equal to 1 or may be greater than 1. When K is equal to 1, the FD-OCC subsequence is the FD-OCC sequence. That is, the FD-OCC subsequence is a sequence including a subset of elements in the FD-OCC sequence, and the element subset includes a universal set.

The L frequency domain units include the K frequency domain unit groups. That is, the L frequency domain units are divided into the K frequency domain unit groups.

For example, frequency domain units in each of the K frequency domain unit groups are consecutive in frequency domain, and at least two adjacent frequency domain unit groups in the K frequency domain unit groups are inconsecutive in frequency domain.

For example, each frequency domain unit group includes a same quantity of frequency domain units. For example, intervals between two adjacent frequency domain unit groups in the K frequency domain unit groups are equal.

For example, one frequency domain unit may be, for example, one subcarrier (or a plurality of subcarriers). For example, one frequency domain unit group includes four subcarriers.

For example, L=8 and K=2. In this case, an FD-OCC sequence of length 8 is divided into two FD-OCC subsequences of length 4 (or may be referred to as FD-OCC sequences), and then the two FD-OCC subsequences are respectively mapped to two frequency domain unit groups.

It may be understood that the FD-OCC subsequence is mentioned a plurality of times in this embodiment of this application, and represents a part of an FD-OCC sequence of a specific length. For example, for the FD-OCC sequence of length L, if the FD-OCC sequence corresponds to K subcarrier groups, an FD-OCC sequence corresponding to each subcarrier group may be referred to as an FD-OCC subsequence. It may be understood that the FD-OCC subsequence is merely a name for differentiation, and a name of the FD-OCC subsequence does not limit the protection scope of embodiments of this application.

The following provides some specific examples with reference to the foregoing two cases.

In a first possible case, P=48. That is, a maximum of 48 DMRS ports are supported. The following provides descriptions with reference to two scenarios.

Scenario 1: A quantity of symbols occupied by a DMRS is 1. In this scenario, a length of the TD-OCC sequence is 1. In addition, Table 5 or Table 6 is used as an example, and DMRS port numbers may be a port 0 to a port 23.

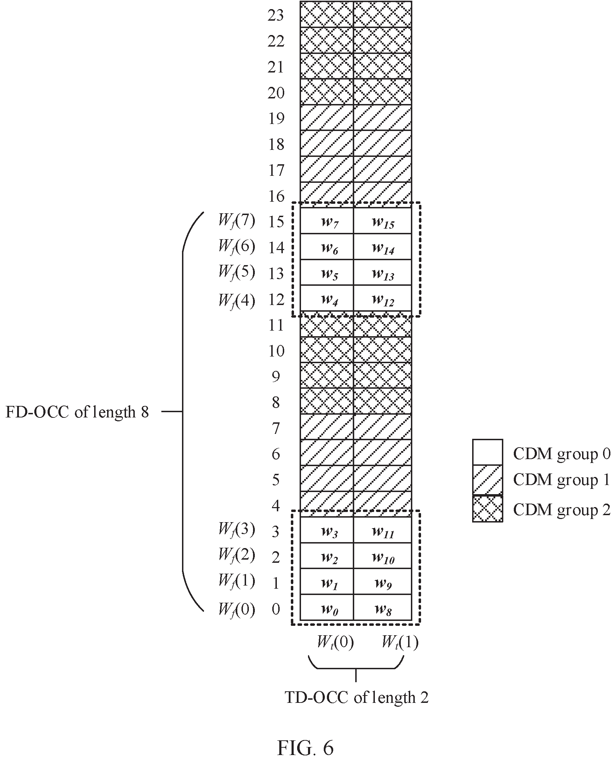

FIG. 6 is a diagram of DMRS time-frequency resource mapping according to an embodiment of this application.

As shown in FIG. 6, DMRS ports may be divided into three CDM groups. For differentiation, the three CDM groups are respectively referred to as a CDM group 0, a CDM group 1, and a CDM group 2. Each CDM group corresponds to eight DMRS ports, and each DMRS port corresponds to an FD-OCC of length 8, and is mapped to eight subcarriers and one OFDM symbol (for example, a 1^{st} OFDM symbol shown in FIG. 6). For example, the eight subcarriers (that is, an example of the L frequency domain units) may be divided into two subcarrier groups (that is, an example of the K frequency domain unit groups), and each subcarrier group includes four consecutive subcarriers.

For example, the CDM group 0 in FIG. 6 is used as an example, and DMRS ports in the CDM group 0 are a port 0, a port 1, a port 2, a port 3, a port 4, a port 5, a port 6, and a port 7. The DMRS ports in the CDM group 0 occupy a same time-frequency resource. As shown in FIG. 6, the DMRS ports in the CDM group 0 occupy subcarriers with indexes 0, 1, 2, 3, 12, 13, 14, and 15 in two consecutive RBs.

For another example, the CDM group 1 in FIG. 6 is used as an example, and DMRS ports in the CDM group 1 are a port 8, a port 9, a port 10, a port 11, a port 12, a port 13, a port 14, and a port 15. The DMRS ports in the CDM group 1 occupy a same time-frequency resource. As shown in FIG. 6, the DMRS ports in the CDM group 1 occupy subcarriers with indexes 4, 5, 6, 7, 16, 17, 18, and 19 in two consecutive RBs.

For another example, the CDM group 2 in FIG. 6 is used as an example, and DMRS ports in the CDM group 2 are a port 16, a port 17, a port 18, a port 19, a port 20, a port 21, a port 22, and a port 23. The DMRS ports in the CDM group 2 occupy a same time-frequency resource. As shown in FIG. 6, the DMRS ports in the CDM group 2 occupy subcarriers with indexes 8, 9, 10, 11, 20, 21, 22, and 23 in two consecutive RBs.

In addition, for example, in the example shown in FIG. 6, 48 DMRS ports may be divided into three CDM groups, and each CDM group may include a same quantity of DMRS ports. In this case, for the DMRS port *pⱼ*, an *m*^{th} sequence element *r*(*m*) in a corresponding DMRS sequence may be mapped to a time-frequency resource according to a mapping rule, for example, mapped to an RE with an index (*k,l*)*_{p,µ}*. For a specific mapping rule, refer to formula (8), and in this case, *k* in formula (8) satisfies $k = \left\{\begin{matrix}24 n + k ′ + Δ & k ′ = 0 , 1 , 2 , 3 \\ 24 n + k ′ + Δ + 8 & k ′ = 4 , 5 , 6 , 7\end{matrix}\right.$*.*

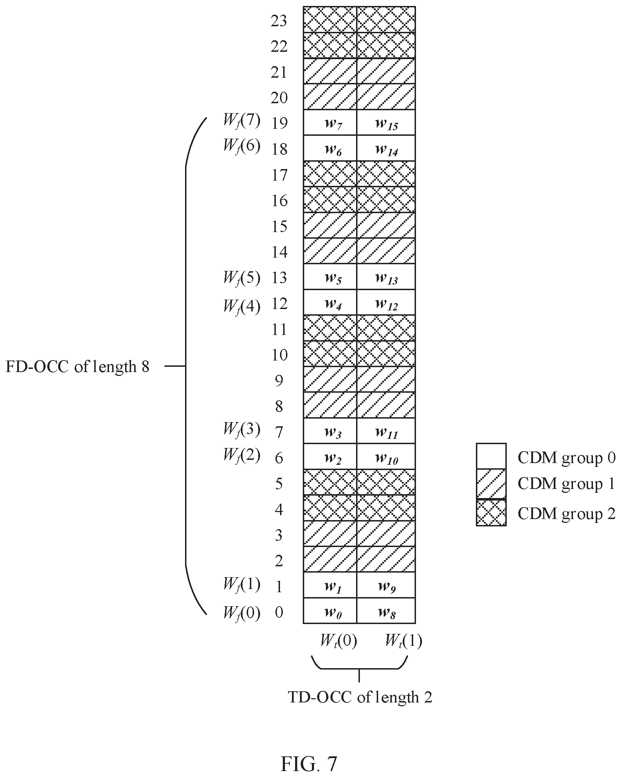

FIG. 7 is another diagram of DMRS time-frequency resource mapping according to an embodiment of this application.

As shown in FIG. 7, DMRS ports may be divided into three CDM groups. For differentiation, the three CDM groups are respectively referred to as a CDM group 0, a CDM group 1, and a CDM group 2. Each CDM group corresponds to eight DMRS ports, and each DMRS port corresponds to an FD-OCC of length 8, and is mapped to eight subcarriers and one OFDM symbol (for example, a 1^{st} OFDM symbol shown in FIG. 7). For example, the eight subcarriers (that is, an example of the L frequency domain units) may be divided into four subcarrier groups (that is, an example of the K frequency domain unit groups), and each subcarrier group includes two consecutive subcarriers.

For example, the CDM group 0 in FIG. 7 is used as an example, and DMRS ports in the CDM group 0 are a port 0, a port 1, a port 2, a port 3, a port 4, a port 5, a port 6, and a port 7. The DMRS ports in the CDM group 0 occupy a same time-frequency resource. As shown in FIG. 7, the DMRS ports in the CDM group 0 occupy subcarriers with indexes 0, 1, 6, 7, 12, 13, 18, and 19 in two consecutive RBs.

For another example, the CDM group 1 in FIG. 7 is used as an example, and DMRS ports in the CDM group 1 are a port 8, a port 9, a port 10, a port 11, a port 12, a port 13, a port 14, and a port 15. The DMRS ports in the CDM group 1 occupy a same time-frequency resource. As shown in FIG. 7, the DMRS ports in the CDM group 1 occupy subcarriers with indexes 2, 3, 8, 9, 14, 15, 20, and 21 in two consecutive RBs.

For another example, the CDM group 2 in FIG. 7 is used as an example, and DMRS ports in the CDM group 2 are a port 16, a port 17, a port 18, a port 19, a port 20, a port 21, a port 22, and a port 23. The DMRS ports in the CDM group 2 occupy a same time-frequency resource. As shown in FIG. 7, the DMRS ports in the CDM group 2 occupy subcarriers with indexes 4, 5, 10, 11, 16, 17, 22, and 23 in two consecutive RBs.

In addition, for example, in the example shown in FIG. 7, 48 DMRS ports may be divided into three CDM groups, and each CDM group may include a same quantity of DMRS ports. In this case, for the DMRS port *pⱼ*, an *m*^{th} sequence element *r*(*m*) in a corresponding DMRS sequence may be mapped to a time-frequency resource according to a mapping rule, for example, mapped to an RE with an index (*k,l*)*_{p,µ}*. For a specific mapping rule, refer to formula (8), and in this case, *k* in formula (8) satisfies $k = \left\{\begin{matrix}24 n + k ′ + Δ & k ′ = 0 , 1 \\ 24 n + k ′ + Δ + 4 & k ′ = 2 , 3 \\ 24 n + k ′ + Δ + 8 & k ′ = 4 , 5 \\ 24 n + k ′ + Δ + 12 & k ′ = 6 , 7\end{matrix}\right.$.

Scenario 2: A quantity of symbols occupied by a DMRS is 2. In this scenario, a length of the TD-OCC sequence is 2. In addition, Table 5 or Table 6 is used as an example, and DMRS port numbers may be a port 0 to a port 47.

For brevity, FIG. 6 is used as an example. DMRS ports may be divided into three CDM groups, and each CDM group corresponds to 16 DMRS ports, and corresponds to an FD-OCC of length 8 and a TD-OCC of length 2. The FD-OCC ${w}_{f}^{8} = \left[{w}_{f}\left(0\right),{w}_{f}\left(1\right),…,{w}_{f}\left(7\right)\right]$ of length 8 and the TD-OCC ${w}_{t}^{2} = \left[{w}_{t}\left(0\right),{w}_{t}\left(1\right)\right]$ of length 2 form an OCC code $\left({w}_{1},{w}_{2},…,{w}_{15}\right) = {w}_{t}^{2} ⊗ {w}_{f}^{8}$ of length 16 for code division multiplexing, and are mapped to eight subcarriers and two OFDM symbols. For example, the eight subcarriers (that is, an example of the L frequency domain units) may be divided into two subcarrier groups (that is, an example of the K frequency domain unit groups), and each subcarrier group includes four consecutive subcarriers.

For example, the CDM group 0 in FIG. 6 is used as an example, and DMRS ports in the CDM group 0 are a port 0, a port 1, a port 2, a port 3, a port 4, a port 5, a port 6, a port 7, a port 24, a port 25, a port 26, a port 27, a port 28, a port 29, a port 30, and a port 31. The DMRS ports in the CDM group 0 occupy a same time-frequency resource. As shown in FIG. 6, the DMRS ports in the CDM group 0 occupy two OFDM symbols, and occupy subcarriers with indexes 0, 1, 2, 3, 12, 13, 14, and 15 in two consecutive RBs.

For another example, the CDM group 1 in FIG. 6 is used as an example, and DMRS ports in the CDM group 1 are a port 8, a port 9, a port 10, a port 11, a port 12, a port 13, a port 14, a port 15, a port 32, a port 33, a port 34, a port 35, a port 36, a port 37, a port 38, and a port 39. The DMRS ports in the CDM group 1 occupy a same time-frequency resource. As shown in FIG. 6, the DMRS ports in the CDM group 1 occupy two OFDM symbols, and occupy subcarriers with indexes 4, 5, 6, 7, 16, 17, 18, and 19 in two consecutive RBs.

For another example, the CDM group 2 in FIG. 6 is used as an example, and DMRS ports in the CDM group 2 are a port 16, a port 17, a port 18, a port 19, a port 20, a port 21, a port 22, a port 23, a port 40, a port 41, a port 42, a port 43, a port 44, a port 45, a port 46, and a port 47. The DMRS ports in the CDM group 2 occupy a same time-frequency resource. As shown in FIG. 6, the DMRS ports in the CDM group 2 occupy two OFDM symbols, and occupy subcarriers with indexes 8, 9, 10, 11, 20, 21, 22, and 23 in two consecutive RBs.

It may be understood that FIG. 7 is similar to FIG. 6, and a difference lies in that in FIG. 7, eight subcarriers (that is, an example of the L frequency domain units) may be divided into four subcarrier groups (that is, an example of the K frequency domain unit groups), and each subcarrier group includes two consecutive subcarriers.

In a second possible case, P=96. That is, a maximum of 96 DMRS ports are supported. The following provides descriptions with reference to two scenarios.

Scenario 1: A quantity of symbols occupied by a DMRS is 1. In this scenario, a length of the TD-OCC sequence is 1. In addition, Table 7 or Table 8 is used as an example, and DMRS port numbers may be a port 0 to a port 47.

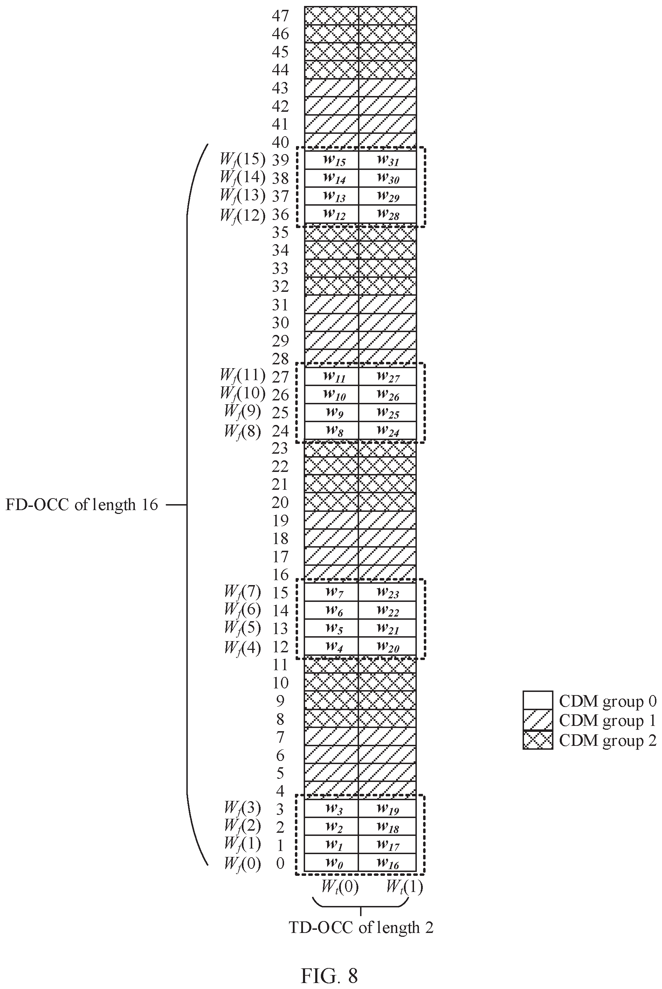

FIG. 8 is another diagram of DMRS time-frequency resource mapping according to an embodiment of this application.

As shown in FIG. 8, DMRS ports may be divided into three CDM groups. For differentiation, the three CDM groups are respectively referred to as a CDM group 0, a CDM group 1, and a CDM group 2. Each CDM group corresponds to 16 DMRS ports, and each DMRS port corresponds to an FD-OCC of length 16, and is mapped to 16 subcarriers and one OFDM symbol (for example, a 1^{st} OFDM symbol shown in FIG. 8). For example, the 16 subcarriers (that is, an example of the L frequency domain units) may be divided into four subcarrier groups (that is, an example of the K frequency domain unit groups), and each subcarrier group includes four consecutive subcarriers.

For example, the CDM group 0 in FIG. 8 is used as an example, and DMRS ports in the CDM group 0 include a port 0, a port 1, a port 2, a port 3, a port 4, a port 5, a port 6, a port 7, a port 8, a port 9, a port 10, a port 11, a port 12, a port 13, a port 14, and a port 15. The DMRS ports in the CDM group 0 occupy a same time-frequency resource. As shown in FIG. 8, the DMRS ports in the CDM group 0 occupy subcarriers with indexes 0, 1, 2, 3, 12, 13, 14, 15, 24, 25, 26, 27, 36, 37, 38, and 39 in four consecutive RBs.

For another example, the CDM group 1 in FIG. 8 is used as an example, and DMRS ports in the CDM group 1 include a port 16 to a port 31. The DMRS ports in the CDM group 1 occupy a same time-frequency resource. As shown in FIG. 8, the DMRS ports in the CDM group 1 occupy subcarriers with indexes 4 to 7, 16 to 19, 28 to 31, and 40 to 43 in four consecutive RBs.

For another example, the CDM group 2 in FIG. 8 is used as an example, and DMRS ports in the CDM group 2 include a port 32 to a port 47. The DMRS ports in the CDM group 2 occupy a same time-frequency resource. As shown in FIG. 8, the DMRS ports in the CDM group 2 occupy subcarriers with indexes 8 to 11, 20 to 23, 32 to 35, and 44 to 47 in four consecutive RBs.

In addition, for example, in the example shown in FIG. 8, 96 DMRS ports may be divided into three CDM groups, and each CDM group may include a same quantity of DMRS ports. In this case, for the DMRS port *pⱼ,* an *m*^{th} sequence element *r*(*m*) in a corresponding DMRS sequence may be mapped to a time-frequency resource according to a mapping rule, for example, mapped to an RE with an index (*k,l*)_{*p*,*µ*}. For a specific mapping rule, refer to formula (9), and in this case, *k* in formula (9) satisfies $k = \left\{\begin{matrix}48 n + k ′ + Δ & k ′ = 0 , 1 , 2 , 3 \\ 48 n + k ′ + Δ + 8 & k ′ = 4 , 5 , 6 , 7 \\ 48 n + k ′ + Δ + 16 & k ′ = 8 , 9 , 10 , 11 \\ 48 n + k ′ + Δ + 24 & k ′ = 12 , 13 , 14 , 15\end{matrix}\right.$*.*

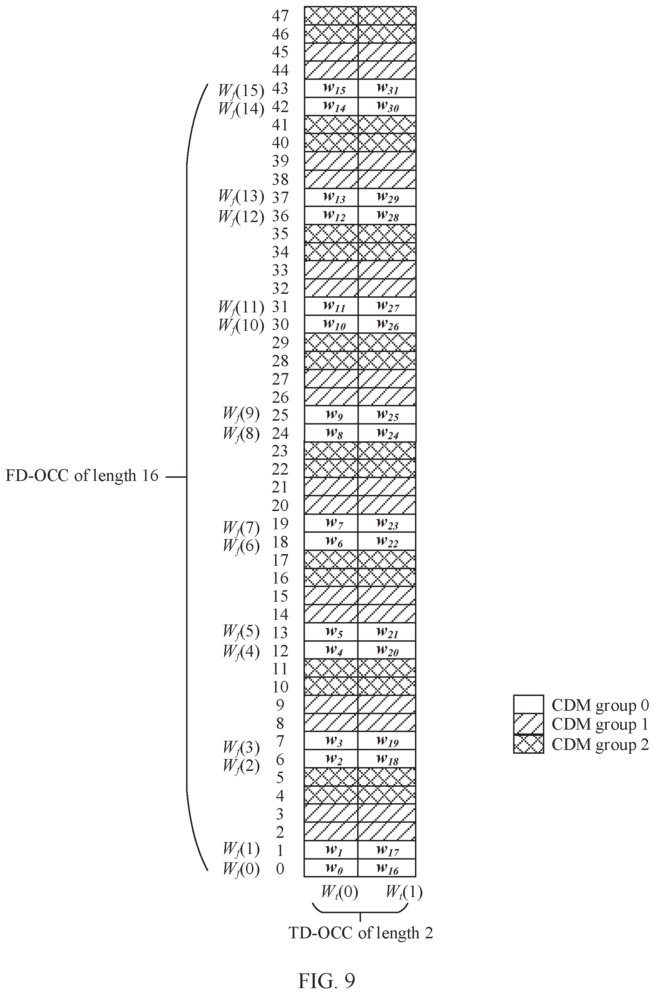

FIG. 9 is another diagram of DMRS time-frequency resource mapping according to an embodiment of this application.

As shown in FIG. 9, DMRS ports may be divided into three CDM groups. For differentiation, the three CDM groups are respectively referred to as a CDM group 0, a CDM group 1, and a CDM group 2. Each CDM group corresponds to 16 DMRS ports, and each DMRS port corresponds to an FD-OCC of length 16, and is mapped to 16 subcarriers and one OFDM symbol (for example, a 1^{st} OFDM symbol shown in FIG. 9). For example, the 16 subcarriers (that is, an example of the L frequency domain units) may be divided into eight subcarrier groups (that is, an example of the K frequency domain unit groups), and each subcarrier group includes two consecutive subcarriers.

For example, the CDM group 0 in FIG. 9 is used as an example, and DMRS ports in the CDM group 0 include a port 0, a port 1, a port 2, a port 3, a port 4, a port 5, a port 6, a port 7, a port 8, a port 9, a port 10, a port 11, a port 12, a port 13, a port 14, and a port 15. The DMRS ports in the CDM group 0 occupy a same time-frequency resource. As shown in FIG. 9, the DMRS ports in the CDM group 0 occupy subcarriers with indexes 0, 1, 6, 7, 12, 13, 18, 19, 24, 25, 30, 31, 36, 37, 42, and 43 in four consecutive RBs.

For another example, the CDM group 1 in FIG. 9 is used as an example, and DMRS ports in the CDM group 1 include a port 16 to a port 31. The DMRS ports in the CDM group 1 occupy a same time-frequency resource. As shown in FIG. 9, the DMRS ports in the CDM group 1 occupy subcarriers with indexes 2, 3, 8, 9, 14, 15, 20, 21, 26, 27, 32, 33, 38, 39, 44, and 45 in four consecutive RBs.

For another example, the CDM group 2 in FIG. 9 is used as an example, and DMRS ports in the CDM group 2 include a port 32 to a port 47. The DMRS ports in the CDM group 2 occupy a same time-frequency resource. As shown in FIG. 9, the DMRS ports in the CDM group 2 occupy subcarriers with indexes 4, 5, 10, 11, 16, 17, 22, 23, 28, 29, 34, 35, 40, 41, 46, and 47 in four consecutive RBs.

In addition, for example, in the example shown in FIG. 9, 96 DMRS ports may be divided into three CDM groups, and each CDM group may include a same quantity of DMRS ports. In this case, for the DMRS port *pⱼ*, an *m*^{th} sequence element *r*(*m*) in a corresponding DMRS sequence may be mapped to a time-frequency resource according to a mapping rule, for example, mapped to an RE with an index (*k,l*)*_{p,µ}*. For a specific mapping rule, refer to formula (9), and in this case, *k* in formula (9) satisfies $k = \left\{\begin{matrix}48 n + k ′ + Δ & k ′ = 0 , 1 \\ 48 n + k ′ + Δ + 4 & k ′ = 2 , 3 \\ 48 n + k ′ + Δ + 8 & k ′ = 4 , 5 \\ 48 n + k ′ + Δ + 12 & k ′ = 6 , 7 \\ 48 n + k ′ + Δ + 16 & k ′ = 8 , 9 \\ 48 n + k ′ + Δ + 20 & k ′ = 10 , 11 \\ 48 n + k ′ + Δ + 24 & k ′ = 12 , 13 \\ 48 n + k ′ + Δ + 28 & k ′ = 14 , 15\end{matrix}\right.$*.*

Scenario 2: A quantity of symbols occupied by a DMRS is 2. In this scenario, a length of the TD-OCC sequence is 2. In addition, Table 7 or Table 8 is used as an example, and DMRS port numbers may be a port 0 to a port 95.

FIG. 8 is used as an example. DMRS ports may be divided into three CDM groups, and each CDM group corresponds to 32 DMRS ports, and corresponds to an FD-OCC of length 16 and a TD-OCC of length 2. An $FD - OCC {w}_{f}^{16} = \left[{w}_{f}\left(0\right),{w}_{f}\left(1\right),…,{w}_{f}\left(15\right)\right]$ of length 16 and a $TD - OCC {w}_{t}^{2} = \left[{w}_{t}\left(0\right),{w}_{t}\left(1\right)\right]$ of length 2 form an OCC code $\left({w}_{1},{w}_{2},…,{w}_{32}\right) = {w}_{t}^{2} ⊗ {w}_{f}^{16}$ of length 32 for code division multiplexing, and are mapped to 16 subcarriers and two OFDM symbols. For example, the 16 subcarriers (that is, an example of the L frequency domain units) are divided into four subcarrier groups (that is, an example of the K frequency domain unit groups), and each subcarrier group includes four consecutive subcarriers.

For example, the CDM group 0 in FIG. 8 is used as an example. DMRS ports in the CDM group 0 are a port 0 to a port 15 and a port 48 to a port 63. The DMRS ports in the CDM group 0 occupy a same time-frequency resource. As shown in FIG. 8, the DMRS ports in the CDM group 0 occupy two OFDM symbols, and occupy subcarriers with indexes 0, 1, 2, 3, 12, 13, 14, 15, 24, 25, 26, 27, 36, 37, 38, and 39 in four consecutive RBs.

For another example, the CDM group 1 in FIG. 8 is used as an example. DMRS ports in the CDM group 1 are a port 16 to a port 31 and a port 64 to a port 79. The DMRS ports in the CDM group 1 occupy a same time-frequency resource. As shown in FIG. 8, the DMRS ports in the CDM group 1 occupy two OFDM symbols, and occupy subcarriers with indexes 4 to 7, 16 to 19, 28 to 31, and 40 to 43 in four consecutive RBs.

For another example, the CDM group 2 in FIG. 8 is used as an example. DMRS ports in the CDM group 2 are a port 32 to a port 47 and a port 80 to a port 95. The DMRS ports in the CDM group 2 occupy a same time-frequency resource. As shown in FIG. 8, the DMRS ports in the CDM group 2 occupy two OFDM symbols, and occupy subcarriers with indexes 8 to 11, 20 to 23, 32 to 35, and 44 to 47 in four consecutive RBs.

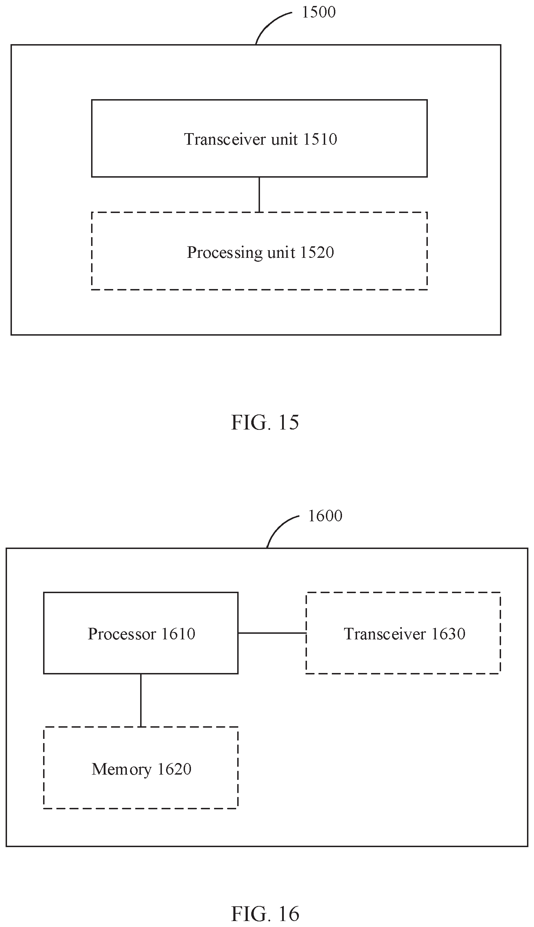

It may be understood that FIG. 9 is similar to FIG. 8, and a difference lies in that in FIG. 9, 16 subcarriers (that is, an example of the L frequency domain units) may be divided into eight subcarrier groups (that is, an example of the K frequency domain unit groups), and each subcarrier group includes two consecutive subcarriers.

It may be understood that the foregoing is an example for description, and is not limited herein. Any variation of FIG. 6 to FIG. 9 is applicable to embodiments of this application. For example, grouping of the port indexes may also be another combination.

It may be further understood that, it can be learned from the foregoing that 48 DMRS ports can be supported by extending an FD-OCC length to 8, and 96 DMRS ports can be supported by extending an FD-OCC length to 16. This is not limited in this embodiment of this application. For example, an FD-OCC of a longer length may also be designed to support more DMRS ports.

Although FD-OCC sequences corresponding to different ports are orthogonal to each other, a prerequisite for performing FD-OCC despreading between ports without interference is that channels in subcarrier groups to which the FD-OCC sequences are mapped are flat (that is, the FD-OCC sequences experience a same channel matrix). As shown in FIG. 6, an FD-OCC sequence of length 8 corresponding to one DMRS port spans 16 subcarriers. When a delay spread of a channel is large, and frequency selective fading of the channel is obvious, it is difficult to ensure channel flatness of the 16 subcarriers. As a result, interference between ports is generated during FD-OCC despreading in channel estimation. The interference problem caused by the despreading may be more serious as an FD-OCC length increases or the frequency selective fading of the channel becomes more severe.

FIG. 6 is used as an example. It can be learned that an FD-OCC sequence of length 8 is mapped to two groups of spaced subcarrier groups, and each subcarrier group corresponds to four consecutive subcarriers. In a scenario in which the frequency selective fading of the channel is obvious, channel flatness in four consecutive subcarriers is more easily satisfied. This means that after orthogonality of the FD-OCC of length 8 is damaged, orthogonality of an FD-OCC subsequence [*w_{f}*(0)*,w_{f}*(1)*, ... , w_{f}*(3)] or [*w_{f}*(4),*w_{f}*(5)*, ... , w_{f}*(7)] of length 4 is important.

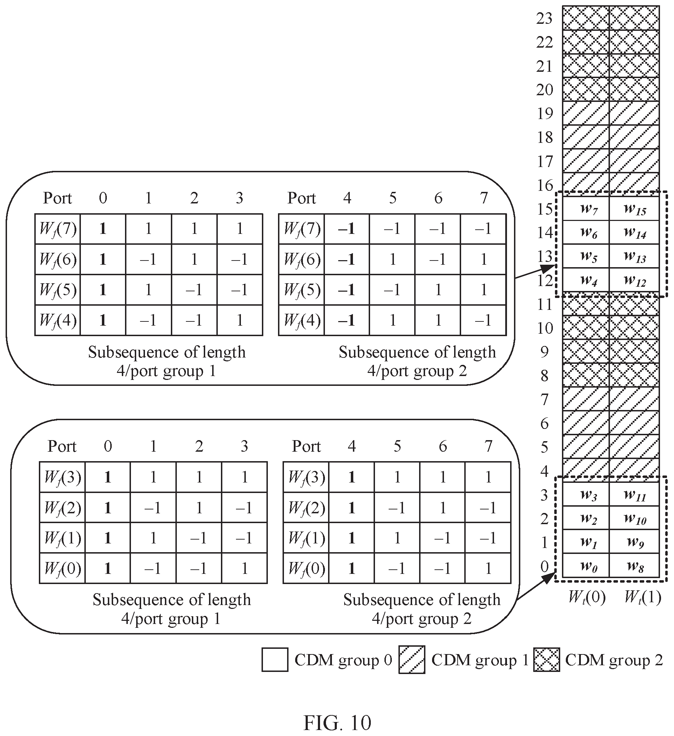

FIG. 10 is a diagram of FD-OCC subsequence mapping according to an embodiment of this application.

Because DMRS ports in a CDM group occupy same time-frequency resources, as shown in FIG. 10, for a DMRS port (for differentiation, referred to as a target DMRS port, for example, the first port), in the same time-frequency resources (for example, resources in a dashed box in FIG. 10), seven additional DMRS ports are multiplexed with the DMRS port by using an FD-OCC. For example, for a port 0, in the same time-frequency resources, seven additional DMRS ports (that is, DMRS ports 1 to 7) are multiplexed with the DMRS port 0 via FD-OCC. An FD-OCC subsequence [*w_{f}*(0)*, w_{f}*(1)*,* ..., *w_{f}*(3)] or [*w_{f}*(4), *w_{f}*(5), ... , *w_{f}*(7)] of length 4 corresponding to the port 0 is not orthogonal only to an FD-OCC subsequence of length 4 corresponding to the port 4, and is orthogonal to all FD-OCC subsequences of length 4 corresponding to other ports. It can be learned that, from a perspective of an FD-OCC subsequence of length 4, the target DMRS port is interfered by one DMRS port, and a correlation of the FD-OCC subsequence is 1. In addition, it can be learned that, if interference power corresponding to the port 4 and the port 0 is large, all subcarrier positions mapped to the port 0 in an entire frequency domain bandwidth are always strongly interfered by the port 4. Consequently, channel estimation quality of the port 0 in the entire frequency domain bandwidth is poor, and performance or experience of a terminal device corresponding to the port 0 is significantly degraded.

In view of this, this embodiment of this application provides a manner of FD-OCC sequence randomization. Specifically, different FD-OCC subsequences are randomly used in different frequency domain units (for example, different subcarrier groups). In this way, an interference port can be randomly changed in different frequency domains, to avoid that an entire frequency domain bandwidth is always strongly interfered, and achieve good interference randomization effect. The following describes the solution in detail.

Optionally, the first port corresponds to K FD-OCC subsequences, and the first port corresponds to K frequency domain unit groups. Each of the K frequency domain unit groups corresponds to one of the K FD-OCC subsequences, and K is an integer equal to 1 or greater than 1. Port indexes associated with the K FD-OCC subsequences are the same or different.

For example, a DMRS port (for example, the first port) indicated by a network device for a terminal device corresponds to an FD-OCC sequence of length L, and is mapped to L subcarriers. The FD-OCC sequence of length L corresponding to the DMRS port belongs to an FD-OCC sequence set, and the FD-OCC sequence set includes L FD-OCC sequences of length L. The L subcarriers are divided into K subcarrier groups, each subcarrier group corresponds to L/K subcarriers, and each subcarrier group corresponds to an FD-OCC subsequence of length L/K. The first port sends a same FD-OCC subsequence or different FD-OCC subsequences in different subcarrier groups to which the first port is mapped. For example, an FD-OCC subsequence may be randomly selected from an FD-OCC subsequence set. In this manner, persistent strong interference in the entire frequency domain bandwidth can be avoided, and good interference randomization effect can be achieved.

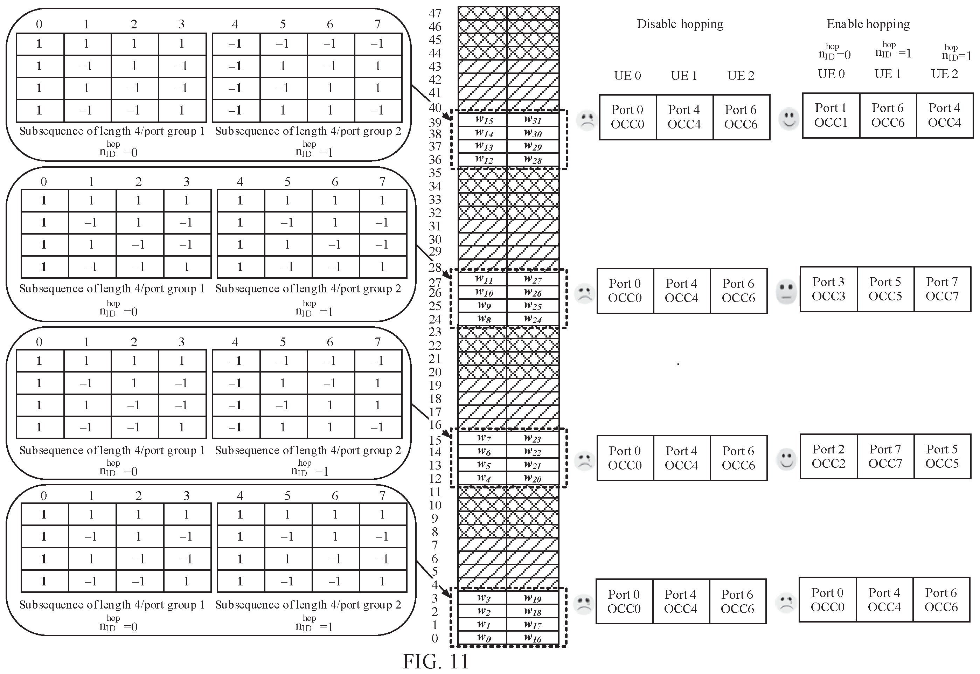

FIG. 11 is a diagram of an FD-OCC subsequence according to an embodiment of this application.

As shown in FIG. 11, an example in which a quantity of DMRS symbols is 1 is used. In two consecutive RBs, one DMRS port corresponds to an FD-OCC sequence [*w_{f}*(0)*, w_{f}*(1)*,* ..., *w_{f}*(7)] of length 8. A CDM group 0 is used as an example, and the FD-OCC sequence of length 8 is mapped to eight subcarriers. The eight subcarriers are: a subcarrier 0, a subcarrier 1, a subcarrier 2, a subcarrier 3, a subcarrier 12, a subcarrier 13, a subcarrier 14, and a subcarrier 15. A CDM group 0 is used as an example. It is assumed that one frequency domain unit (for example, a PRG) includes four RBs (that is, 48 subcarriers), the four mapped RBs include four subcarrier groups, and each subcarrier group corresponds to four consecutive subcarriers. For example, a subcarrier group 0 corresponds to subcarriers 0 to 3, a subcarrier group 1 corresponds to subcarriers 12 to 15, a subcarrier group 2 corresponds to subcarriers 24 to 27, and a subcarrier group 3 corresponds to subcarriers 36 to 39. The subcarrier group 0 and the subcarrier group 2 correspond to an FD-OCC subsequence [*w_{f}*(0)*, w_{f}*(1)*,* ..., *w_{f}*(3)] of length 4, and the subcarrier group 1 and the subcarrier group 3 correspond to an FD-OCC subsequence [*w_{f}*(4)*, w_{f}*(5)*, ..., w_{f}*(7)] of length 4. The FD-OCC subsequence of length 4 corresponding to the subcarrier group 0 and the subcarrier group 2 belongs to an FD-OCC subsequence set (for differentiation, referred to as an FD-OCC subsequence set 0), and the FD-OCC subsequence set 0 includes eight FD-OCC subsequences of length 4: [+1 +1 +1 +1], [+1 -1 +1 -1], [+1 +1 -1 -1], [+1 -1 -1 +1], [+1 +1 +1 +1], [+1 -1 +1 -1], [+1 +1 -1 -1], and [+1 -1 -1 +1]. The eight FD-OCC subsequences of length 4 respectively correspond to port indexes 0 to 7. The FD-OCC subsequence of length 4 corresponding to the subcarrier group 1 and the subcarrier group 3 belongs to an FD-OCC subsequence set 1, and the FD-OCC subsequence set 1 includes eight FD-OCC subsequences of length 4: [+1 +1 +1 +1], [+1 -1 +1 -1], [+1 +1 -1 -1], [+1 -1 -1 +1], [-1 -1 -1 -1], [-1 +1 -1 +1], [-1 -1 +1 +1], and [-1 +1 +1 -1]. The eight FD-OCC subsequences of length 4 respectively correspond to port indexes 0 to 7.

Optionally, the K FD-OCC subsequences (or an index of a port associated with each FD-OCC subsequence in the FD-OCC subsequences) are determined based on a first parameter. The first parameter includes at least one of the following: an index of the first port, an index of a reference port, an offset, an index of a frequency domain unit corresponding to the reference signal, an index of a time domain unit corresponding to the reference signal, or an initial factor. Further, optionally, the method 500 further includes: The receiving end device receives second indication information, where the second indication information indicates the first parameter. In addition, if there are a plurality of first parameters, a part of the parameters may be indicated by the second indication information, and a part of the parameters are predefined or preconfigured; or all the parameters may be indicated by the second indication information; or a part of the parameters may be indicated by the second indication information, and other parameters are determined based on the parameters indicated by the second indication information.

That the K FD-OCC subsequences are determined based on the first parameter may also be understood as follows: An FD-OCC subsequence corresponding to each of the K frequency domain unit groups is determined based on the first parameter.

For example, one frequency domain unit group may include one or more subcarriers. That is, an FD-OCC subsequence corresponding to one subcarrier group is determined based on the first parameter.

In another example, a subcarrier group including L subcarriers (that is, an example of a frequency domain unit group) is divided into at least one subband, an i^{th} subband in the at least one subband corresponds to an i^{th} FD-OCC subsequence, and an FD-OCC subsequence corresponding to each subband is determined based on the first parameter.

In another example, a subcarrier group including L' subcarriers (that is, an example of a frequency domain unit group) is divided into at least one subband, an i^{th} subband in the at least one subband corresponds to an i^{th} FD-OCC subsequence, and an FD-OCC subsequence corresponding to each subband is determined based on the first parameter. The L' subcarriers may include a plurality of groups of L subcarriers.

For example, first parameters corresponding to a plurality of FD-OCC subsequences in the K FD-OCC subsequences may be the same (that is, a plurality of frequency domain unit groups may be grouped into one large group, and inter-group hopping is enabled); or first parameters corresponding to a plurality of frequency domain units (or a plurality of frequency domain unit groups) may be the same.

The offset (or referred to as a port index offset) is an offset relative to an index of a reference signal port. The initial factor may be used to determine the offset. For example, the initial factor is related to a pseudo-random sequence used to determine the offset. For example, the initial factor is used to determine a value of a pseudo-random sequence c(). The initial factor may also be referred to as an initial identity (identity, ID), and a name of the initial factor does not limit the protection scope of embodiments of this application.

An FD-OCC subsequence (for example, referred to as a first FD-OCC subsequence) is used as an example. The first FD-OCC subsequence is determined based on a port index associated with the first FD-OCC subsequence, and the port index associated with the first FD-OCC subsequence is determined based on the offset and the index of the reference port. For example, Port index associated with the first FD-OCC subsequence=Offset+Index of the reference port. Specifically, each port index is associated with one FD-OCC subsequence, and the port index may be determined based on the index of the reference port and the offset (the offset may be determined according to, for example, formula (11) or (12)), so that the FD-OCC subsequence associated with the port index can be determined based on the determined port index.

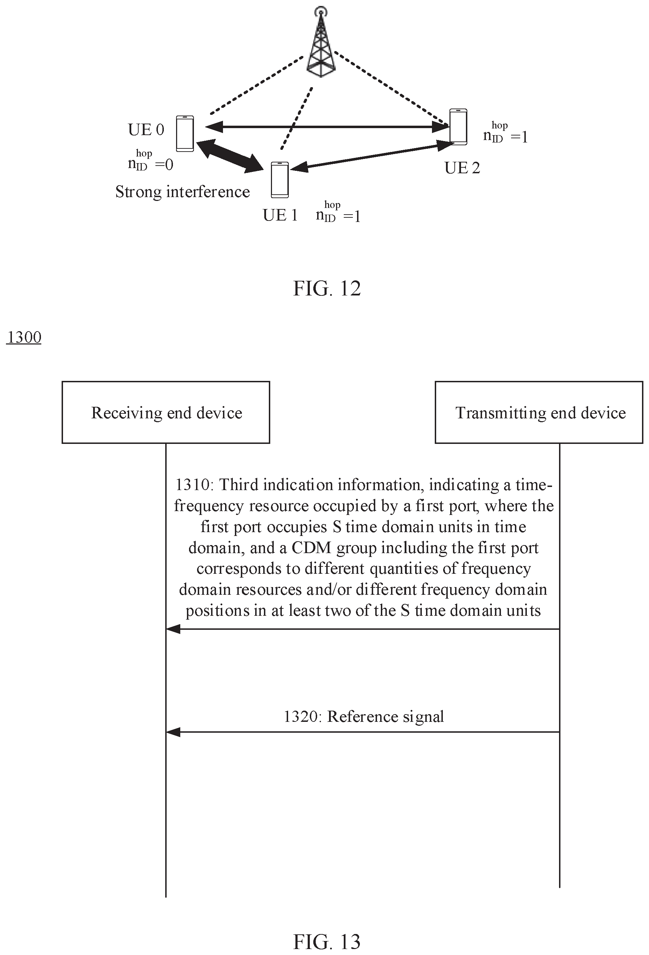

FIG. 12 is a diagram applicable to multi-user multiple-input multiple-output (multi-user multiple-input multiple-output, MD-MIMO) scheduling according to an embodiment of this application.

As shown in FIG. 12, it is assumed that a network device schedules UE 0, UE 1, and UE 2 to perform MU-MIMO transmission, and it is assumed that each UE transmits one spatial layer, and one DMRS port is correspondingly allocated. The network device may configure a reference DMRS port index for each UE. For example, the network device allocates a reference DMRS port 0 to the UE 0, a reference DMRS port 4 to the UE 1, and a reference DMRS port 6 to the UE 2. It can be learned that the three allocated DMRS ports belong to a same CDM group (CDM group 0). The network device may configure a different initial factor (for example, ${n}_{ID}^{hop}$ represents the initial factor) for each of the UE 0 to the UE 2. After FD-OCC subsequence hopping (or referred to as DMRS port frequency domain hopping) is enabled (that is, FD-OCC subsequences corresponding to a port in different subcarrier groups are determined based on the initial factor), in a k^{th} subcarrier group (k=0, 1, 2, 3) in an n^{th} frequency domain unit, a DMRS may be transmitted according to an FD-OCC sequence corresponding to a port index *pⱼ*(*n, k*)*.*

Optionally, the port index (that is, *pⱼ*(*n, k*)) associated with the FD-OCC subsequence is determined based on at least one of the following: an offset, an index of a reference port, and a total quantity of ports and/or a quantity of port groups. The total quantity of ports may represent a total quantity of candidate or optional ports, and the quantity of port groups represents a quantity of port groups corresponding to the total quantity of candidate or optional ports.

For example, *pⱼ*(*n, k*) satisfies formula (10). ${p}_{j} \left(n, k\right) = \left⌊\frac{{p}_{j , 0}}{Y / Z}\right⌋ ⋅ \frac{Y}{Z} + mod \left({p}_{j , 0}+{p}_{offset}\left(n, k\right),Y/Z\right)$ (10)
*p*_{*j*,0} represents an index of a reference port allocated to UE, j represents a spatial layer index or represents a j^{th} port corresponding to the UE, for example, *j =* 0,1*,...,v-*1*,* and v represents a quantity of spatial layers corresponding to the UE, or represents a rank corresponding to the UE. *p*_{offset}(*n*, *k*) represents the offset, and *p*_{offset}(*n*, *k*) corresponding to different subcarrier groups is not completely the same. Y represents the total quantity of ports (for example, the total quantity of candidate or optional ports). Z represents a quantity Z of port groups into which the ports of the total quantity are divided, and each port group includes Y/Z ports. For example, a value of Y is equal to L, and L is a length of an FD-OCC sequence. For example, a value of Z is K, and K represents a quantity of groups (that is, an FD-OCC sequence of length L is divided into K FD-OCC subsequences). For example, when hopping is not enabled, *p*_{*j,*0} may be a port index allocated to a receiving end device (for example, UE), or a port index corresponding to an offset 0. This is not limited herein.

In a possible implementation, different offsets *p*_{offset}(*n*, *k*) are randomly selected for different subcarrier groups.

For example, the offset *p*_{offset}(*n*, *k*) satisfies formula (11) or (12). ${p}_{offset} \left(n, k\right) = \left({\sum }_{m = 0}^{T - 1} \left(c\left(T\left({nN}_{s c}^{RBG}+k\right)+m\right){2}^{m}\right)\right) mod Y / Z$ (11) ${p}_{offset} \left(n, k\right) = \left({\sum }_{m = 0}^{T - 1} \left(c\left(T\left({nN}_{s c}^{RBG}+k\right)+m\right){2}^{m}\right)\right)$ (12)
c() represents a pseudo-random sequence, and initialization of c() is related to a configured initial factor ${n}_{ID}^{hop}$*.* ${N}_{s c}^{RBG}$ represents a quantity of subcarriers included in a frequency domain unit, and T is a positive integer, for example, T=8. For the pseudo-random sequence, refer to the foregoing related descriptions, and refer to formula (4) and formula (5). Details are not described herein again.

FIG. 11 is used as an example. In the example shown in FIG. 11, L=8, Y=8, and Z=2. For example, eight ports (that is, a total quantity Y of ports is 8) may be divided into two (that is, Z=2) port groups, and each port group includes four ports. For example, it is assumed that one port group (for example, referred to as a port group 1) of the two port groups includes a port 0 to a port 3, and the other port group (for example, referred to as a port group 2) includes a port 4 to a port 7. For example, a reference port allocated by the network device to the UE 0 is the port 0 (for example, referred to as a reference DMRS port 0). That is, the DMRS port corresponding to the UE 0 belongs to the port group 1. A reference port allocated by the network device to the UE 1 is the port 4 (for example, referred to as a reference DMRS port 4) and a reference port allocated by the network device to the UE 2 is the port 6 (for example, referred to as a reference DMRS port 6). That is, the DMRS ports corresponding to the UE 1 and the UE 2 belong to the port group 2. It is assumed that the network device configures an initial factor ${n}_{ID}^{hop} = 0$ for the UE 0, and configures an initial factor ${n}_{ID}^{hop} = 1$ for the UE 1 and the UE 2. Based on the foregoing formulas and methods, the UE 0 may randomly select, in different subcarrier groups, a sequence from FD-OCC subsequences corresponding to port indexes 0 to 3 (the port group 1), to perform DMRS transmission or receiving. Similarly, the UE 1 and the UE 2 may randomly select, in different subcarrier groups, a sequence from FD-OCC subsequences corresponding to port indexes 4 to 7 (the port group 2), to perform DMRS transmission or receiving. Because initial factors configured for the UE 1 and the UE 2 are the same, corresponding values of *p*_{offset}(*n*, k) are the same in different subcarrier groups. Therefore, different reference port indexes are configured for the UE 1 and the UE 2. In this way, even if the offsets *p*_{offset}(*n*, *k*) of the UE 1 and the UE 2 are the same, interference between the UE 1 and the UE 2 does not degrade. It can be seen from FIG. 11 that, in the subcarrier group 0, the UE 0 to the UE 2 respectively correspond to FD-OCC sequences corresponding to the port 0, the port 4, and the port 6. Because a correlation between the FD-OCC subsequences corresponding to the port 0 and the port 4 is 1, the port 0 (the UE 0) experiences strong interference from the port 4 (the UE 1). However, in the subcarrier group 1, values of *p*_{offset}(*n*, *k*) corresponding to the UE 0 to the UE 2 are 2, 3, and 3 respectively, and therefore, the UE 0 to the UE 2 respectively correspond to FD-OCC sequences corresponding to the port 2, the port 7, and the port 5. Because the FD-OCC subsequences corresponding to the port 2, the port 7, and the port 5 are orthogonal to each other, the port 0 (the UE 0) experiences no interference from other UE ports. It can be learned that, according to FD-OCC subsequence hopping (or referred to as DMRS port frequency domain hopping) proposed in this application, continuous strong interference impact on different frequency domain subbands in a frequency domain unit can be avoided, to avoid severe degradation in channel estimation quality in an entire band. As shown in FIG. 11, in a frequency domain unit, for the subcarrier groups 0 to 3, interference between FD-OCC subsequences caused by sent DMRSs varies. Therefore, better interference randomization effect is achieved, and better channel estimation performance can be obtained in a strong interference scenario.

In the foregoing embodiment, FD-OCC sequence randomization is used as an example for description. This is not limited herein. For example, TD-OCC sequence randomization may also be performed. For example, the TD-OCC sequence may be determined based on the first parameter.

Considering different terminal devices in an actual network may be located in different geographical locations and environments, channel conditions of the different terminal devices are also differentiated. For example, channels of different terminal devices exhibit different delay spreads or varying degrees of frequency selective fading. For terminal devices with different channel conditions, requirements for pilot density in frequency domain are also differentiated. For example, the reference signal is a DMRS. If an actual channel condition is not considered, and frequency domain densities corresponding to all DMRS ports or port groups or quantities of occupied time-frequency resources are designed to be the same, it is difficult to consider differentiated channel conditions in a network. Alternatively, if frequency domain densities corresponding to all DMRS ports or port groups are designed based on a channel condition with worst channel frequency selectivity, terminal devices with weak channel frequency selectivity may waste reference signal overheads.

In view of this, this embodiment of this application provides a manner of designing respective reference signal resources for different ports or port groups. For example, respective reference signal frequency domain densities are designed for different ports or port groups (for example, different reference signal frequency domain densities are designed for different port groups), or respective quantities of time-frequency resources are designed for different ports or port groups (for example, different port groups occupy different quantities of time-frequency resources), to accommodate differentiated channel conditions, and reduce reference signal overheads. The following describes in detail with reference to the method 1300. It may be understood that the method 1300 described below and the method 500 may be used in combination, or may be used separately. This is not limited herein.

FIG. 13 is a diagram of a signal transmission method 1300 according to another embodiment of this application. For ease of description, an example in which the method 1300 is performed by a receiving end device (for example, a terminal device, and for another example, a network device) is used below for description. It may be understood that the method 1300 may alternatively be performed by a component of the receiving end device, for example, a chip, a chip system, or a circuit. This is not limited herein. The steps described below as being performed by a single execution body may alternatively be performed by a plurality of execution bodies. These execution bodies may be logically and/or physically separated. The method 1300 shown in FIG. 13 may include the following steps.

1310: The receiving end device receives third indication information, where the third indication information indicates a time-frequency resource occupied by a first port, the first port occupies S time domain units in time domain, and a CDM group including the first port corresponds to different quantities of frequency domain resources and/or different frequency domain positions in at least two of the S time domain units.

S is an integer greater than 1.

The first port is used to transmit a reference signal. For the reference signal, refer to the related descriptions in the method 500. For example, the first port belongs to a port set, a quantity of ports included in the port set is P, and P is an integer greater than 24. For a related solution of the first port, refer to the related descriptions in the method 500.

For example, the S time domain units may be replaced with S time domain unit groups (or referred to as S groups of time domain units). Each time domain unit group includes one or more time domain units, and quantities of time domain units included in the time domain unit groups may be the same or may be different.

The time domain unit may be, for example, an OFDM symbol, or another time domain unit. For details, refer to related descriptions in the foregoing term part. Herein, the OFDM symbol is mainly used as an example for description.

The third indication information indicates the time-frequency resource occupied by the first port. That is, the terminal device may learn, based on the third indication information, the time-frequency resource occupied by the first port. For example, the third indication information is carried in at least one of the following: downlink control information (downlink control information, DCI) and radio resource control (radio resource control, RRC) signaling.

A related solution of the time-frequency resource occupied by the first port is described in detail in the following.

1320: The terminal device receives the reference signal based on the third indication information.

Specifically, the terminal device may receive the reference signal in a corresponding position based on the time-frequency resource, occupied by the first port, indicated by the third indication information.

Optionally, that the third indication information indicates the time-frequency resource occupied by the first port may include the following implementations.

In a first possible implementation, the third indication information indicates a time domain resource occupied by the first port.

For example, the third indication information indicates the S time domain units occupied by the first port. For example, the third indication information includes at least one piece of the following information: indexes of the S time domain units occupied by the first port, a start time domain unit occupied by the first port, an end time domain unit occupied by the first port, or a quantity of time domain units occupied by the first port.

Based on this implementation, for example, a frequency domain resource occupied by the first port, that is, a position of a frequency domain resource in each time domain unit may be predefined or preconfigured. This is not limited herein.

In a second possible implementation, the third indication information indicates a frequency domain resource of the first port in each of the S time domain units.

For example, the third indication information indicates a frequency domain position, a quantity of occupied frequency domain resources (or frequency domain units), a start frequency domain position, an end frequency domain position, or a frequency domain density of the first port in each of the S time domain units.

In a third possible implementation, the third indication information indicates frequency domain resources of the first port in a part of the S time domain units, and there is an association between the frequency domain resources in the time domain units and frequency domain resources in remaining time domain units. In this way, the terminal device may directly learn of the frequency domain resources in the part of the S time domain units based on the third indication information, and may further learn of the frequency domain resources in the remaining time domain units based on the association. Further, optionally, the association may be predefined, preconfigured, or indicated by the network device to the terminal device (for example, carried in the third indication information). This is not limited herein.

The foregoing describes three implementations, and this is not limited thereto. Any manner of indicating a time-frequency resource by using signaling is applicable to this embodiment of this application.

Optionally, the S time domain units include a first time domain unit and a second time domain unit, and an interval between start frequency domain positions that are corresponding to a port group (or a CDM group) including the first port in the first time domain unit and the second time domain unit is any one of the following: X/2, X/4, or 3X/4, where X is a quantity of subcarriers included in one frequency domain unit. One frequency domain unit may be, for example, two RBs, four RBs, or one RBG. This is not limited herein.

The following uses an example in which the time domain unit is an OFDM symbol and the reference signal is a DMRS to describe several possible cases of a time-frequency resource occupied by the DMRS. In addition, it is assumed that S OFDM symbols include S/Q OFDM symbol groups, and each OFDM symbol group includes a same quantity of OFDM symbols. That is, each OFDM symbol group includes Q OFDM symbols, where Q is an integer greater than 1 or equal to 1.

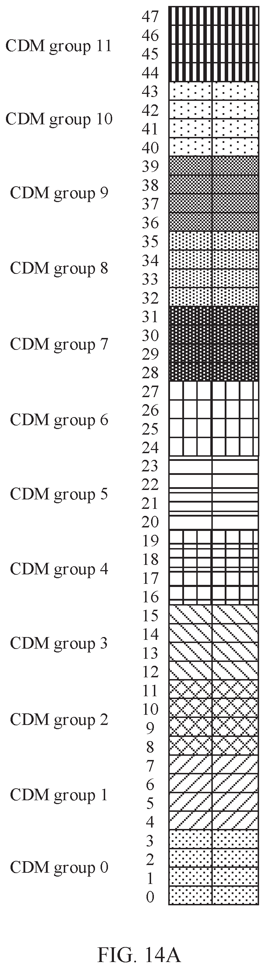

FIG. 14A to FIG. 14C are diagrams of DMRS time-frequency resource mapping under different quantities of symbols according to an embodiment of this application.

The following provides descriptions with reference to three possible cases.

### Case 1: S=2, and Q=2.

As shown in FIG. 14A, in this case, a DMRS port occupies two OFDM symbols, the two DMRS symbols include one OFDM symbol group, and the OFDM symbol group supports a total of 12 CDM groups. When a frequency domain unit is four RBs (for example, a size of a PRG is four RBs), each CDM group corresponds to four consecutive subcarriers. Each DMRS port in the CDM group corresponds to an FD-OCC sequence of length 4 (the FD-OCC sequence shown in Table 5 to Table 8) and a TD-OCC sequence of length 2 (the TD-OCC sequence shown in Table 5 to Table 8). When S=2, one CDM group may include eight DMRS ports. In this case, 12 CDM groups may include a total of 96 DMRS ports. It can be learned that when S=2, one CDM group is mapped to only one subcarrier group (four consecutive subcarriers) in one frequency domain unit (four RBs). This is applicable to a scenario in which a delay spread of all users is very small and a channel is flat.

### Case 2: S=4, and Q=2.

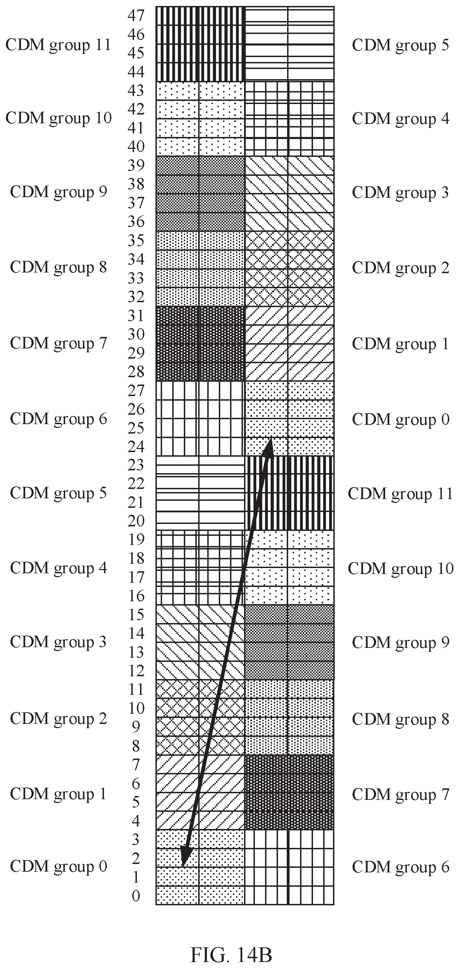

As shown in FIG. 14B, in this case, a DMRS port occupies four DMRS symbols, and the four DMRS symbols include two OFDM symbol groups. For differentiation, the two OFDM symbol groups are referred to as an OFDM symbol group 0 and an OFDM symbol group 1. The OFDM symbol group 0 corresponds to the first two OFDM symbols, and the OFDM symbol group 1 corresponds to the last two OFDM symbols. Each of the two OFDM symbol groups supports a total of 12 CDM groups. When a frequency domain unit is four RBs (for example, a size of a PRG is four RBs), each CDM group corresponds to one subcarrier group in each OFDM symbol group, and one subcarrier group includes four consecutive subcarriers. Each DMRS port included in the CDM group corresponds to an FD-OCC sequence of length 4 (the FD-OCC sequence shown in Table 5 to Table 8) and a TD-OCC sequence of length 2 (the TD-OCC sequence shown in Table 5 to Table 8).

A same CDM group (or a same DMRS port) occupies different frequency domain resources in different OFDM groups. As shown in FIG. 14B, for the OFDM symbol group 0 and the OFDM symbol group 1, a same CDM group corresponds to different frequency domain subcarriers. Specifically, an X/2 offset exists between a subcarrier index mapped to a CDM group in the OFDM symbol group 1 and a subcarrier index mapped to the same CDM group in the OFDM symbol group 0, where X indicates a quantity of subcarriers included in a frequency domain unit. As shown in FIG. 14B, a subcarrier group corresponding to a CDM group 0 is used as an example. In the OFDM symbol group 0, in a frequency domain unit with a size of four RBs, mapped subcarrier indexes are 0 to 3. In the OFDM symbol group 1, in a frequency domain unit with a size of four RBs, mapped subcarrier indexes are 24 to 27, and a subcarrier index offset is 24 subcarriers. It can be learned that when S=4, one CDM group may include eight DMRS ports, and 12 CDM groups may include a total of 96 DMRS ports. It can be learned that when S=4, one CDM group is mapped to a total of two subcarrier groups (four consecutive subcarriers) in different OFDM symbol groups in one frequency domain unit (four RBs).

### Case 3: S=6, and Q=2.

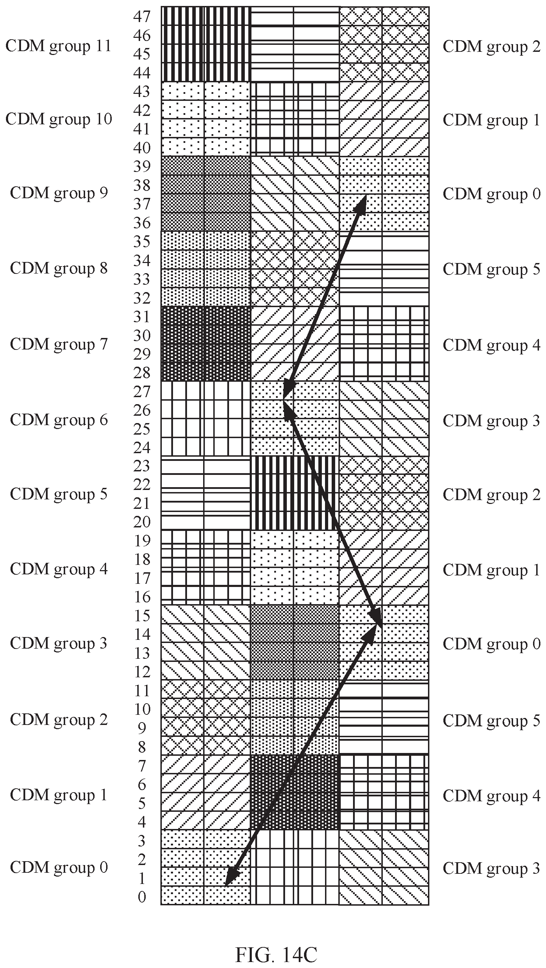

As shown in FIG. 14C, in this case, a DMRS port occupies six DMRS symbols, and the six DMRS symbols include three OFDM symbol groups. For differentiation, the three OFDM symbol groups are referred to as an OFDM symbol group 0, an OFDM symbol group 1, and an OFDM symbol group 2. The OFDM symbol group 0 corresponds to the first two OFDM symbols, the OFDM symbol group 1 corresponds to the two middle OFDM symbols, and the OFDM symbol group 2 corresponds to the last two OFDM symbols. Quantities of CDM groups supported by different OFDM symbol groups in the three OFDM symbol groups are not exactly the same. As shown in FIG. 14C, each of the OFDM symbol group 0 and the OFDM symbol group 1 supports a total of 12 CDM groups, and the OFDM symbol group 2 supports a total of 6 CDM groups. When a frequency domain unit is four RBs (for example, a size of a PRG is four RBs), each CDM group corresponds to one subcarrier group in the OFDM symbol group 0 and the OFDM symbol group 1, and one subcarrier group includes four consecutive subcarriers. Each CDM group corresponds to two subcarrier groups in the OFDM symbol group 2, and each subcarrier group includes four consecutive subcarriers. Each DMRS port included in the CDM group corresponds to an FD-OCC sequence of length 4 (the FD-OCC sequence shown in Table 5 to Table 8) and a TD-OCC sequence of length 2 (the TD-OCC sequence shown in Table 5 to Table 8).

A same CDM group (or a same DMRS port) occupies different frequency domain resources in different OFDM groups. As shown in FIG. 14C, for the OFDM symbol group 0, the OFDM symbol group 1, and the OFDM symbol group 2, a same CDM group corresponds to different frequency domain subcarriers. Specifically, an offset of X/2 offset exists between a subcarrier index mapped to a CDM group in the OFDM symbol group 1 and a subcarrier index mapped to the same CDM group in the OFDM symbol group 0, and an offset of X/4 or 3X/4 exists between a subcarrier index mapped to a CDM group in the OFDM symbol group 2 and a subcarrier index mapped to the same CDM group in the OFDM symbol group 0, where X represents a quantity of subcarriers included in a frequency domain unit. As shown in FIG. 14C, a subcarrier group corresponding to a CDM group 0 is used as an example. In the OFDM symbol group 0, in a frequency domain unit with a size of four RBs, mapped subcarrier indexes are 0 to 3. In the OFDM symbol group 1, in a frequency domain unit with a size of four RBs, mapped subcarrier indexes are 24 to 27, and a subcarrier index offset is 24 subcarriers. In the OFDM symbol group 2, in a frequency domain unit with a size of four RBs, mapped subcarrier indexes are 12 to 15 (a subcarrier index offset is 24 subcarriers) and mapped subcarrier indexes are 36 to 39 (a subcarrier index offset is 36 subcarriers). It can be learned that when S=6, one CDM group may multiplex eight DMRS ports, and 12 CDM groups may support a total of 96 DMRS ports. It can be learned that when S=6, CDM groups 0 to 5 are mapped to a total of four subcarrier groups (four consecutive subcarriers) in different OFDM symbol groups in one frequency domain unit (four RBs). CDM groups 6 to 11 are mapped to a total of two subcarrier groups (four consecutive subcarriers) in different OFDM symbol groups in one frequency domain unit (four RBs).

It may be understood that FIG. 14A to FIG. 14C are an example for description, and is not limited herein. In actual communication, the network device may configure different quantities of symbols (or may be referred to as a quantity of DMRS symbols, for example, a quantity of OFDM symbols) and/or different port groups (or different CDM groups) in different cases (for example, different network load and different channel environments). For example, when S is greater than 2, a part of CDM groups may be configured. That is, not all CDM groups need to be configured.

It may be further understood that, in some embodiments above, "to" is mentioned a plurality of times, and is an omitted description used for brevity. For example, subcarriers 0 to 3 represent the subcarrier 0 to the subcarrier 3. That is, the subcarriers 0 to 3 include the subcarrier 0, the subcarrier 1, the subcarrier 2, and the subcarrier 3. For another example, a port 5 to a port 7 represent the port 5 to the port 7. That is, the port 5 to the port 7 include the port 5, the port 6, and the port 7. Other cases are similar and are not described herein.

It may be further understood that in some of the foregoing embodiments, an example in which each of the K frequency domain unit groups corresponds to one of the K FD-OCC subsequences is used for description. This is not limited herein. Any variation of this solution is applicable to this embodiment of this application. For example, it is assumed that the reference signal corresponds to the K frequency domain unit groups, and the K frequency domain unit groups may correspond to the K FD-OCC sequences. Further, the K FD-OCC sequences include K1 FD-OCC sequences and K2 FD-OCC subsequences. That is, the K frequency domain unit groups correspond to K1 FD-OCC sequences and K2 FD-OCC subsequences, where K1 and K2 are integers greater than 0 or equal to 0, less than K, or equal to K, and K1+K2=K. Further, for a manner of determining the K FD-OCC sequences (for example, the K2 FD-OCC subsequences), refer to the foregoing related descriptions.

It may be further understood that a sequence (for example, an FD-OCC sequence of length L) listed in this embodiment of this application is an example for description, and is not limited thereto. Any variation of the sequence is applicable to this embodiment of this application. For example, the sequence may be multiplied by an amplitude coefficient or a power coefficient. The amplitude coefficient and the power coefficient may be used to normalize power of a sequence or a vector.

It may be further understood that in some of the foregoing embodiments, division is used as an example for description, for example, L/K. This is not limited herein. For example, various rounding operations may also be performed on this basis, for example, rounding up (for example, $\left⌈L/K\right⌉$) or rounding down (for example, $\left⌊L/K\right⌋$). This is not limited herein.

It may be further understood that the formulas used in embodiments of this application are merely examples for description and constitute no limitation on the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be further understood that the solutions in embodiments of this application may be appropriately combined for use, and explanations or descriptions of terms in the embodiments may be mutually referenced or explained in the embodiments. This is not limited.

It may be further understood that, in the foregoing method embodiments, methods and operations implemented by a communication device (for example, a receiving end device, or for another example, a transmitting end device) may alternatively be implemented by a component (for example, a chip or a circuit) of the communication device.

In correspondence to the method provided in the foregoing method embodiments, an embodiment of this application further provides a corresponding apparatus. The apparatus includes a corresponding module configured to perform the foregoing method embodiments. The modules may be software, hardware, or a combination of software and hardware. It may be understood that the technical features described in the method embodiments are also applicable to the following apparatus embodiments.

The following describes an apparatus in this application in detail with reference to FIG. 15 to FIG. 17. It should be understood that descriptions of apparatus embodiments correspond to the descriptions of the method embodiments. Therefore, for content that is not described in detail, refer to the method embodiments. For brevity, details are not described herein again.

FIG. 15 is a block diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to perform data or information processing, for example, generate a reference signal.

Optionally, the apparatus 1500 further includes a storage unit. The storage unit may be configured to store instructions and/or data. The processing unit 1520 may read the instructions and/or the data in the storage unit, so that the apparatus is enabled to execute the actions of the receiving end device in the foregoing method embodiments.

In a design, the apparatus 1500 may be the receiving end device in the foregoing embodiments, or may be a component (for example, a chip) of the receiving end device. The apparatus 1500 may implement the steps or the processes performed by the receiving end device in the foregoing method embodiments. The transceiver unit 1510 may be configured to perform a sending/receiving-related operation performed by the receiving end device in the foregoing method embodiments. The processing unit 1520 may be configured to perform a processing-related operation performed by the receiving end device in the foregoing method embodiments.

In a possible implementation, the transceiver unit 1510 is configured to receive first indication information, where the first indication information indicates a first port, the first port is used to transmit a reference signal, the first port belongs to a port set, a quantity of ports included in the port set is P, and P is an integer greater than 24. The transceiver unit 1510 is further configured to receive a reference signal based on the first indication information. Optionally, the processing unit 1520 is configured to process the reference signal.

The apparatus 1500 may implement steps or procedures performed by the receiving end device in the method embodiments according to embodiments of this application. The apparatus 1500 may include a unit configured to perform the method performed by the receiving end device in the embodiment shown in FIG. 5 or FIG. 13.

In another design, the apparatus 1500 may be the transmitting end device in the foregoing embodiments, or may be a component (for example, a chip) of the transmitting end device. The apparatus 1500 may implement the steps or the processes performed by the transmitting end device in the foregoing method embodiments. The transceiver unit 1510 may be configured to perform a sending/receiving-related operation performed by the transmitting end device in the foregoing method embodiments. The processing unit 1520 may be configured to perform a processing-related operation performed by the transmitting end device in the foregoing method embodiments.

In a possible implementation, the transceiver unit 1510 is configured to send first indication information, where the first indication information indicates a first port, the first port is used to transmit a reference signal, the first port belongs to a port set, a quantity of ports included in the port set is P, and P is an integer greater than 24. The transceiver unit 1510 is further configured to send a reference signal.

The apparatus 1500 may implement steps or procedures performed by the transmitting end device in the method embodiments according to embodiments of this application. The apparatus 1500 may include a unit configured to perform the method performed by the transmitting end device in the embodiment shown in FIG. 5 or FIG. 13.

For more detailed descriptions of the apparatus 1500, refer to related descriptions in the foregoing method embodiments. Details are not described herein again.

It should be understood that specific processes of executing the foregoing corresponding steps by the units are described in detail in the foregoing method embodiments. For brevity, details are not described herein again.

It should be further understood that the apparatus 1500 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the device (for example, the receiving end device, or for another example, the transmitting end device) in the foregoing embodiments, and may be configured to perform the procedures and/or steps corresponding to the terminal device in the foregoing method embodiments. To avoid repetition, details are not described herein again.

The apparatus 1500 in the foregoing solutions has a function of implementing corresponding steps performed by a device (for example, the receiving end device, or for another example, the transmitting end device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving-sending operations and a related processing operation in the method embodiments.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the device in the foregoing embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

FIG. 16 is a block diagram of a communication apparatus 1600 according to an embodiment of this application. The apparatus 1600 includes a processor 1610, and the processor 1610 is coupled to a memory 1620. Optionally, the apparatus 1600 further includes the memory 1620, configured to store a computer program or instructions and/or data. The processor 1610 is configured to execute the computer program or the instructions stored in the memory 1620, or read the data stored in the memory 1620, to perform the methods in the foregoing method embodiments.

Optionally, there are one or more processors 1610.

Optionally, there are one or more memories 1620.

Optionally, the memory 1620 and the processor 1610 are integrated together or disposed separately.

Optionally, as shown in FIG. 16, the apparatus 1600 may further include a transceiver 1630, and the transceiver 1630 is configured to receive and/or send a signal. For example, the processor 1610 is configured to control the transceiver 1630 to receive and/or send the signal.

In a solution, the apparatus 1600 is configured to implement an operation performed by the device (for example, the receiving end device, or for another example, the transmitting end device) in the foregoing method embodiments.

For example, the processor 1610 is configured to execute the computer program or the instructions stored in the memory 1620, to implement related operations of the receiving end device or the transmitting end device in the foregoing method embodiments.

In an implementation process, the steps of the foregoing methods may be implemented by using an integrated logic circuit of hardware in the processor 1610 or instructions in a software form. The method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1620, and the processor 1610 reads information in the memory 1620 to implement the steps of the foregoing methods in combination with the hardware of the processor 1610. To avoid repetition, details are not described herein again.

It should be understood that, in embodiments of this application, the processor may be one or more integrated circuits, and is configured to execute a related program, to perform the method embodiments of this application.

The processor (for example, the processor 1610) may include one or more processors and is implemented as a combination of compute devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a dedicated processor. For example, the processor 1610 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, so that the apparatus to perform various functions and/or processes described in this application.

The memory (for example, the memory 1620) may store data required by the processor (for example, the processor 1610) during software execution. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any memory of another appropriate type.

The memory (for example, the memory 1620) and the processor (for example, the processor 1610) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

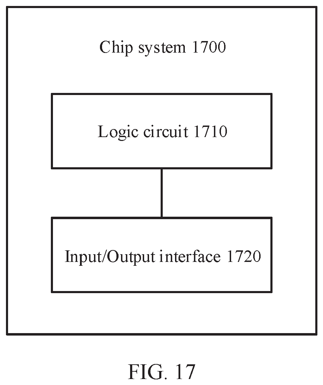

FIG. 17 is a block diagram of a chip system 1700 according to an embodiment of this application. The chip system 1700 (or may be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

In a solution, the chip system 1700 is configured to implement operations performed by the device in the foregoing method embodiments.

For example, the logic circuit 1710 is configured to implement processing-related operations performed by the receiving end device in the foregoing method embodiments, for example, processing-related operations performed by the receiving end device in the embodiment shown in FIG. 5 or FIG. 13. The input/output interface 1720 is configured to implement sending and/or receiving-related operations performed by the receiving end device in the foregoing method embodiments, for example, sending and/or receiving-related operations performed by the receiving end device in the embodiment shown in FIG. 5 or FIG. 13.

For another example, the logic circuit 1710 is configured to implement processing-related operations performed by the transmitting end device in the foregoing method embodiments, for example, processing-related operations performed by the transmitting end device in the embodiment shown in FIG. 5 or FIG. 13. The input/output interface 1720 is configured to implement sending and/or receiving-related operations performed by the transmitting end device in the foregoing method embodiments, for example, sending and/or receiving-related operations performed by the transmitting end device in the embodiment shown in FIG. 5 or FIG. 13.

An embodiment of this application further provides a computer-readable storage medium. The computer-readable storage medium stores computer instructions used to implement the method performed by the device (for example, the receiving end device, or for another example, the transmitting end device) in the foregoing method embodiments.

An embodiment of this application further provides a computer program product, including instructions. When the instructions are executed by a computer, a method performed by the device (for example, the receiving end device, or for another example, the transmitting end device) in the foregoing method embodiments is implemented.

An embodiment of this application further provides a communication system. The communication system includes the receiving end device and the transmitting end device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are merely examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
receiving first indication information, wherein the first indication information indicates a first port, the first port is used to transmit a reference signal, the first port belongs to a port set, a quantity of ports comprised in the port set is P, and P is an integer greater than 24; and
receiving the reference signal based on the first indication information.

2. The method according to claim 1, wherein
each port in the port set corresponds to a frequency division orthogonal cover code FD-OCC sequence of length L and/or a time division orthogonal cover code TD-OCC sequence of length T, wherein L is an integer greater than 8 or equal to 8, and T is an integer greater than 1 or equal to 1.

3. The method according to claim 2, wherein the first port corresponds to L frequency domain units, one element in an FD-OCC sequence corresponding to the first port corresponds to one of the L frequency domain units, and at least two of the L frequency domain units are inconsecutive.

4. The method according to claim 3, wherein the FD-OCC sequence comprises K FD-OCC subsequences, the L frequency domain units comprise K frequency domain unit groups, each of the K frequency domain unit groups corresponds to one of the K FD-OCC subsequences, and K is an integer equal to 1 or greater than 1.

5. The method according to claim 4, wherein frequency domain units in each of the K frequency domain unit groups are consecutive in frequency domain, and at least two adjacent frequency domain unit groups in the K frequency domain unit groups are inconsecutive in frequency domain.

6. The method according to any one of claims 2 to 5, wherein
L=8, 16, or 24; and/or
T=1 or 2.

7. The method according to claim 6, wherein L=8, and the FD-OCC sequence of length 8 corresponding to the first port is any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 -1 - 1], [+1 -1 +1 -1 -1 +1 -1 +1], [+1 +1 -1 -1 -1 -1 +1 +1], or [+1 -1 -1 +1 -1 +1 +1 -1].

8. The method according to claim 6, wherein L=16, and the FD-OCC sequence of length 16 corresponding to the first port is any one of the following:

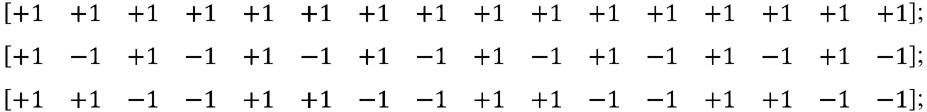

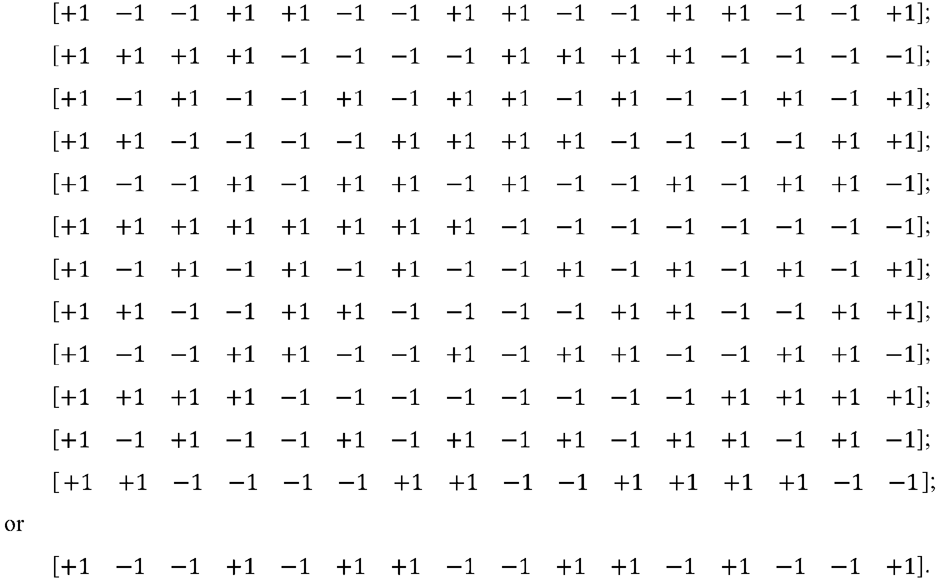

9. The method according to any one of claims 1 to 8, wherein the port set corresponds to W port groups, ports in a same port group of the W port groups correspond to a same time-frequency resource, ports in different port groups of the W port groups correspond to different time-frequency resources, and W is an integer greater than 1 or equal to 1.

10. The method according to claim 9, wherein the W port groups comprise a first port group, and subcarriers occupied by the first port group in two consecutive resource blocks comprise any one of the following:
subcarriers with indexes 0, 1, 2, 3, 12, 13, 14, and 15;
subcarriers with indexes 4, 5, 6, 7, 16, 17, 18, and 19; or
subcarriers with indexes 8, 9, 10, 11, 20, 21, 22, and 23.

11. The method according to claim 9, wherein the W port groups comprise a first port group, and subcarriers occupied by the first port group in four consecutive resource blocks comprise any one of the following:
subcarriers with indexes 0, 1, 2, 3, 12, 13, 14, 15, 24, 25, 26, 27, 36, 37, 38, and 39;
subcarriers with indexes 4, 5, 6, 7, 16, 17, 18, 19, 28, 29, 30, 31, 40, 41, 42, and 43; or
subcarriers with indexes 8, 9, 10, 11, 20, 21, 22, 23, 32, 33, 34, 35, 44, 45, 46, and 47.

12. The method according to claim 10 or 11, wherein the W port groups comprise at least one of the following:
a port 0 to a port 7;
a port 8 to a port 15;
a port 16 to a port 23;
a port 0 to a port 7, and a port 24 to a port 31;
a port 8 to a port 15, and a port 32 to a port 39;
a port 16 to a port 23, and a port 40 to a port 47;
a port 0 to a port 15;
a port 16 to a port 31;
a port 32 to a port 47;
a port 0 to a port 15, and a port 48 to a port 63;
a port 16 to a port 31, and a port 64 to a port 79; or
a port 32 to a port 47, and a port 80 to a port 95.

13. The method according to any one of claims 1 to 12, wherein the reference signal is mapped to a time-frequency resource based on a mapping rule, and the mapping rule is related to at least one of the following parameters: a subcarrier spacing parameter, an index of a resource element, a symbol of the reference signal, an index of a start time domain position, a power scaling factor, a time domain cover code element, a frequency domain cover code element, a subcarrier offset factor, and an index of the first port.

14. The method according to claim 13, wherein the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(8n+k′\right)$ wherein $k = \left\{\begin{matrix}24 n + k ′ + Δ & k ′ = 0 , 1 , 2 , 3 \\ 24 n + k ′ + Δ + 8 & k ′ = 4 , 5 , 6 , 7\end{matrix}\right.$ $k ′ = 0 , 1 , 2 , 3 , 4 , 5 , 6 , 7$ $l = \overline{l} + l ′$ $n = 0 , 1 , …$ $j = 0 , 1 , … , v - 1$ v represents a quantity of spatial layers or a rank corresponding to a terminal device; a resource element RE with an index (*k,l*)*_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port p and that is mapped to the RE with an index (*k,l*)*_{p,µ};* Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}*(*k*') is a *k*'^{th} element in an FD-OCC sequence; *wₜ*(*l*') is an *l*' ^{th} element in a TD-OCC sequence; and *m* = 2*n* + *k'.*

15. The method according to claim 13, wherein the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(16n+k′\right)$ wherein $k = \left\{\begin{matrix}48 n + k ′ + Δ & k ′ = 0 , 1 , 2 , 3 \\ 48 n + k ′ + Δ + 8 & k ′ = 4 , 5 , 6 , 7 \\ 48 n + k ′ + Δ + 16 & k ′ = 8 , 9 , 10 , 11 \\ 48 n + k ′ + Δ + 24 & k ′ = 12 , 13 , 14 , 15\end{matrix}\right.$ $k ′ = 0 , 1 , 2 , 3 , 4 , 5 , 6 , 7 , 8 , 9 , 10 , 11 , 12 , 13 , 14 , 15$ $l = \overline{l} + l ′$ $n = 0 , 1 , …$ $j = 0 , 1 , … , v - 1$ v represents a quantity of spatial layers or a rank corresponding to a terminal device; a resource element RE with an index (*k,l*)*_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port p and that is mapped to the RE with an index (*k,l*)*_{p,µ};* Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}*(*k*') is a *k*'^{th} element in an FD-OCC sequence; *wₜ*(*l*') is an *l*' ^{th} element in a TD-OCC sequence; and *m* = 2*n* + *k'.*

16. The method according to claim 4 or 5, wherein the K FD-OCC subsequences are determined based on a first parameter, the first parameter comprises at least one of the following: an index of the first port, an index of a reference port, an offset, an index of a frequency domain unit corresponding to the reference signal, an index of a time domain unit corresponding to the reference signal, or an initial factor, wherein the offset is an offset relative to the index of the reference signal port, and the initial factor is used to determine the offset.

17. The method according to claim 16, wherein the offset satisfies: ${p}_{offset} \left(n, k\right) = \left({\sum }_{m = 0}^{T - 1} \left(c\left(T\left({nN}_{sc}^{RBG}+k\right)+m\right){2}^{m}\right)\right) modY / Z ;$ or ${p}_{offset} \left(n, k\right) = \left({\sum }_{m = 0}^{T - 1} \left(c\left(T\left({nN}_{sc}^{RBG}+k\right)+m\right){2}^{m}\right)\right) ,$ wherein
*p*_{offset}(*n*, *k*) represents the offset; c() represents a pseudo-random sequence, and the initial factor is related to the pseudo-random sequence; T is a positive integer; ${N}_{s c}^{RBG}$ represents a quantity of subcarriers comprised in a frequency domain unit; n represents the index of the frequency domain unit corresponding to the reference signal; *k* represents an index of a frequency domain unit group in the frequency domain unit corresponding to the reference signal; Y represents a total quantity of candidate ports; and Z represents a quantity Z of port groups into which Y ports are divided.

18. The method according to claim 16 or 17, wherein the method further comprises:
receiving second indication information, wherein the second indication information indicates the first parameter.

19. The method according to any one of claims 1 to 18, wherein the first port belongs to a second port group, the second port group occupies S time domain units in time domain, and quantities of frequency domain resources and/or frequency domain positions occupied by the second port group are different in at least two of the S time domain units, wherein S is an integer greater than 1.

20. The method according to claim 19, wherein the method further comprises:
receiving third indication information, wherein the third indication information indicates a time domain resource occupied by the first port.

21. A signal transmission method, comprising:
sending first indication information, wherein the first indication information indicates a first port, the first port is used to transmit a reference signal, the first port belongs to a port set, a quantity of ports comprised in the port set is P, and P is an integer greater than 24; and
sending the reference signal.

22. The method according to claim 21, wherein
each port in the port set corresponds to a frequency division orthogonal cover code FD-OCC sequence of length L and/or a time division orthogonal cover code TD-OCC sequence of length T, wherein L is an integer greater than 8 or equal to 8, and T is an integer greater than 1 or equal to 1.

23. The method according to claim 22, wherein the first port corresponds to L frequency domain units, one element in an FD-OCC sequence corresponding to the first port corresponds to one of the L frequency domain units, and at least two of the L frequency domain units are inconsecutive.

24. The method according to claim 23, wherein the FD-OCC sequence comprises K FD-OCC subsequences, the L frequency domain units comprise K frequency domain unit groups, each of the K frequency domain unit groups corresponds to one of the K FD-OCC subsequences, and K is an integer equal to 1 or greater than 1.

25. The method according to claim 24, wherein frequency domain units in each of the K frequency domain unit groups are consecutive in frequency domain, and at least two adjacent frequency domain unit groups in the K frequency domain unit groups are inconsecutive in frequency domain.

26. The method according to any one of claims 22 to 25, wherein
L=8, 16, or 24; and/or
T=1 or 2.

27. The method according to claim 26, wherein L=8, and the FD-OCC sequence of length 8 corresponding to the first port is any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 -1 - 1], [+1 -1 +1 -1 -1 +1 -1 +1], [+1 +1 -1 -1 -1 -1 +1 +1], or [+1 -1 -1 +1 -1 +1 +1 -1].

28. The method according to claim 26, wherein L=16, and the FD-OCC sequence of length 16 corresponding to the first port is any one of the following:

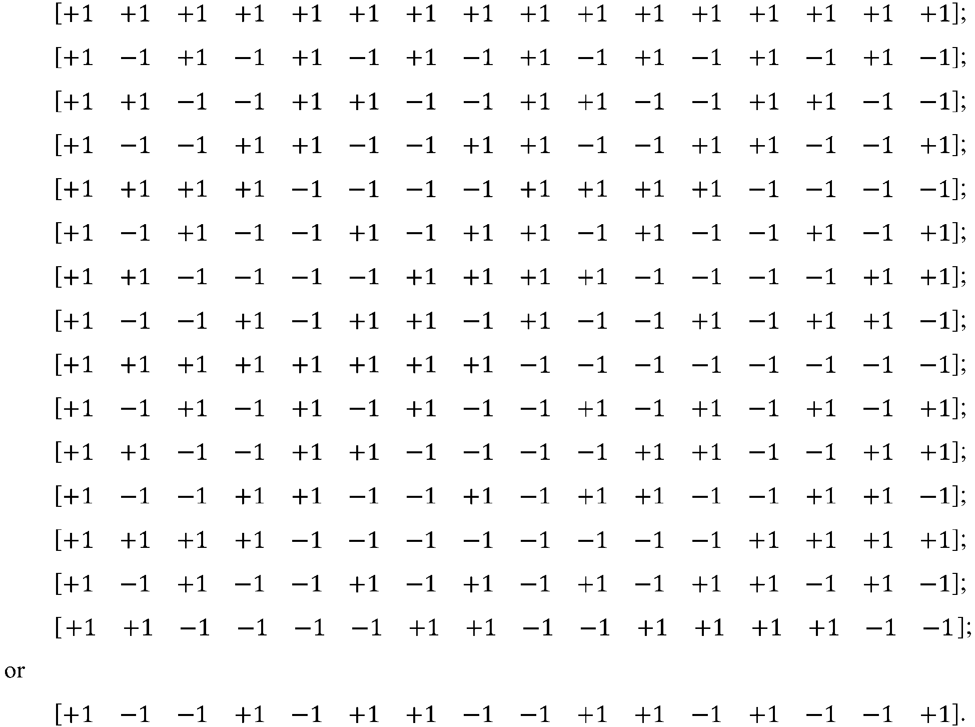

29. The method according to any one of claims 21 to 28, wherein the reference signal is mapped to a time-frequency resource based on a mapping rule, and the mapping rule is related to at least one of the following parameters: a subcarrier spacing parameter, an index of a resource element, a symbol of the reference signal, an index of a start time domain position, a power scaling factor, a time domain cover code element, a frequency domain cover code element, a subcarrier offset factor, and an index of the first port.

30. The method according to claim 29, wherein the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(8n+k′\right)$ wherein $k = \left\{\begin{matrix}24 n + k ′ + Δ & k ′ = 0 , 1 , 2 , 3 \\ 24 n + k ′ + Δ + 8 & k ′ = 4 , 5 , 6 , 7\end{matrix}\right.$ $k ′ = 0 , 1 , 2 , 3 , 4 , 5 , 6 , 7$ $l = \overline{l} + l ′$ $n = 0 , 1 , …$ $j = 0 , 1 , … , v - 1$ v represents a quantity of spatial layers or a rank corresponding to a terminal device; a resource element RE with an index (*k,l*)*_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port *p* and that is mapped to the RE with an index (*k,l*)*_{p,µ}*; Δ is the subcarrier offset factor; *µ* is a subcarrier spacing; *l̅* is an index of a start symbol or an index of a reference symbol occupied by the symbol of the reference signal; ${β}_{PDSCH}^{DMRS}$ is the power scaling factor; *w_{f}*(*k*') is a *k'*^{th} element in an FD-OCC sequence; *wₜ*(*l*') is an *l*' ^{th} element in a TD-OCC sequence; and *m* = 2*n* + *k'.*

31. The method according to claim 29, wherein the mapping rule satisfies the following formula: ${α}_{k , l}^{\left(p, μ\right)} = {β}_{PDSCH}^{DMRS} {w}_{f} \left(k′\right) {w}_{t} \left(l′\right) r \left(16n+k′\right)$ wherein $k = \left\{\begin{matrix}48 n + k ′ + Δ & k ′ = 0 , 1 , 2 , 3 \\ 48 n + k ′ + Δ + 8 & k ′ = 4 , 5 , 6 , 7 \\ 48 n + k ′ + Δ + 16 & k ′ = 8 , 9 , 10 , 11 \\ 48 n + k ′ + Δ + 24 & k ′ = 12 , 13 , 14 , 15\end{matrix}\right.$ $k ′ = 0 , 1 , 2 , 3 , 4 , 5 , 6 , 7 , 8 , 9 , 10 , 11 , 12 , 13 , 14 , 15$ $l = \overline{l} + l ′$ $n = 0 , 1 , …$ $j = 0 , 1 , … , v - 1$ v represents a quantity of spatial layers or a rank corresponding to a terminal device; a resource element RE with an index (*k,l*)*_{p,µ}* corresponds to a symbol with an index *l* in a slot in time domain, and corresponds to a subcarrier with an index *k* in frequency domain; ${α}_{k , l}^{\left(p, μ\right)}$ is a symbol of the reference signal that corresponds to the first port p and that is mapped to the RE with an index (*k,l*)*_{p,µ};* Δ is the subcarrier offset factor; *µ* is a subcarrier spacing; *l̅* is an index of a start symbol or an index of a reference symbol occupied by the symbol of the reference signal; is the power scaling factor; *w_{f}(k')* is a *k*'^{th} element in an FD-OCC sequence; *wₜ*(*l*') is an *l*' ^{th} element in a TD-OCC sequence; and *m* = 2*n* + *k'.*

32. The method according to claim 24 or 25, wherein the K FD-OCC subsequences are determined based on a first parameter, the first parameter comprises at least one of the following: an index of the first port, an index of a reference port, an offset, an index of a frequency domain unit corresponding to the reference signal, an index of a time domain unit corresponding to the reference signal, or an initial factor, wherein the offset is an offset relative to the index of the reference signal port, and the initial factor is used to determine the offset.

33. The method according to claim 32, wherein the method further comprises:
sending second indication information, wherein the second indication information indicates the first parameter.

34. The method according to any one of claims 21 to 33, wherein the first port belongs to a second port group, the second port group occupies S time domain units in time domain, and quantities of frequency domain resources and/or frequency domain positions occupied by the second port group are different in at least two of the S time domain units, wherein S is an integer greater than 1.

35. The method according to claim 34, wherein the method further comprises:
sending third indication information, wherein the third indication information indicates a time domain resource occupied by the first port.

36. A communication apparatus, comprising a module or a unit configured to perform the method according to any one of claims 1 to 35.

37. A communication apparatus, comprising a processor, wherein the processor is configured to execute a computer program or instructions stored in a memory, to enable the apparatus to perform the method according to any one of claims 1 to 35.

38. The apparatus according to claim 37, wherein the apparatus further comprises the memory and/or a communication interface, and the communication interface is coupled to the processor; and
the communication interface is configured to input and/or output information.

39. A computer-readable storage medium, wherein the computer-readable storage medium stores a computer program or instructions, and when the computer program or the instructions are run on a communication apparatus, the communication apparatus is enabled to perform the method according to any one of claims 1 to 35.

40. A computer program product, wherein the computer program product comprises a computer program or instructions used to perform the method according to any one of claims 1 to 35.
